# EUROPEAN PATENT APPLICATION

(11) **EP 4 549 165 A1**
(43) Date of publication of application: **07.05.2025**
(21) Application number: 23831410.8
(22) Date of filing: 27.06.2023
(51) Int. Cl.: B41M 5/46, B41M 5/26, B42D 25/22, B42D 25/41

(54) **RECORDING BODY AND ARTICLE**

(30) Priority: 29.06.2022 JP 2022105119
(71) Applicant: Sony Group Corporation, Tokyo 108-0075 (JP)
(72) Inventor: OISHI, Yuki, Tokyo 108-0075 (JP); HIKE, Tomokazu, Tokyo 108-0075 (JP); ASAOKA, Satoko, Tokyo 108-0075 (JP); ISHIDA, Takehisa, Tokyo 108-0075 (JP); KAINO, Yuriko, Tokyo 108-0075 (JP); KURIHARA, Kenichi, Tokyo 108-0075 (JP); MIZUNO, Hiroshi, Tokyo 108-0075 (JP); TAKAGI, Kenji, Tokyo 108-0075 (JP); TAKAHASHI, Isao, Tokyo 108-0075 (JP); TEJIMA, Aya, Tokyo 108-0075 (JP); YAMANO, Ryota, Tokyo 108-0075 (JP)
(74) Representative: D Young & Co LLP
(86) International application number: PCT/JP2023/023690
(87) International publication number: WO 2024/004970

(57) **Abstract**

Provided is a recording body that makes it difficult to take out a recording member therefrom.

The recording body includes a laminate and an exterior material covering at least a part of a surface of the laminate. The laminate includes a base material, an intermediate layer provided on the base material and having a housing portion, a recording member provided in the housing portion, and an overlay layer provided on the intermediate layer. The housing portion is provided in a part of a plane of the intermediate layer. The housing portion is a through hole penetrating the intermediate layer in a thickness direction thereof or a recess recessed in the thickness direction of the intermediate layer. The recording member includes a color development layer containing a coloring compound having an electron donating property, a developer having an electron accepting property, and a matrix resin. The base material, the intermediate layer, and the overlay layer contain the same type of resin material. The base material and the intermediate layer are bonded to each other by fusion, and the intermediate layer and the overlay layer are bonded to each other by fusion.

## Description

### TECHNICAL FIELD

The present disclosure relates to a recording body and an article including the recording body.

### BACKGROUND ART

In recent years, it has been considered that an article or the like such as a product tag, a logo plate, or an accessory includes a recording member configured to be able to change a colored state by an external stimulus. For example, Patent Document 1 discloses a forgery prevention structure in which a security device and a transparent protective sheet are sequentially disposed on a color development layer having a laser color development portion.

### CITATION LIST

### PATENT DOCUMENT

Patent Document 1: Japanese Patent Application Laid-Open No. 2019-38141

### SUMMARY OF THE INVENTION

### PROBLEMS TO BE SOLVED BY THE INVENTION

In recent years, it is desired to make it difficult to take out a recording member from an article or the like such as a product tag, a logo plate, or an accessory from a viewpoint of forgery prevention, tamper prevention, and the like.

An object of the present disclosure is to provide a recording body capable of making it difficult to take out a recording member therefrom, and an article including the recording body.

### SOLUTIONS TO PROBLEMS

In order to solve the above-described problem, a first recording body according to the present disclosure includes:
a laminate; and
an exterior material covering at least a part of a surface of the laminate, in which
the laminate includes:
   a base material;
   an intermediate layer provided on the base material and having a housing portion;
   a recording member provided in the housing portion; and
   an overlay layer provided on the intermediate layer,
   the housing portion is provided in a part of a plane of the intermediate layer,
   the housing portion is a through hole penetrating the intermediate layer in a thickness direction thereof or a recess recessed in the thickness direction of the intermediate layer,
   the recording member includes a color development layer containing a coloring compound having an electron donating property, a developer having an electron accepting property, and a matrix resin,
   the base material, the intermediate layer, and the overlay layer contain the same type of resin material, and
   the base material and the intermediate layer are bonded to each other by fusion, and the intermediate layer and the overlay layer are bonded to each other by fusion.

A second recording body according to the present disclosure includes:
a laminate; and
an exterior material covering at least a part of a surface of the laminate, in which
the laminate includes:
   a base material;
   an overlay layer;
   an intermediate layer provided between the base material and the overlay layer and having a housing portion; and
   a recording member provided in the housing portion,
   the housing portion is provided in a part of a plane of the intermediate layer,
   the housing portion is a through hole penetrating the intermediate layer in a thickness direction thereof or a recess recessed in the thickness direction of the intermediate layer,
   the recording member includes a color development layer containing a coloring compound having an electron donating property, a developer having an electron accepting property, and a matrix resin,
   the base material, the intermediate layer, and the overlay layer contain the same type of resin material, and
   the base material and the intermediate layer are bonded to each other by a heat-curable adhesive, and the intermediate layer and the overlay layer are bonded to each other by a heat-curable adhesive.

A third recording body according to the present disclosure includes:
a laminated structure in which a plurality of laminates is laminated; and
an exterior material covering at least a part of a surface of the laminated structure, in which
the laminate includes:
   a base material;
   an intermediate layer provided on a base material and having a housing portion;
   a recording member provided in the housing portion; and
   an overlay layer provided on the intermediate layer,
   the housing portion is provided in a part of a plane of the intermediate layer,
   the housing portion is a through hole penetrating the intermediate layer in a thickness direction thereof or a recess recessed in the thickness direction of the intermediate layer,
   the recording member includes a color development layer containing a coloring compound having an electron donating property, a developer having an electron accepting property, and a matrix resin,
   the base material, the intermediate layer, and the overlay layer contain the same type of resin material, and
   the base material and the intermediate layer are bonded to each other by fusion, and the intermediate layer and the overlay layer are bonded to each other by fusion.

A fourth recording body according to the present disclosure includes:
a laminated structure in which a plurality of laminates is laminated; and
an exterior material covering at least a part of a surface of the laminated structure, in which
the laminate includes:
   a base material;
   an overlay layer;
   an intermediate layer provided between the base material and the overlay layer and having a housing portion; and
   a recording member provided in the housing portion,
   the housing portion is provided in a part of a plane of the intermediate layer,
   the housing portion is a through hole penetrating the intermediate layer in a thickness direction thereof or a recess recessed in the thickness direction of the intermediate layer,
   the recording member includes a color development layer containing a coloring compound having an electron donating property, a developer having an electron accepting property, and a matrix resin,
   the base material, the intermediate layer, and the overlay layer contain the same type of resin material, and
   the base material and the intermediate layer are bonded to each other by a heat-curable adhesive, and the intermediate layer and the overlay layer are bonded to each other by a heat-curable adhesive.

An article according to the present disclosure includes the first recording body, the second recording body, the third recording body, or the fourth recording body.

### BRIEF DESCRIPTION OF DRAWINGS

Fig. 1 is a perspective view illustrating an appearance example of a laminate.
Fig. 2 is a cross-sectional view taken along line A-A in Fig. 1.
Fig. 3 is a cross-sectional view illustrating a configuration example of a recording member.
Fig. 4 is a cross-sectional view illustrating a configuration example of a recording member.
Fig. 5 is a diagram of a testing apparatus for a 90 degree peel test.
Fig. 6A is a diagram for explaining a preparation step for the 90 degree peel test. Fig. 6B is a diagram of a testing apparatus for the 90 degree peel test.
Fig. 7 is a cross-sectional view illustrating a configuration example of a laminate.
Fig. 8 is a cross-sectional view illustrating a configuration example of a laminate.
Fig. 9 is a cross-sectional view illustrating a configuration example of a laminate.
Fig. 10 is a perspective view illustrating an appearance example of a laminate.
Fig. 11 is a cross-sectional view illustrating a configuration example of a laminate.
Fig. 12 is a cross-sectional view illustrating a configuration example of a laminate.
Fig. 13 is a cross-sectional view illustrating a configuration example of a laminate.
Fig. 14 is a cross-sectional view illustrating a configuration example of a laminate.
Fig. 15 is a cross-sectional view illustrating a configuration example of a recording member.
Fig. 16 is a cross-sectional view illustrating a configuration example of a recording member.
Fig. 17 is a cross-sectional view illustrating a configuration example of a recording member.
Fig. 18 is a cross-sectional view illustrating a configuration example of a recording member.
Fig. 19 is a cross-sectional view illustrating a configuration example of a recording member.
Fig. 20 is a cross-sectional view illustrating a configuration example of a recording member.
Fig. 21 is a cross-sectional view illustrating a configuration example of a recording member.
Fig. 22 is a cross-sectional view illustrating a configuration example of a recording member.
Fig. 23 is a cross-sectional view illustrating a configuration example of a recording member.
Fig. 24 is a perspective view illustrating an appearance example of a recording body according to a first embodiment.
Fig. 25 is a cross-sectional view taken along line A-A in Fig. 24.
Fig. 26 is a cross-sectional view illustrating a configuration example of a laminate.
Fig. 27 is a cross-sectional view illustrating a configuration example of an exterior material.
Fig. 28 is a cross-sectional view illustrating a configuration example of an exterior material.
Fig. 29 is a cross-sectional view illustrating a configuration example of an exterior material.
Fig. 30 is a cross-sectional view illustrating a configuration example of an exterior material.
Fig. 31 is a cross-sectional view illustrating a configuration example of an exterior material.
Fig. 32 is a cross-sectional view illustrating a configuration example of an exterior material.
Fig. 33 is a cross-sectional view illustrating a configuration example of an exterior material.
Fig. 34 is a cross-sectional view illustrating a configuration example of an exterior material.
Fig. 35 is a cross-sectional view illustrating a configuration example of an exterior material.
Fig. 36 is a cross-sectional view illustrating a configuration example of an exterior material.
Fig. 37 is a cross-sectional view illustrating an example of fixing a recording body to an article.
Fig. 38 is a cross-sectional view illustrating an example of fixing a recording body to an article.
Fig. 39 is a plan view illustrating an appearance example of a recording body according to a second embodiment.
Fig. 40 is a cross-sectional view illustrating a configuration example of the recording body according to the second embodiment.
Fig. 41 is a cross-sectional view illustrating a configuration example of a recording body according to Modification.
Fig. 42 is a cross-sectional view illustrating a configuration example of a recording body according to Modification.
Fig. 43 is a cross-sectional view illustrating a configuration example of a recording body according to Modification.
Fig. 44A is a plan view illustrating an appearance example of a recording body according to Modification. Fig. 44B is a cross-sectional view taken along line A-A in Fig. 44A.
Fig. 45A is a plan view illustrating an appearance example of a recording body according to Modification. Fig. 45B is a cross-sectional view taken along line A-A in Fig. 45A.
Fig. 46 is a cross-sectional view illustrating a configuration example of a recording body according to Modification.
Fig. 47 is a cross-sectional view illustrating a configuration example of a recording body according to Modification.
Fig. 48 is a cross-sectional view illustrating a configuration example of a recording body according to Modification.
Fig. 49A is a plan view of a recording body according to a third embodiment. Fig. 49B is a cross-sectional view taken along line A-A in Fig. 49A.
Fig. 50A is a plan view illustrating a configuration example of a recording body according to Modification. Fig. 50B is a cross-sectional view taken along line A-A in Fig. 50A.
Fig. 51 is a cross-sectional view illustrating a configuration example of a recording body according to Modification.
Fig. 52 is a cross-sectional view illustrating a configuration example of a recording body according to Modification.
Fig. 53 is a perspective view illustrating an appearance example of a recording body according to a fourth embodiment.
Fig. 54 is a cross-sectional view illustrating a configuration example of the recording body according to the fourth embodiment.
Fig. 55 is a cross-sectional view illustrating a configuration example of a recording body according to Modification.
Each of Figs. 56A and 56B is a cross-sectional view for explaining an example of a method for manufacturing a recording body according to Modification.
Fig. 57 is a cross-sectional view illustrating a configuration example of a recording body according to Modification.
Fig. 58 is a cross-sectional view illustrating a configuration example of a recording body according to Modification.
Fig. 59A is a front view illustrating an appearance example of a recording body according to a fifth embodiment. Fig. 59B is a side view illustrating an appearance example of the recording body according to the fifth embodiment.
Fig. 60 is a diagram illustrating a configuration example of an image authentication system.
Fig. 61 is a diagram for explaining an artifact-metrics registration and authentication method (1).
Fig. 62 is a diagram for explaining the artifact-metrics registration and authentication method (1).
Fig. 63 is a diagram for explaining an artifact-metrics registration and authentication method (2).
Fig. 64 is a diagram for explaining the artifact-metrics registration and authentication method (2).
Fig. 65 is a plan view illustrating a configuration example of a recording body according to a sixth embodiment.
Each of Figs. 66A, 66B, and 66C is a cross-sectional view illustrating an example of a cross-sectional structure taken along line A-A in Fig. 65.
Fig. 67 is a plan view illustrating a display example of pharmaceutical product-related information.
Fig. 68 is a plan view illustrating a display example of pharmaceutical product-related information.
Fig. 69 is a plan view illustrating a display example of pharmaceutical product-related information.
Fig. 70 is a plan view illustrating a display example of pharmaceutical product-related information.
Fig. 71 is a plan view illustrating a display example of pharmaceutical product-related information.
Fig. 72 is a perspective view illustrating an appearance example of a medication container.
Fig. 73 is a plan view illustrating a configuration example of the recording body according to the sixth embodiment.
Fig. 74 is an exploded perspective view illustrating a configuration example of a recording body according to a seventh embodiment.
Fig. 75 is a diagram for explaining a use example an identification tag.
Fig. 76 is a graph illustrating a measurement result of a peel strength of a sample.

### MODE FOR CARRYING OUT THE INVENTION

Embodiments of the present disclosure will be described in the following order with reference to the drawings. Note that the same or corresponding portions will be denoted by the same reference signs in all the drawings of the following embodiments.
1 Laminate
2 Recording member
3 First embodiment (example of recording body)
4 Second embodiment (example of recording body)
5 Third embodiment (example of recording body)
6 Fourth embodiment (example of recording body)
7 Fifth embodiment (example of recording body)
8 Sixth embodiment (example of recording body)
9 Seventh embodiment (example of recording body)
10 Modifications
11 Reference Examples and Examples

### <1 Laminate>

Hereinafter, laminates 1 to 6 included in recording bodies of first to seventh embodiments will be described.

### <1-1 Laminate 1>

### [Configuration of laminate 1]

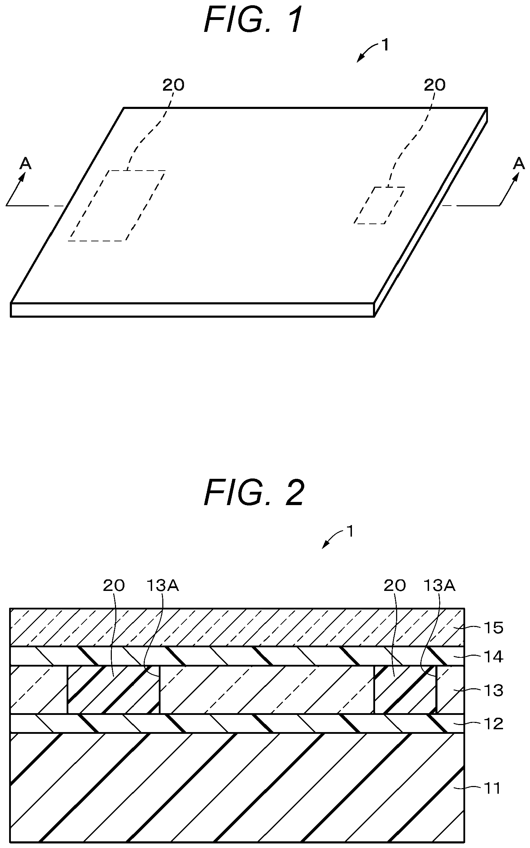

Fig. 1 is a perspective view illustrating an appearance example of a configuration of the laminate 1. Fig. 2 is a cross-sectional view taken along line A-A in Fig. 1. The laminate 1 includes a base material 11, an adhesive layer 12, an intermediate layer 13, an adhesive layer 14, an overlay layer 15, and a recording member 20.

### (Base material 11)

The base material 11 is a support that supports the recording member 20 and the intermediate layer 13. The base material 11 may be a card. The base material 11 may have a color such as white. In the base material 11, a pattern, a picture, a photograph, a character, a combination of two or more thereof, or the like (hereinafter, referred to as a "pattern or the like") may be printed on one main surface on a side on which the intermediate layer 13, the recording member 20, and the like are provided.

The base material 11 contains, for example, plastic. The base material 11 may contain at least one selected from the group consisting of a colorant, an antistatic agent, a flame retardant, a surface modifier, and the like as necessary.

The plastic includes, for example, at least one selected from the group consisting of an ester-based resin, an amide-based resin, an olefin-based resin, a vinyl-based resin, an acrylic resin, an imide-based resin, a styrene-based resin, an engineering plastic, and the like. In a case where the base material 11 contains two or more types of resins, the two or more types of resins may be mixed, copolymerized, or laminated.

The ester-based resin includes, for example, at least one selected from the group consisting of a polyethylene terephthalate (PET)-based resin, a polybutylene terephthalate (PBT)-based resin, a polyethylene naphthalate (PEN)-based resin, a polyethylene terephthalate-isophthalate copolymer-based resin, a terephthalic acid-cyclohexanedimethanol-ethylene glycol copolymer-based resin, and the like. The amide-based resin includes, for example, at least one selected from the group consisting of a nylon 6-based resin, a nylon 66-based resin, a nylon 610-based resin, and the like. The olefin-based resin includes, for example, at least one selected from the group consisting of a polyethylene (PE)-based resin, a polypropylene (PP)-based resin, a polymethylpentene (PMP)-based resin, and the like. The vinyl-based resin includes, for example, a polyvinyl chloride (PVC)-based resin.

The acrylic resin includes, for example, at least one selected from the group consisting of a polyacrylate-based resin, a polymethacrylate-based resin, a polymethyl methacrylate (PMMA)-based resin, and the like. The imide-based resin includes, for example, at least one selected from the group consisting of a polyimide (PI)-based resin, a polyamideimide (PAI)-based resin, a polyetherimide (PEI)-based resin, and the like. The styrene-based resin includes, for example, at least one selected from the group consisting of a polycarbonate (PC)-based resin, a polystyrene (PS)-based resin, a high-impact polystyrene-based resin, an acrylonitrile-styrene-based resin (AS-based resin), an acrylonitrile-butadienestyrene-based resin (ABS resin), and the like. The engineering plastic includes, for example, at least one selected from the group consisting of a polycarbonate (PC)-based resin, a polyarylate (PAR)-based resin, a polysulfone (PSF)-based resin, a polyethersulfone-based resin (PES), a polyphenylene ether (PPE)-based resin, a polyphenylene sulfide (PPS)-based resin, a polyether ketone (PEK)-based resin, a polyether-ether ketone (PEEK)-based resin, a polyphenylene oxide (PPO)-based resin, a polyether sulfite-based resin, and the like.

### (Intermediate layer 13)

The intermediate layer 13 is provided on a main surface of the base material 11, and the adhesive layer 12 is sandwiched between the base material 11 and the intermediate layer 13. The intermediate layer 13 includes a housing portion 13A for housing the recording member 20. The housing portion 13A is provided in a part of a plane of the intermediate layer 13. The housing portion 13A may be a through hole penetrating the intermediate layer 13 in a thickness direction thereof. The intermediate layer 13 is for suppressing a level difference formed by the recording member 20 when the recording member 20 is sandwiched between the base material 11 and the overlay layer 15. The intermediate layer 13 has substantially the same thickness as the recording member 20, and covers a region other than a region where the recording member 20 is provided in one main surface of the base material 11.

The intermediate layer 13 has a film shape. The intermediate layer 13 may have transparency. The intermediate layer 13 contains plastic. As the plastic, a material similar to that of the base material 11 can be exemplified.

### (Overlay layer 15)

The overlay layer 15 is provided on the intermediate layer 13 and the recording member 20, and covers the intermediate layer 13 and the recording member 20. The adhesive layer 14 is sandwiched between the intermediate layer 13/recording member 20 and the overlay layer 15. The overlay layer 15 protects internal members of the laminate 1 (that is, the recording member 20 and the intermediate layer 13) and maintains mechanical reliability of the laminate 1.

The overlay layer 15 has a film shape. The overlay layer 15 has transparency. The overlay layer 15 contains plastic. As the plastic, a material similar to that of the base material 11 can be exemplified. A pattern or the like may be printed on at least one main surface of the overlay layer 15.

### (Adhesive layer 12)

The adhesive layer 12 is provided between the base material 11 and the intermediate layer 13 housing the recording member 20, and bonds the base material 11 and the intermediate layer 13 housing the recording member 20 to each other. The adhesive layer 14 is provided between the intermediate layer 13 housing the recording member 20 and the overlay layer 15, and bonds the intermediate layer 13 housing the recording member 20 and the overlay layer 15 to each other. The adhesive layers 12 and 14 have transparency. Each of the adhesive layers 12 and 14 contains a heat-curable adhesive. The heat-curable adhesive contains a thermosetting resin. The thermosetting resin contains, for example, at least one selected from the group consisting of an epoxy-based resin, a urethane-based resin, and the like. A curing temperature of the heat-curable adhesive is preferably in a temperature range of 100°C or higher and 120°C or lower from a viewpoint of reducing damage to the recording member 20.

### (Recording member 20)

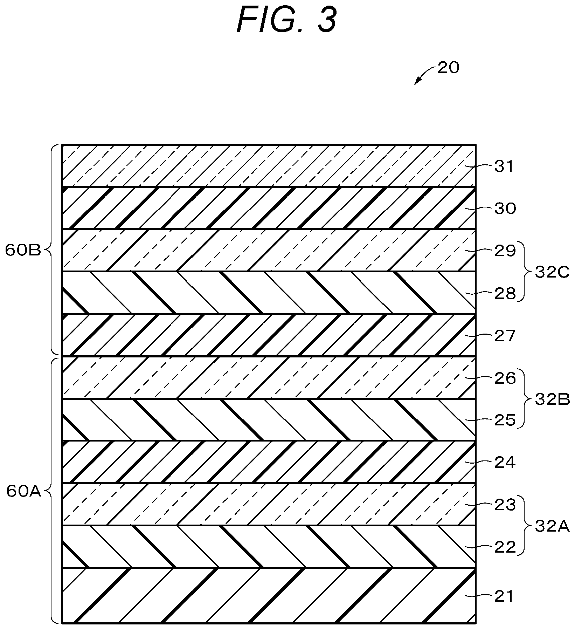

Fig. 3 is a cross-sectional view illustrating a configuration example of the recording member 20. The recording member 20 is configured to be able to change a colored state by an external stimulus. By this change in the colored state, for example, a pattern or the like can be recorded in the recording member 20. The external stimulus is laser light. The change in the colored state may be a reversible change or an irreversible change. That is, the type of the recording member 20 may be a rewritable type in which a pattern or the like can be repeatedly written, or may be a write once type in which a pattern or the like can be written only once.

The change in the colored state is preferably an irreversible change from a viewpoint of improving forgery prevention performance. That is, the type of the recording member 20 is preferably a write once type in which a pattern or the like can be written only once from a viewpoint of improving forgery prevention performance. Preferably, the recording member 20 is fitted into the housing portion 13A of the intermediate layer 13, and the recording member 20 and the intermediate layer 13 are integrated with each other. As a result, it is possible to make it difficult to visually recognize a boundary between the recording member 20 and the intermediate layer 13 in an in-plane direction of the laminate 1. Therefore, forgery prevention performance can be improved.

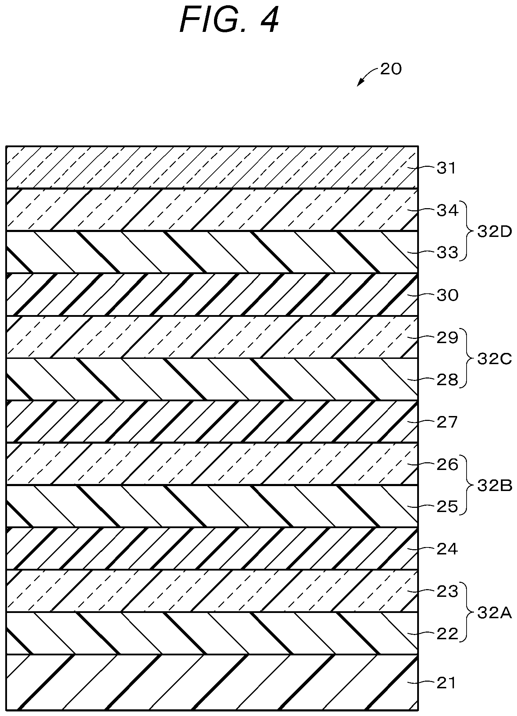

The recording member 20 includes a base material 21, an intermediate layer 32A, a color development layer 24, an intermediate layer 32B, a color development layer 27, an intermediate layer 32C, and a color development layer 30 in this order. More specifically, the recording member 20 includes the base material 21, a pressure-sensitive adhesive layer 22, a heat insulating layer 23, the color development layer 24, a pressure-sensitive adhesive layer 25, a heat insulating layer 26, the color development layer 27, a pressure-sensitive adhesive layer 28, a heat insulating layer 29, and the color development layer 30 in this order. As illustrated in Fig. 3, the recording member 20 may further include a protective layer 31 on the color development layer 30. As illustrated in Fig. 4, the recording member 20 may further include an intermediate layer 32D between the color development layer 30 and the protective layer 31. The heat insulating layers 23, 26, and 29 are provided as necessary, and do not have to be provided.

### (Base material 21)

The base material 21 is a support for supporting the color development layers 24, 27, and 30. The base material 21 preferably contains a material having excellent heat resistance and excellent dimensional stability in a planar direction. The base material 21 may be light transmissive or non-light transmissive. The base material 21 may be, for example, a rigid base material such as a wafer, or may be a thin glass, film, paper, or the like that is flexible. By using a flexible base material as the base material 21, a flexible (bendable) recording member can be achieved.

Examples of a constituent material of the base material 21 include an inorganic material, a metal material, plastic, and the like. The inorganic material includes, for example, at least one selected from the group consisting of silicon (Si), silicon oxide (SiO_{X}), silicon nitride (SiN_{X}), aluminum oxide (AlO_{X}), and the like. Silicon oxide includes glass, spin-on-glass (SOG), and the like. The metal material includes, for example, at least one selected from the group consisting of aluminum (Al), nickel (Ni), stainless steel, and the like. As the plastic, a material similar to that of the base material 11 can be exemplified.

Note that a reflection layer (not illustrated) may be provided on at least one main surface of the base material 21, or the base material 21 itself may also function as a reflection layer. The base material 21 having such a configuration enables clearer color display.

### (Intermediate layers 32A, 32B, 32C, and 32D)

The intermediate layer 32A is provided between the base material 21 and the color development layer 24. The intermediate layer 32A can bond the base material 21 and the color development layer 24 to each other. The intermediate layer 32A may be capable of thermally insulating the base material 21 and the color development layer 24 from each other and suppressing diffusion of a constituent material between the base material 21 and the color development layer 24. The intermediate layer 32A includes the pressure-sensitive adhesive layer 22 and the heat insulating layer 23. The pressure-sensitive adhesive layer 22 is adjacent to the base material 21, and the heat insulating layer 23 is adjacent to the color development layer 24. Note that the intermediate layer 32A may include only the pressure-sensitive adhesive layer 22.

The intermediate layer 32B is provided between the color development layer 24 and the color development layer 27. The intermediate layer 32B can bond the color development layer 24 and the color development layer 27 to each other. The intermediate layer 32B may be capable of thermally insulating the color development layer 24 and the color development layer 27 from each other and suppressing diffusion of a constituent material between the color development layer 24 and the color development layer 27. The intermediate layer 32B includes the pressure-sensitive adhesive layer 25 and the heat insulating layer 26. Note that the intermediate layer 32B may include only the pressure-sensitive adhesive layer 25.

The intermediate layer 32C is provided between the color development layer 27 and the color development layer 30. The intermediate layer 32C can bond the color development layer 27 and the color development layer 30 to each other. The intermediate layer 32C may be capable of thermally insulating the color development layer 27 and the color development layer 30 from each other and suppressing diffusion of a constituent material between the color development layer 27 and the color development layer 30. The intermediate layer 32C includes the pressure-sensitive adhesive layer 28 and the heat insulating layer 29. Note that the intermediate layer 32C may include only the pressure-sensitive adhesive layer 28.

The intermediate layer 32D is provided between the color development layer 30 and the protective layer 31. The intermediate layer 32D can bond the color development layer 30 and the protective layer 31 to each other. The intermediate layer 32D may be capable of thermally insulating the color development layer 30 and the protective layer 31 from each other and suppressing diffusion of a constituent material between the color development layer 30 and the protective layer 31. The intermediate layer 32D includes the pressure-sensitive adhesive layer 33 and the heat insulating layer 34. Note that the intermediate layer 32D may include only the pressure-sensitive adhesive layer 33.

### (Color development layers 24, 27, and 30)

The color development layers 24, 27, and 30 are configured to be able to change a colored state by an external stimulus such as laser light or heat. The color development layers 24, 27, and 30 are configured using a material capable of performing stable recording and capable of controlling a color-developed state. Each of the color development layers 24, 27, and 30 contains a coloring compound having an electron donating property, a developer having an electron accepting property and corresponding to the coloring compound, a matrix polymer (binder), and a photothermal conversion material. Each of the color development layers 24, 27, and 30 may contain, for example, at least one additive selected from the group consisting of a sensitizer, an ultraviolet absorber, and the like in addition to the above-described materials as necessary.

The color development layers 24, 27, and 30 contain coloring compounds having color development hues different from each other. That is, the coloring compounds contained in the color development layers 24, 27, and 30 exhibit colors different from each other in a color-developed state. The coloring compound contained in the color development layer 24 exhibits, for example, a cyan color in a color-developed state. The coloring compound contained in the color development layer 27 exhibits, for example, a magenta color in a color-developed state. The coloring compound contained in the color development layer 30 exhibits, for example, a yellow color in a color-developed state. The photothermal conversion materials contained in the color development layers 24, 27, and 30 generate heat by absorbing laser beams in wavelength ranges different from each other (for example, near-infrared laser beams different from each other).

The thicknesses of each of the color development layers 24, 27, and 30 is preferably 1 µm or more and 20 µm or less, and more preferably 2 µm or more and 15 µm or less. When the thickness of each of the color development layers 24, 27, and 30 is 1 µm or more, a sufficient color development density can be obtained. On the other hand, when the thickness of each of the color development layers 24, 27, and 30 is 20 µm or less, it is possible to suppress a too large heat utilization amount of each of the color development layers 24, 27, and 30. Therefore, deterioration of color developability can be suppressed.

### (Coloring compound)

The coloring compound is, for example, a leuco dye. The leuco dye may be, for example, an existing dye for thermosensitive paper. Specific examples thereof include a compound containing a group having an electron donating property in a molecule thereof, represented by the following formula (1).

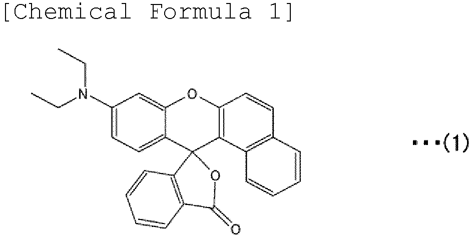

The coloring compound is not particularly limited, and can be appropriately selected according to a purpose. Specific examples of the coloring compound include a fluorane-based compound, a triphenylmethane phthalide-based compound, an azaphthalide-based compound, a phenothiazine-based compound, a leucoauramine-based compound, an indolinophthalide-based compound, and the like in addition to the compound represented by the above formula (1). In addition, specific examples of the coloring compound include 2-anilino-3-methyl-6-diethylaminofluoran, 2-anilino-3-methyl-6-di(n-butylamino)fluoran, 2-anilino-3-methyl-6-(N-n-propyl-N-methylamino)fluoran, 2-anilino-3-methyl-6-(N-isopropyl-N-methylamino)fluoran, 2-anilino-3-methyl-6-(N-isobutyl-N-methylamino)fluoran, 2-anilino-3-methyl-6-(N-n-amyl-N-methylamino)fluoran, 2-anilino-3-methyl-6-(N-sec-butyl-N-methylamino)fluoran, 2-anilino-3-methyl-6-(N-n-amyl-N-ethylamino)fluoran, 2-anilino-3-methyl-6-(N-iso-amyl-N-ethylamino)fluoran, 2-anilino-3-methyl-6-(N-n-propyl-N-isopropylamino) fluoran, 2-anilino-3-methyl-6-(N-cyclohexyl-N-methylamino)fluoran, 2-anilino-3-methyl-6-(N-ethyl-p-toluidino)fluoran, 2-anilino-3-methyl-6-(N-methyl-p-toluidino)fluoran, 2-(m-trichloromethylanilino)-3-methyl-6-diethylaminofluoran, 2-(m-trifluoromethylanilino)-3-methyl-6-diethylaminofluoran, 2-(m-trichloromethylanilino)-3-methyl-6-(N-cyclohexyl-N-methylamino)fluoran, 2-(2,4-dimethylanilino)-3-methyl-6-diethylaminofluoran, 2-(N-ethyl-p-toluidino)-3-methyl-6-(N-ethylanilino)fluoran, 2-(N-ethyl-p-toluidino)-3-methyl-6-(N-propyl-p-toluidino)fluoran, 2-anilino-6-(N-n-hexyl-N-ethylamino)fluoran, 2-(o-chloroanilino)-6-diethylaminofluoran, 2-(o-chloroanilino)-6-dibutylaminofluoran, 2-(m-trifluoromethylanilino)-6-diethylaminofluoran, 2,3-dimethyl-6-dimethylaminofluoran, 3-methyl-6-(N-ethyl-p-toluidino)fluoran, 2-chloro-6-diethylaminofluoran, 2-bromo-6-diethylaminofluoran, 2-chloro-6-dipropylaminofluoran, 3-chloro-6-cyclohexylaminofluoran, 3-bromo-6-cyclohexylaminofluoran, 2-chloro-6-(N-ethyl-N-isoamylamino)fluoran, 2-chloro-3-methyl-6-diethylaminofluoran, 2-anilino-3-chloro-6-diethylaminofluoran, 2-(o-chloroanilino)-3-chloro-6-cyclohexylaminofluoran, 2-(m-trifluoromethylanilino)-3-chloro-6-diethylaminofluoran, 2-(2,3-dichloroanilino)-3-chloro-6-diethylaminofluoran, 1,2-benzo-6-diethylaminofluoran, 3-diethylamino-6-(m-trifluoromethylanilino)fluoran, 3-(1-ethyl-2-methylindol-3-yl)-3-(2-ethoxy-4-diethylaminophenyl)-4-azaphthalide, 3-(1-ethyl-2-methylindol-3-yl)-3-(2-ethoxy-4-diethylaminophenyl)-7-azaphthalide, 3-(1-octyl-2-methylindol-3-yl)-3-(2-ethoxy-4-diethylaminophenyl)-4-azaphthalide, 3-(1-ethyl-2-methylindol-3-yl)-3-(2-methyl-4-diethylaminophenyl)-4-azaphthalide, 3-(1-ethyl-2-methylindol-3-yl)-3-(2-methyl-4-diethylaminophenyl)-7-azaphthalide, 3-(1-ethyl-2-methylindol-3-yl)-3-(4-diethylaminophenyl)-4-azaphthalide, 3-(1-ethyl-2-methylindol-3-yl)-3-(4-N-n-amyl-N-methylaminophenyl)-4-azaphthalide, 3-(1-methyl-2-methylindol-3-yl)-3-(2-hexyloxy-4-diethylaminophenyl)-4-azaphthalide, 3,3-bis(2-ethoxy-4-diethylaminophenyl)-4-azaphthalide, 3,3-bis(2-ethoxy-4-diethylaminophenyl)-7-azaphthalide, 2-(p-acetylanilino)-6-(N-n-amyl-N-n-butylamino)fluoran, 2-benzylamino-6-(N-ethyl-p-toluidino)fluoran, 2-benzylamino-6-(N-methyl-2,4-dimethylanilino)fluoran, 2-benzylamino-6-(N-ethyl-2,4-dimethylanilino)fluoran, 2-benzylamino-6-(N-methyl-p-toluidino)fluoran, 2-benzylamino-6-(N-ethyl-p-toluidino)fluoran, 2-(di-p-methylbenzylamino)-6-(N-ethyl-p-toluidino)fluoran, 2-(α-phenylethylamino)-6-(N-ethyl-p-toluidino)fluoran, 2-methylamino-6-(N-methylanilino)fluoran, 2-methylamino-6-(N-ethylanilino)fluoran, 2-methylamino-6-(N-propylanilino)fluoran, 2-ethylamino-6-(N-methyl-p-toluidino)fluoran, 2-methylamino-6-(N-methyl-2,4-dimethylanilino)fluoran, 2-ethylamino-6-(N-ethyl-2,4-dimethylanilino)fluoran, 2-dimethylamino-6-(N-methylanilino) fluoran, 2-dimethylamino-6-(N-ethylanilino)fluoran, 2-diethylamino-6-(N-methyl-p-toluidino)fluoran, 2-diethylamino-6-(N-ethyl-p-toluidino)fluoran, 2-dipropylamino-6-(N-methylanilino) fluoran, 2-dipropylamino-6-(N-ethylanilino)fluoran, 2-amino-6-(N-methylanilino)fluoran, 2-amino-6-(N-ethylanilino)fluoran, 2-amino-6-(N-propylanilino)fluoran, 2-amino-6-(N-methyl-p-toluidino)fluoran, 2-amino-6-(N-ethyl-p-toluidino)fluoran, 2-amino-6-(N-propyl-p-toluidino)fluoran, 2-amino-6-(N-methyl-p-ethylanilino)fluoran, 2-amino-6-(N-ethyl-p-ethylanilino)fluoran, 2-amino-6-(N-propyl-p-ethylanilino)fluoran, 2-amino-6-(N-methyl-2,4-dimethylanilino)fluoran, 2-amino-6-(N-ethyl-2,4-dimethylanilino)fluoran, 2-amino-6-(N-propyl-2,4-dimethylanilino)fluoran, 2-amino-6-(N-methyl-p-chloroanilino)fluoran, 2-amino-6-(N-ethyl-p-chloroanilino)fluoran, 2-amino-6-(N-propyl-p-chloroanilino)fluoran, 1,2-benzo-6-(N-ethyl-N-isoamylamino)fluoran, 1,2-benzo-6-dibutylaminofluoran, 1,2-benzo-6-(N-methyl-N-cyclohexylamino)fluoran, 1,2-benzo-6-(N-ethyl-N-toluidino)fluoran, and the like. Each of the color development layers 24, 27, and 30 may contain one of the above-described coloring compounds singly or may contain two or more types thereof.

### <Developer>

The developer is, for example, for causing a colorless coloring compound to develop a color. The developer may have a particulate form. The developer contains, for example, at least one selected from the group consisting of a phenol derivative, a salicylic acid derivative, a urea derivative, and the like. The developer contains, specifically, for example, a hydroxybenzoic acid type compound represented by the following formula (2), containing a group having an electron accepting property in a molecule thereof. The hydroxybenzoic acid type compound may be a bis(hydroxybenzoic acid) type compound.

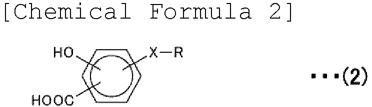

(Note that X is any one of -NHCO-, -CONH-, - NHCONH-, -CONHCO-, -NHNHCO-, -CONHNH-, -CONHNHCO-, - NHCOCONH-, -NHCONHCO-, -CONHCONH-, -NHNHCONH-, - NHCONHNH-, -CONHNHCONH-, -NHCONHNHCO-, and -CONHNHCONH-. R is a linear hydrocarbon group having 25 or more and 34 or less carbon atoms.)

Bonding positions of the hydroxy group (-OH), the carboxyl group (-COOH) and the -X-R group in formula (2) are not limited. For example, the hydroxybenzoic acid type compound may have a structure in which a hydroxy group and a carboxyl group are bonded to an ortho position of benzene, that is, a salicylic acid skeleton.

The developer may contain a compound represented by the following formula (3). The compound represented by formula (3) may be used singly, or may be used in combination with another compound, for example, the hydroxybenzoic acid type compound represented by the above formula (2), or the like.

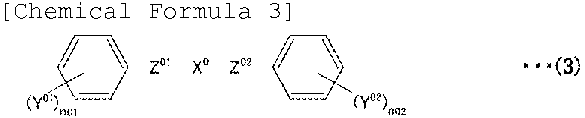

(Note that, in formula (3), X⁰ is a divalent group containing at least one benzene ring. Y⁰¹ and Y⁰² are each independently a monovalent group. n01 and n02 are each independently an integer of 0 to 5. In a case where n01 is an integer of 2 to 5, Y⁰¹s may be the same as or different from each other. In a case where n02 is an integer of 2 to 5, Y⁰²s may be the same as or different from each other. Z⁰¹ and Z⁰² are each independently a hydrogen bonding group.)

With X⁰ containing at least one benzene ring, a melting point can be increased as compared with a case where X⁰ is an aliphatic hydrocarbon group (for example, a normal alkyl chain), and therefore color development retention characteristics at the time of high temperature and high humidity storage (hereinafter, referred to as "high temperature and high humidity storage characteristics") can be improved. X⁰ preferably contains at least two benzene rings from a viewpoint of improving the high temperature and high humidity storage characteristics and heat resistance. The high temperature and high humidity storage characteristics are, for example, storage characteristics under an environment of 80°C and 60%RH. Improvement in heat resistance leads to improvement in resistance of the recording member 20 to a severe process (for example, heat-pressing, integral molding using a molten resin or the like, or the like). In a case where X⁰ contains at least two benzene rings, the at least two benzene rings may be fused. For example, X⁰ may be naphthalene, anthracene, or the like.

With Z⁰¹ and Z⁰² being each independently a hydrogen bonding group, the developers are likely to be present while being gathered to some extent via hydrogen bonds, and therefore stability of the developers in the color development layers 24, 27, and 30 is improved. In the present specification, the hydrogen bonding group means a functional group containing an atom capable of hydrogen bonding with an atom present in another functional group, another compound, or the like.

The developer preferably contains a compound represented by the following formula (4):

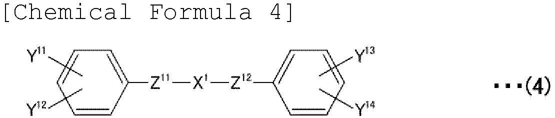

(Note that, in formula (4), X¹ is a divalent group containing at least one benzene ring. Y¹¹, Y¹², Y¹³, and Y¹⁴ are each independently a monovalent group. Z¹¹ and Z¹² are each independently a hydrogen bonding group.)

With X¹ containing at least one benzene ring, a melting point can be increased as compared with a case where X¹ is an aliphatic hydrocarbon group (for example, a normal alkyl chain), and therefore the high temperature and high humidity storage characteristics can be improved. X¹ preferably contains at least two benzene rings from a viewpoint of improving the high temperature and high humidity storage characteristics and heat resistance. In a case where X¹ contains at least two benzene rings, the at least two benzene rings may be fused. For example, X¹ may be naphthalene, anthracene, or the like.

With Z¹¹ and Z¹² being each independently a hydrogen bonding group, the developers are likely to be present while being gathered to some extent via hydrogen bonds, and therefore stability of the developers in the color development layers 24, 27, and 30 is improved.

In a case where formula (3) and formula (4) each contain a hydrocarbon group, the hydrocarbon group is a generic term for groups containing carbon (C) and hydrogen (H), and may be a saturated hydrocarbon group or an unsaturated hydrocarbon group. The saturated hydrocarbon group is an aliphatic hydrocarbon group having no carbon-carbon multiple bond, and the unsaturated hydrocarbon group is an aliphatic hydrocarbon group having a carbon-carbon multiple bond (carbon-carbon double bond or carbon-carbon triple bond).

In a case where formula (3) and formula (4) each contain a hydrocarbon group, the hydrocarbon group may be in a chain form or may include one or more rings. The chain form may be a linear form, or may be a branched form having one or more side chains and the like.

### (X⁰ and X¹ each containing one benzene ring)

X⁰ in formula (3) and X¹ in formula (4) are each, for example, a divalent group containing one benzene ring. The divalent group is represented by, for example, the following formula (5):

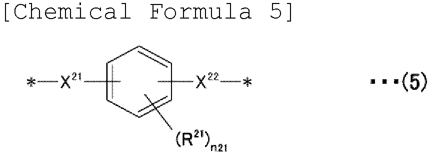

(Note that, in formula (5), X²¹ may be present or does not have to be present, and when X²¹ is present, X²¹ is a divalent group. X²² may be present or does not have to be present, and when X²² is present, X²² is a divalent group. R²¹ is a monovalent group. n21 is an integer of 0 to 4. In a case where n21 is an integer of 2 to 4, R²¹s may be the same as or different from each other. The mark * represents a bonding portion.)

In formula (5), bonding positions of X²¹ and X²² on the benzene ring are not limited. That is, the bonding positions of X²¹ and X²² on the benzene ring may be any one of an ortho position, a meta position, and a para position.

The above-described divalent group containing one benzene ring is, from a viewpoint of improving high temperature and high humidity storage characteristics, preferably represented by the following formula (6):

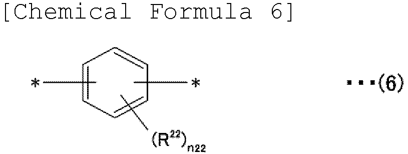

(Note that, in formula (6), R²² is a monovalent group. n22 is an integer of 0 to 4. In a case where n22 is an integer of 2 to 4, R²²s may be the same as or different from each other. The mark * represents a bonding portion.)

In a case where X⁰ in formula (3) is a divalent group containing one benzene ring, bonding positions of Z⁰¹ and Z⁰² on the benzene ring in formula (6) are not limited. That is, the bonding positions of Z⁰¹ and Z⁰² on the benzene ring may be any one of an ortho position, a meta position, and a para position.

In a case where X¹ in formula (4) is a divalent group containing one benzene ring, bonding positions of Z¹¹ and Z¹² on the benzene ring in formula (6) are not limited. That is, the bonding positions of Z¹¹ and Z¹² on the benzene ring may be any one of an ortho position, a meta position, and a para position.

### (X²¹ and X²²)

X²¹ and X²² in formula (5) are only required to be each independently a divalent group without limitation, and examples thereof include a hydrocarbon group optionally having a substituent. The hydrocarbon group is preferably in a chain form. With the hydrocarbon group in a chain form, a melting point of the developer can be lowered, and therefore the developer is melted by irradiation with laser light, and the coloring compound easily develops a color. A normal alkyl chain is particularly preferable among the hydrocarbon groups in a chain form from a viewpoint of lowering the melting point of the developer.

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

In a case where X²¹ and X²² in formula (5) are normal alkyl groups, the number of carbon atoms of the normal alkyl group is preferably 8 or less, more preferably 6 or less, still more preferably 5 or less, and particularly preferably 3 or less from a viewpoint of high temperature storage stability. It is considered that in a case where the number of carbon atoms of the normal alkyl group is 8 or less, due to the short length of the normal alkyl group, thermal disturbance is less likely to occur in the developer during storage at a high temperature, and a site that interacts with the coloring compound such as a leuco dye at the time of color development is less likely to be separated. Therefore, the coloring compound such as a leuco dye is less likely to be decolored during storage at a high temperature, and thus high temperature storage stability is improved.

Examples of the substituent that the hydrocarbon group optionally has include a halogen group (for example, a fluorine group), an alkyl group having a halogen group (for example, a fluorine group), and the like. The hydrocarbon group optionally having a substituent may be a hydrocarbon group obtained by replacing some of carbon atoms of the hydrocarbon group (for example, some of carbon atoms included in a main chain of the hydrocarbon group) with elements such as oxygen.

### (R²¹)

R²¹ in formula (5) is only required to be a monovalent group without limitation, and examples thereof include a halogen group and a hydrocarbon group optionally having a substituent.

The halogen group is, for example, a fluorine group (-F), a chlorine group (-Cl), a bromine group (-Br), or an iodine group (-I).

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

Examples of the substituent that the hydrocarbon group optionally has include a halogen group (for example, a fluorine group), an alkyl group having a halogen group (for example, a fluorine group), and the like. The hydrocarbon group optionally having a substituent may be a hydrocarbon group obtained by replacing some of carbon atoms of the hydrocarbon group (for example, some of carbon atoms included in a main chain of the hydrocarbon group) with elements such as oxygen.

### (R²²)

R²² in formula (6) is only required to be a monovalent group without limitation, and examples thereof include a halogen group and a hydrocarbon group optionally having a substituent. Each of the halogen group and the hydrocarbon group optionally having a substituent is similar to that for R²¹ in the above formula (3).

### (X⁰ and X¹ each containing two benzene rings)

X⁰ in formula (3) and X¹ in formula (4) are each, for example, a divalent group containing two benzene rings. The divalent group is represented by, for example, the following formula (7):

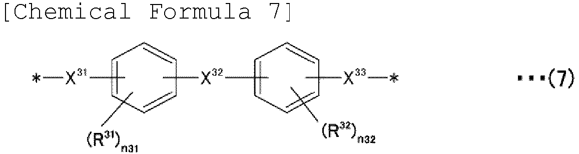

(Note that, in formula (7), X³¹ may be present or does not have to be present, and when X³¹ is present, X³¹ is a divalent group. X³² may be present or does not have to be present, and when X³² is present, X³² is a divalent group. X³³ may be present or does not have to be present, and when X³³ is present, X³³ is a divalent group. R³¹ and R³² are each independently a monovalent group. n31 and n32 are each independently an integer of 0 to 4. In a case where n31 is an integer of 2 to 4, R³¹s may be the same as or different from each other. In a case where n32 is an integer of 2 to 4, R³²s may be the same as or different from each other. The mark * represents a bonding portion.)

In formula (7), bonding positions of X³¹ and X³² on the benzene ring are not limited. That is, the bonding positions of X³¹ and X³² on the benzene ring may be any one of an ortho position, a meta position, and a para position. Similarly, in formula (7), bonding positions of X³² and X³³ on the benzene ring are not limited. That is, the bonding positions of X³² and X³³ on the benzene ring may be any one of an ortho position, a meta position, and a para position.

The above-described divalent group containing two benzene rings is, from a viewpoint of improving high temperature and high humidity storage characteristics, preferably represented by the following formula (8):

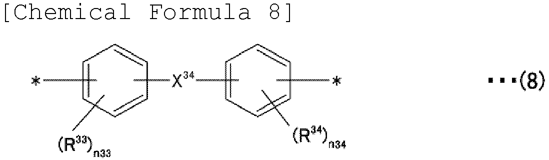

(Note that, in formula (8), X³⁴ is a divalent group. R³³ and R³⁴ are each independently a monovalent group. n33 and n34 are each independently an integer of 0 to 4. In a case where n33 is an integer of 2 to 4, R³³s may be the same as or different from each other. In a case where n34 is an integer of 2 to 4, R³⁴s may be the same as or different from each other. The mark * represents a bonding portion.)

In a case where X⁰ in formula (3) is a divalent group containing two benzene rings, bonding positions of Z⁰¹ and X³⁴ on the benzene ring in formula (8) are not limited. That is, the bonding positions of Z⁰¹ and X³⁴ on the benzene ring may be any one of an ortho position, a meta position, and a para position. Similarly, in formula (8), bonding positions of Z⁰² and X³⁴ on the benzene ring are not limited. That is, the bonding positions of Z⁰² and X³⁴ on the benzene ring may be any one of an ortho position, a meta position, and a para position.

In a case where X¹ in formula (4) is a divalent group containing two benzene rings, bonding positions of Z¹¹ and X³⁴ on the benzene ring in formula (8) are not limited. That is, the bonding positions of Z¹¹ and X³⁴ on the benzene ring may be any one of an ortho position, a meta position, and a para position. Similarly, in formula (8), bonding positions of Z¹² and X³⁴ on the benzene ring are not limited. That is, the bonding positions of Z¹² and X³⁴ on the benzene ring may be any one of an ortho position, a meta position, and a para position.

### (X³¹, X³², and X³³)

X³¹, X³², and X³³ in formula (7) are only required to be each independently a divalent group without limitation, and examples thereof include a hydrocarbon group optionally having a substituent. The hydrocarbon group is similar to those for X²¹ and X²² in the above formula (5).

### (X³⁴)

X³⁴ in formula (8) is only required to be a divalent group without limitation, and examples thereof include a hydrocarbon group optionally having a substituent. The hydrocarbon group is similar to those for X²¹ and X²² in the above formula (5).

### (R³¹ and R³²)

R³¹ and R³² in formula (7) are each only required to be a monovalent group without limitation, and examples thereof include a halogen group and a hydrocarbon group optionally having a substituent. Each of the halogen group and the hydrocarbon group optionally having a substituent is similar to that for R²¹ in the above formula (5).

### (R³³ and R³⁴)

R³³ and R³⁴ in formula (8) are each only required to be a monovalent group without limitation, and examples thereof include a halogen group and a hydrocarbon group optionally having a substituent. Each of the halogen group and the hydrocarbon group optionally having a substituent is similar to that for R²¹ in the above formula (5).

### (Y⁰¹ and Y⁰²)

Y⁰¹ and Y⁰² in formula (3) are each independently, for example, a hydrogen group (-H), a hydroxy group (-OH), a halogen group (-X), a carboxy group (-COOH), an ester group (-COOR), or a hydrocarbon group optionally having a substituent.

The halogen group is, for example, a fluorine group (-F), a chlorine group (-Cl), a bromine group (-Br), or an iodine group (-I).

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

Examples of the substituent that the hydrocarbon group optionally has include a halogen group (for example, a fluorine group), an alkyl group having a halogen group (for example, a fluorine group), and the like. The hydrocarbon group optionally having a substituent may be a hydrocarbon group obtained by replacing some of carbon atoms of the hydrocarbon group (for example, some of carbon atoms included in a main chain of the hydrocarbon group) with elements such as oxygen.

In formula (3), one of (Y⁰¹)ₙ₀₁ and/or one of (Y⁰²)ₙ₀₂ is preferably a hydroxy group (-OH). With one of (Y⁰¹)ₙ₀₁ and/or one of (Y⁰²)ₙ₀₂ being a hydroxy group (-OH), display quality and light resistance can be improved.

### (Y¹¹, Y¹², Y¹³, and Y¹⁴)

In formula (4), bonding positions of Y¹¹ and Y¹² on the benzene ring are not limited. That is, the bonding positions of Y¹¹ and Y¹² on the benzene ring may be any one of an ortho position, a meta position, and a para position. Similarly, in formula (4), bonding positions of Y¹³ and Y¹⁴ on the benzene ring are not limited. That is, the bonding positions of Y¹³ and Y¹⁴ on the benzene ring may be any one of an ortho position, a meta position, and a para position. In formula (4), the bonding positions of Y¹¹ and Y¹² on one benzene and the bonding positions of Y¹³ and Y¹⁴ on the other benzene may be the same or different.

Y¹¹, Y¹², Y¹³, and Y¹⁴ in formula (4) each independently represent, for example, a hydrogen group (-H), a hydroxy group (-OH), a halogen group, a carboxy group (-COOH), an ester group (-COOR), or a hydrocarbon group optionally having a substituent. Each of the halogen group and the hydrocarbon group optionally having a substituent is similar to that for Y⁰¹ and Y⁰² in the above formula (3).

In formula (4), Y¹¹ and/or Y¹³ is preferably a hydroxy group (-OH). With Y¹¹ and/or Y¹³ being a hydroxy group (-OH), display quality and light resistance can be improved.

### (Z⁰¹ and Z⁰²)

Z⁰¹ and Z⁰² in formula (3) are each independently, for example, a urea bond (-NHCONH-), an amide bond (-NHCO- or -OCHN-), or a hydrazide bond (-NHCOCONH-). Z⁰¹ and Z⁰² are preferably urea bonds from a viewpoint of improving high temperature and high humidity storage characteristics. In a case where Z⁰¹ is an amide bond, nitrogen included in the amide bond may be bonded to benzene, or carbon included in the amide bond may be bonded to benzene. In a case where Z⁰² is an amide bond, nitrogen included in the amide bond may be bonded to benzene, or carbon included in the amide bond may be bonded to benzene.

### (Z¹¹ and Z¹²)

Z¹¹ and Z¹² in formula (4) are each independently, for example, a urea bond (-NHCONH-), an amide bond (-NHCO- or -OCHN-), or a hydrazide bond (-NHCOCONH-). Z¹¹ and Z¹² are preferably urea bonds from a viewpoint of improving high temperature and high humidity storage characteristics. In a case where Z¹¹ is an amide bond, nitrogen included in the amide bond may be bonded to benzene, or carbon included in the amide bond may be bonded to benzene. In a case where Z¹² is an amide bond, nitrogen included in the amide bond may be bonded to benzene, or carbon included in the amide bond may be bonded to benzene.

### (Specific examples of developer)

A developer in which X⁰ in formula (3) and X¹ in formula (4) each contain one benzene ring contains, specifically, for example, at least one selected from the group consisting of compounds represented by the following formulas (9-1) to (9-6).

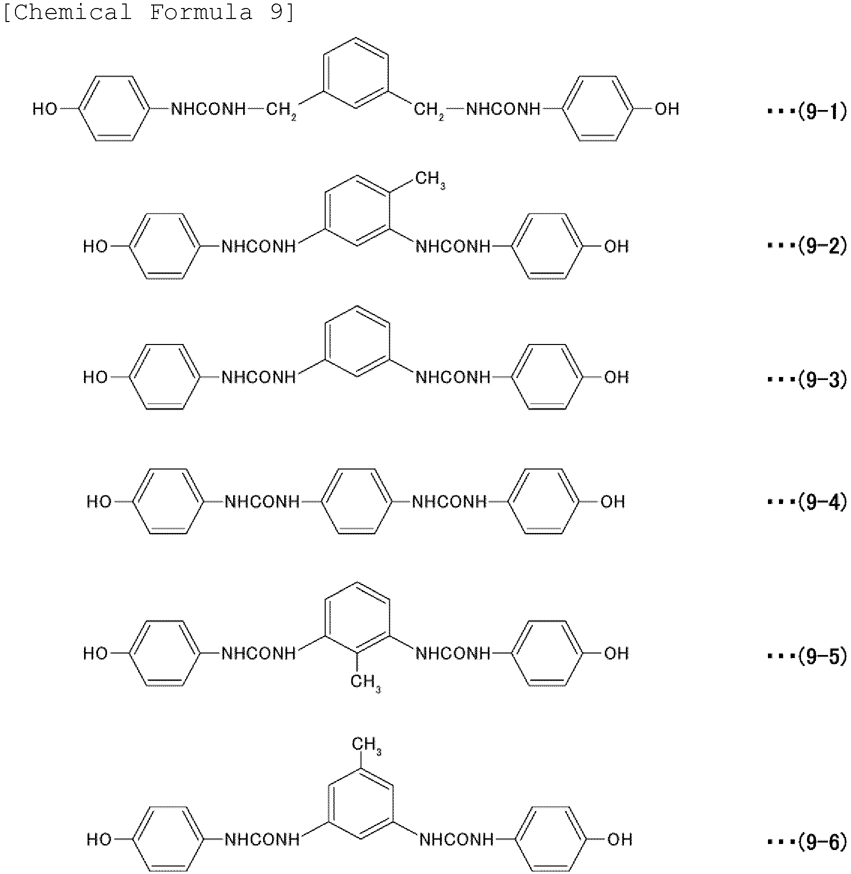

A developer in which X⁰ in formula (3) and X¹ in formula (4) each contain two benzene rings contains, specifically, for example, at least one selected from the group consisting of compounds represented by the following formulas (10-1) to (10-8).

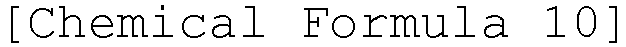

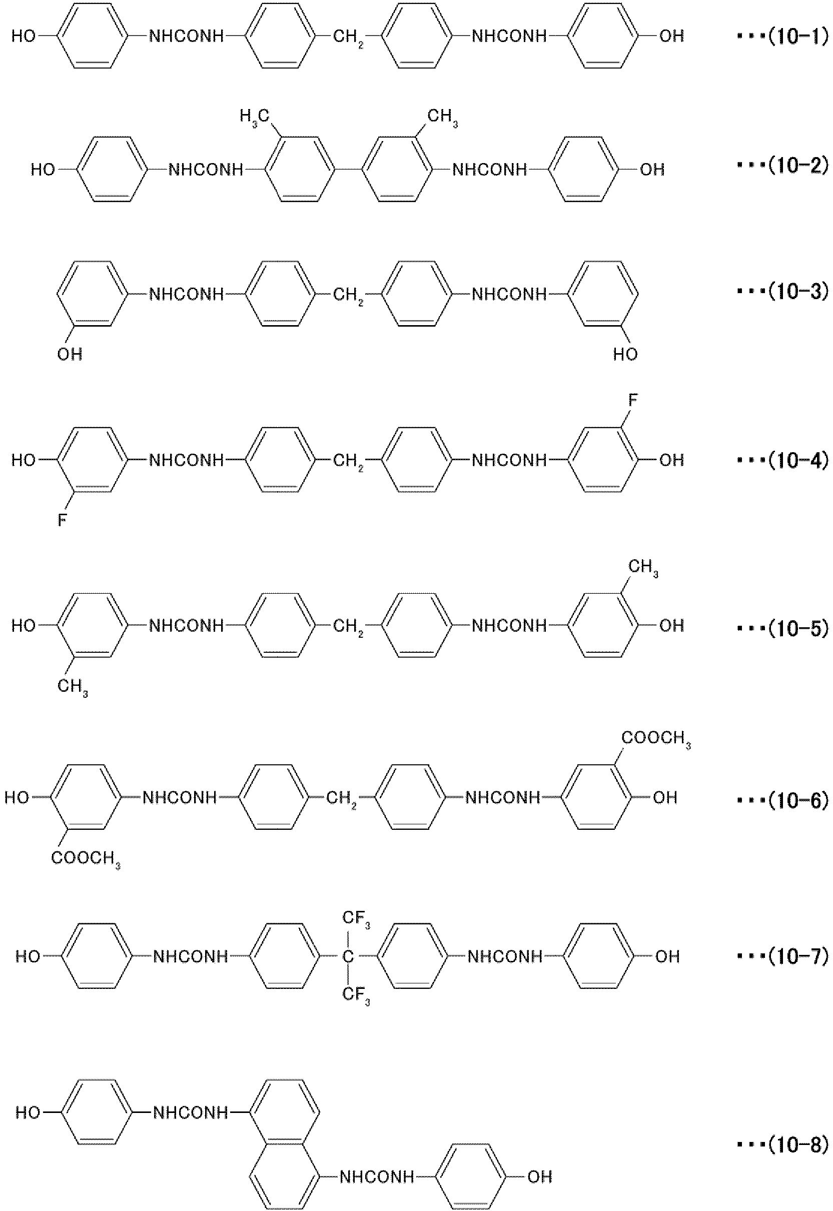

### (Matrix polymer)

The matrix polymer (matrix resin) preferably has a function as a binder. The matrix polymer is preferably one in which the coloring compound, the developer, and the photothermal conversion material are likely to be uniformly dispersed. The matrix polymer is, for example, at least one selected from the group consisting of a thermosetting resin and a thermoplastic resin. Specifically, the matrix polymer is, for example, at least one selected from the group consisting of a polyvinyl chloride-based resin, a polyvinyl acetate-based resin, a vinyl chloride-vinyl acetate copolymer-based resin, an ethyl cellulose-based resin, a polystyrene-based resin, a styrene-based copolymer-based resin, a phenoxy resin-based resin, a polyester-based resin, an aromatic polyester-based resin, a polyurethane-based resin, a polycarbonate-based resin, a polyacrylate-based resin, a polymethacrylate-based resin, an acrylic acid-based copolymer-based resin, a maleic acid-based polymer-based resin, a polyvinyl alcohol-based resin, a modified polyvinyl alcohol-based resin, a hydroxyethyl cellulose-based resin, a carboxymethyl cellulose-based resin, starch, and the like.

The matrix polymer preferably contains a polycarbonate-based resin. With the matrix polymer containing a polycarbonate-based resin, light resistance of a background of the recording member 20 can be improved. Here, the polycarbonate-based resin is a resin having a carbonate group (-O-(C=O)-O-) as a structural unit at least in a main chain thereof. Therefore, other structural units may be included in the main chain in addition to the carbonate group.

A ratio of the developer to the total amount of the developer and the matrix resin is preferably 16% by mass or less. When the ratio of the developer is 16% by mass or less, adhesion between the color development layers 24, 27, and 30 and layers adjacent to the color development layers 24, 27, and 30 (particularly, heat insulating layers 23, 26, and 29) can be improved.

The ratio of the developer to the total amount of the developer and the matrix resin is measured as follows. A composition of the developer and the matrix polymer in the color development layer is measured by performing mapping using a Fourier transform infrared spectrophotometer (micro FTIR). Alternatively, the composition is calculated by measuring a weight while dissolving each of the color development layers 24, 27, and 30 in an appropriate organic solvent using a difference in solubility between the developer and the matrix polymer.

The content of the matrix polymer in each of the color development layers 24, 27, and 30 is preferably 84% by mass or more from a viewpoint of improving adhesion between the color development layers 24, 27, and 30 and layers adjacent to the color development layers 24, 27, and 30 (particularly, the heat insulating layers 23, 26, and 29). The content of the matrix polymer is preferably 50 mass or more and 70% by mass or less, and more preferably 58% by mass or more and 65% by mass or less from a viewpoint of suppressing a decrease in color developability of the color development layers 24, 27, and 30. In a case where the content of the matrix polymer is 50 mass or more and 70% by mass or less, it is preferable to select layers adjacent to the color development layers 24, 27, and 30 so as to obtain favorable adhesion.

The content of the matrix polymer in each of the color development layers 24, 27, and 30 is measured as follows. A composition of the developer and the matrix polymer in each of the color development layers 24, 27, and 30 is measured by performing mapping using a Fourier transform infrared spectrophotometer (micro FTIR). Alternatively, the composition is calculated by measuring a weight while dissolving each of the color development layers 24, 27, and 30 in an appropriate organic solvent using a difference in solubility between components in the color development layers 24, 27, and 30.

### (Photothermal conversion material)

For example, the photothermal conversion material generates heat by absorbing light in a predetermined wavelength region such as a near-infrared region. As the photothermal conversion material, for example, a near-infrared absorbing dye having an absorption peak in a wavelength range of 700 nm or more and 2000 nm or less and having almost no absorption in a visible region is preferably used. The photothermal conversion material is specifically, for example, at least one selected from the group consisting of a compound having a phthalocyanine skeleton (phthalocyanine-based dye), a compound having a squarylium skeleton (squarylium-based dye), an inorganic compound, and the like. The inorganic compound is, for example, at least one selected from the group consisting of a metal complex such as a dithio complex, a diimmonium salt, an aminium salt, an inorganic compound, and the like. The inorganic compound is, for example, at least one selected from the group consisting of graphite, carbon black, metal powder particles, metal oxides such as tricobalt tetraoxide, iron oxide, chromium oxide, copper oxide, titanium black, and indium tin oxide (ITO), metal nitrides such as niobium nitride, metal carbides such as tantalum carbide, metal sulfides, various magnetic powders, and the like. In addition, a compound having a cyanine skeleton (cyanine-based dye) having excellent light resistance and heat resistance may be used. Note that the excellent light resistance, as used herein, means that it is not decomposed by, for example, irradiation with light of a fluorescent lamp or the like under a use environment. The excellent heat resistance means that, for example, a film formed together with a polymer material does not change in maximum absorption peak value of an absorption spectrum by 20% or more after stored at 150°C for 30 minutes, for example. Examples of such a compound having a cyanine skeleton include a compound having, in a molecule thereof, at least one of a counter ion being any one of SbF₆, PF₆, BF₄, ClO₄, CF₃SO₃, or (CF₃SO₃)₂N or a methine chain including a 5-membered ring or a 6-membered ring. Note that, although the compound having a cyanine skeleton used for the recording member 20 in the laminate 1 preferably has both any one of the above-described counter ions and a cyclic structure such as a 5-membered ring or a 6-membered ring in a methine chain, sufficient light resistance and heat resistance are ensured as long as the compound has at least one of the counter ion or the cyclic structure.

Note that, as the photothermal conversion material, for example, a photothermal conversion material in which a light absorption band is narrow in a wavelength range of 700 nm to 2000 nm, and light absorption bands of the color development layers 24, 27, and 30 do not overlap each other is preferably selected. As a result, a desired layer among the color development layers 24, 27, and 30 can be selectively caused to develop a color.

### (Heat insulating layers 23, 26, 29, and 34)

The heat insulating layer 23 is provided between the base material 21 and the color development layer 24, and thermally insulates the base material 21 and the color development layer 24 from each other. The heat insulating layer 26 is provided between the color development layer 24 and the color development layer 27, and thermally insulates the color development layer 24 and the color development layer 27 from each other. The heat insulating layer 29 is provided between the color development layer 27 and the color development layer 30, and thermally insulates the color development layer 27 and the color development layer 30 from each other. The heat insulating layer 34 is provided between the color development layer 30 and the protective layer 31, and thermally insulates the color development layer 30 and the protective layer 31 from each other. The heat insulating layers 23, 26, 29, and 34 each include, for example, a general light transmissive polymer material. A specific material is, for example, at least one selected from the group consisting of an acrylic resin, a polyvinyl chloride-based resin, a polyvinyl acetate-based resin, a vinyl chloride-vinyl acetate copolymer-based resin, an ethyl cellulose-based resin, a polystyrene-based resin, a styrene-based resin copolymer-based resin, a phenoxy resin-based resin, a polyester-based resin, an aromatic polyester-based resin, a polyurethane-based resin, a polycarbonate-based resin, a polyacrylate-based resin, a polymethacrylate-based resin, an acrylic acid copolymer-based resin, a maleic acid polymer-based resin, a polyvinyl alcohol-based resin, a modified polyvinyl alcohol-based resin, a hydroxyethyl cellulose-based resin, a carboxymethyl cellulose-based resin, starch, and the like. Note that the heat insulating layers 23, 26, 29, and 34 may each contain, for example, various additives such as an ultraviolet absorber.

The heat insulating layers 23, 26, 29, and 34 may be each an ultraviolet-curable resin layer. The ultraviolet-curable resin layer contains an ultraviolet-curable resin composition solidified by a polymerization reaction. More specifically, for example, the ultraviolet-curable resin layer contains a polymer of a polymerizable compound and a polymerization initiator whose structure is changed by generation of an active species by irradiation with external energy (ultraviolet ray). The ultraviolet-curable resin composition contains, for example, at least one selected from the group consisting of a radically polymerized ultraviolet-curable resin composition, a cationically polymerized ultraviolet-curable resin composition, and the like. The ultraviolet-curable resin composition may contain at least one selected from the group consisting of a sensitizer, a filler, a stabilizer, a leveling agent, an antifoaming agent, a viscosity modifier, and the like as necessary. The ultraviolet-curable resin composition may be an ultraviolet-curable resin composition for a hard coat. The ultraviolet-curable resin composition may be an acrylic ultraviolet-curable resin composition.

The heat insulating layers 23, 26, 29, and 34 may contain a light transmissive inorganic material. For example, when porous silica, alumina, titania, carbon, a composite thereof, or the like is used, a thermal conductivity is lowered, and a heat insulating effect is high, which is preferable. The heat insulating layers 23, 26, and 29 can be formed by, for example, a sol-gel method.

By adjusting the thicknesses of the heat insulating layers 23, 26, 29, and 34, the thickness of the recording member 20 may be made equal to the thickness of the intermediate layer 13, and occurrence of a physical level difference may be suppressed. The thickness of each of the heat insulating layers 23, 26, 29, and 34 is preferably 3 µm or more and 100 µm or less, and more preferably 5 µm or more and 50 µm or less. When the thickness of each of the heat insulating layers 23, 26, 29, and 34 is 3 µm or more, a sufficient heat insulating effect can be obtained. On the other hand, when the thickness of each of the heat insulating layers 23, 26, 29, and 34 is 100 µm or less, deterioration of a light transmissive property can be suppressed. Furthermore, it is possible to suppress a decrease in bending resistance of the recording member 20 and to make defects such as cracks less likely to occur.

Pencil hardness of each of surfaces of the heat insulating layers 23, 26, 29, and 34 is preferably 2B or more, and more preferably H or more. When the pencil hardness of each the surfaces of the heat insulating layers 23, 26, 29, and 34 is 2B or more, a density of each of the heat insulating layers 23, 26, 29, and 34 is high, and substance diffusion via the intermediate layers 32A, 32B, 32C, and 32D can be further suppressed. For example, in a case where the pencil hardness of each of the surfaces of the heat insulating layers 26 and 29 is 2B or more, diffusion of the coloring compound via the intermediate layers 32B and 32C can be further suppressed. Therefore, a hue change of each of the color development layers 24, 27, and 30 during long-term storage and the like can be further suppressed. As each of the heat insulating layers 23, 26, 29, and 34 having the above-described pencil hardness, an ultraviolet-curable resin layer is preferable.

The pencil hardness of the surface of the heat insulating layer 23 is measured as follows. First, the laminate 1 is disassembled to expose the surface of heat insulating layer 23. Next, the pencil hardness of the surface of the heat insulating layer 23 is measured in accordance with JIS K5600-5-4. The measurement is performed in an atmosphere in a standard state at a temperature of 23 ± 1°C and a relative humidity of 50 ± 5%. The pencil hardness of each of the surfaces of the heat insulating layers 26, 29, and 34 is also measured in a similar procedure to the pencil hardness of the surface of the heat insulating layer 23.

### (Pressure-sensitive adhesive layers 22, 25, 28, and 33)

The pressure-sensitive adhesive layer 22 is provided between the base material 21 and the heat insulating layer 23, and bonds the base material 21 and the heat insulating layer 23 to each other. The pressure-sensitive adhesive layer 25 is provided between the color development layer 24 and the heat insulating layer 26, and bonds the color development layer 24 and the heat insulating layer 26 to each other. The pressure-sensitive adhesive layer 28 is provided between the color development layer 27 and the heat insulating layer 29, and bonds the color development layer 27 and the heat insulating layer 29 to each other. The pressure-sensitive adhesive layer 33 is provided between the color development layer 30 and the heat insulating layer 34, and bonds the color development layer 30 and the heat insulating layer 34 to each other. In a case where the recording member 20 does not include the heat insulating layer 23, the pressure-sensitive adhesive layer 22 bonds the base material 21 and the color development layer 24 to each other. In this case, the pressure-sensitive adhesive layer 22 may have a function as a heat insulating layer and/or a diffusion preventing layer. In a case where the recording member 20 does not include the heat insulating layer 26, the pressure-sensitive adhesive layer 25 bonds the color development layer 24 and the color development layer 27 to each other. In this case, the pressure-sensitive adhesive layer 25 may have a function as a heat insulating layer and/or a diffusion preventing layer. In a case where the recording member 20 does not include the heat insulating layer 29, the pressure-sensitive adhesive layer 28 bonds the color development layer 27 and the color development layer 30 to each other. In this case, the pressure-sensitive adhesive layer 28 may have a function as a heat insulating layer and/or a diffusion preventing layer. In a case where the recording member 20 does not include the heat insulating layer 34, the pressure-sensitive adhesive layer 33 bonds the color development layer 30 and the protective layer 31 to each other. In this case, the pressure-sensitive adhesive layer 33 may have a function as a heat insulating layer and/or a diffusion preventing layer. In the present specification, the term "and/or" means "at least one", and for example, in a case where the term is used in a phrase "X and/or Y", this phrase means three cases of "only X", "only Y", and "X and Y".

Each of the pressure-sensitive adhesive layers 22, 25, 28, and 33 contains a pressure-sensitive adhesive. The pressure-sensitive adhesive contains, for example, at least one selected from the group consisting of an acrylic resin, a silicone-based resin, a urethane-based resin, an epoxy-based resin, and an elastomer-based material.

### (Protective layer 31)

The protective layer 31 is for protecting a surface of the recording member 20, and is formed using, for example, at least one of an ultraviolet-curable resin or a thermosetting resin. The protective layer 31 is preferably a hard coat layer. The thickness of the protective layer 31 is, for example, 0.1 µm or more and 20 µm or less.

### (Average peel strength between layers)

An average peel strength at an interface between layers constituting the laminate 1 is preferably 3.5 N/cm or more, more preferably 4.0 N/cm or more, still more preferably 4.5 N/cm or more, and particularly preferably 5.0 N/cm or more. With the average peel strength at an interface between layers of 3.5 N/cm or more, peeling at an interface between layers constituting the laminate 1 can be suppressed. Therefore, forgery prevention performance and tamper prevention performance of the laminate 1 can be improved. Here, the layers constituting the laminate 1 may include the layers constituting the recording member 20.

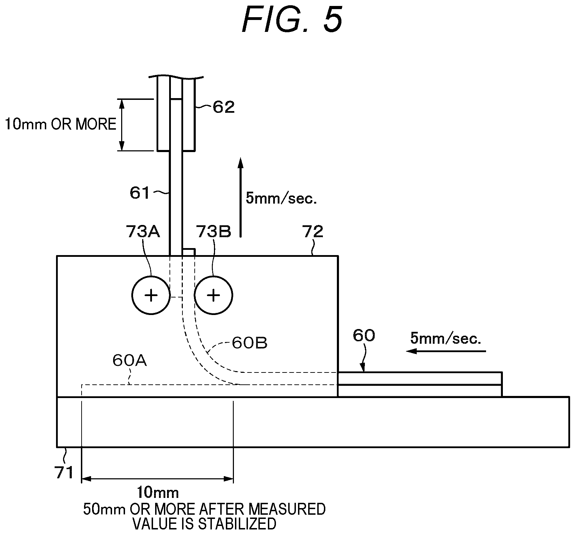

The average peel strength at an interface between layers is obtained by performing a 90 degree peel test. Methods for measuring average peel strengths at interfaces between layers are similar to each other, and therefore only a method for measuring an average peel strength at an interface between the heat insulating layer 26 and the color development layer 27 will be described below with reference to Fig. 5.

First, the laminate 1 is cut into a band shape having a width of 10 mm and a length of 100 mm to prepare a test piece 60, and the test piece 60 is left for 24 hours or more in an atmosphere in a standard state at a temperature of 23 ± 1°C and a relative humidity of 50 ± 5%. Note that, in a case where an average peel strength at an interface included in the recording member 20 is measured, the test piece 60 is cut so as to include the recording member 20. Hereinafter, in the test piece 60, a laminate on a lower side of an interface between the heat insulating layer 26 and the color development layer 27 is referred to as an adherend 60A, and a laminate on an upper side of the interface is referred to as an adherend 60B (see Fig. 3). Next, a portion between the adherend 60A and the adherend 60B is cut out with a sharp blade such as a cutter at one end portion of the test piece 60 in a longitudinal direction thereof such that the adherend 60B is peeled off by a length of 20 mm in the longitudinal direction, and a grip margin is prepared. Thereafter, a surface of the test piece 60 on a side of the adherend 60A is fixed to a test stand 71 with a strong pressure-sensitive adhesive. As the pressure-sensitive adhesive, a pressure-sensitive adhesive having a sufficiently high pressure-sensitive adhesive force, for example, a strong pressure-sensitive adhesive tape scotch (registered trademark) manufactured by 3M is selected such that the test piece 60 is not peeled off from the test stand 71 when a peel strength between the heat insulating layer 26 and the color development layer 27 is measured.

Next, one end of a tension member 61 is bonded to a surface of the adherend 60B on a side of the color development layer 27. As the tension member 61, a band-shaped film which does not cause elongation or breakage during the measurement of the peel strength and has a sufficient strength is used. Furthermore, the one end portion of the tension member 61 is bonded to the adherend 60B with a sufficiently high pressure-sensitive adhesive force such that the tension member 61 is not peeled off from the adherend 60A during the measurement of the peel strength. Fig. 5 illustrates an example in which the tension member 61 serves as a grip margin, but in a case where there is a sufficient stroke to a position where the adherend 60B is clamped by a clamp device (metal plate) 62, the adherend 60B may be directly clamped without using the tension member 61.

Next, the grip margin of the tension member 61 is interposed between a set of movable rolls 73A and 73B of a jig 72, and then the grip margin is clamped and fixed by 10 mm or more by the clamp device (metal plates) 62 of a tensile compression tester SV-55C 2H manufactured by IMADA-SS Corporation. The movable rolls 73A and 73B serve as fulcrums of peeling in the 90 degree peel test. Next, the 90 degree peel test is performed using the tensile compression tester, a test force [N/10 mm] and a stroke [mm] are monitored in terms of voltage values by, for example, a data logger manufactured by Keyence Corporation, and the voltage values are converted into forces and stored in a memory as CSV output data. Note that the above-described 90 degree peel test is performed at a tensile speed of 5 mm/sec in a standard state of a temperature of 23 ± 1°C and a relative humidity of 50 ± 5%. The stroke is set to 50 mm or more.

The above-described 90 degree peel test is performed three times in total, a point where the peel strength is stabilized (a place where rising of force is gentle) is taken as a start point (0 mm), and pieces of CSV output data up to a position at a relative distance of 50 mm from the start point are arithmetically averaged to calculate an average value. As a result, the average peel strength between the heat insulating layer 26 and the color development layer 27 is obtained. Note that, in a case where there is a point (spike) where the peeling force suddenly decreases in the CSV output data, the average peel strength is calculated excluding the point (spike).

An average value of minimum peel strengths among peel strengths between layers constituting the laminate 1 is preferably 3.5 N/cm or more, more preferably 4.0 N/cm or more, still more preferably 4.5 N/cm or more, and particularly preferably 5.0 N/cm or more. With the average value of the minimum peel strengths of 3.5 N/cm or more as described above, peeling between layers constituting the laminate 1 can be suppressed. Therefore, forgery prevention performance and tamper prevention performance of the laminate 1 can be improved. Here, the layers constituting the laminate 1 may include the layers constituting the recording member 20.

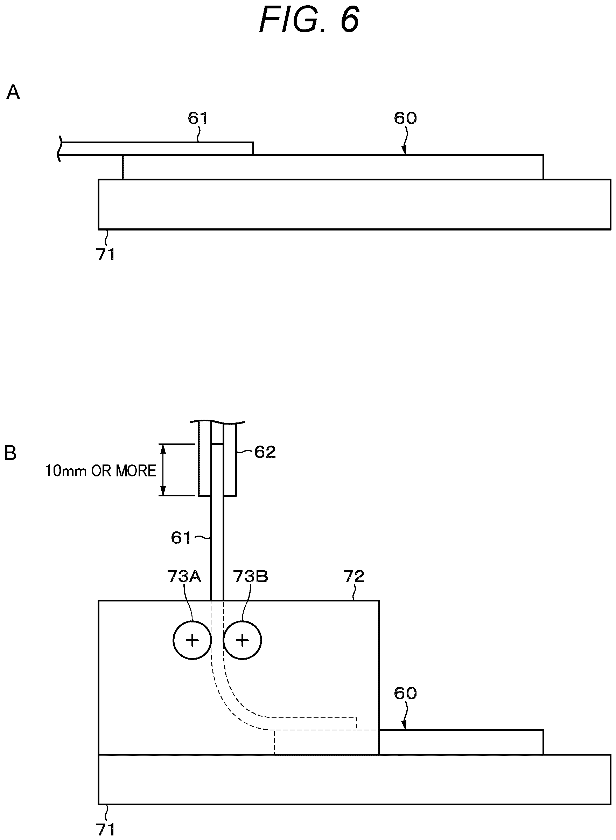

The average value of the minimum peel strengths among peel strengths between layers constituting the laminate 1 is obtained by performing the 90 degree peel test. Hereinafter, with reference to Figs. 6A and 6B, a method for measuring the average value of the minimum peel strengths among peel strengths between layers will be described.

First, the laminate 1 is cut into a band shape having a width of 10 mm and a length of 100 mm to prepare a test piece 60, and the test piece 60 is left for 24 hours or more in an atmosphere in a standard state at a temperature of 23 ± 1°C and a relative humidity of 50 ± 5%. Next, as illustrated in Fig. 6A, a surface of the test piece 60 on a side of the base material 11 is fixed to the test stand 71 with a strong pressure-sensitive adhesive, and the tension member 61 is bonded to a surface of the test piece 60 on a side of the overlay layer 15. As the tension member 61, a band-shaped film which does not cause elongation or breakage during the measurement of the average peel strength and has a sufficient strength is used. Furthermore, one end portion of the tension member 61 is bonded to the adherend 60B with a sufficiently high adhesive force so as not to be peeled off from the adherend 60B during the measurement of the average peel strength.

Next, as illustrated in Fig. 6B, the grip margin of the tension member 61 is interposed between the set of movable rolls 73A and 73B of the jig 72, and then the grip margin is clamped and fixed by 10 mm or more by the clamp device (metal plates) 62 of a tensile compression tester SV-55C 2H manufactured by IMADA-SS Corporation. The subsequent steps are similar to those of the method for measuring the average peel strength at an interface between the heat insulating layer 26 and the color development layer 27. The average value of the minimum peel strengths among peel strengths between layers constituting the laminate 1 is obtained as described above.

The interface having the lowest average peel strength among interfaces of the laminate 1 is preferably located between the color development layer 24 and the color development layer 27 or between the color development layer 27 and the color development layer 30. When the laminate 1 is disassembled, the recording member 20 is disassembled, and therefore it is difficult to take out and use the recording member 20. Therefore, forgery prevention performance of the laminate 1 can be improved.

### (Combination of materials of base material, intermediate layer, and overlay layer)

The base material 11, the intermediate layer 13, and the overlay layer 15 preferably contain the same type of resin material from a viewpoint of improving adhesion. The resin material may be a thermoplastic resin. The base material 11, the intermediate layer 13, and the overlay layer 15 preferably contain a polycarbonate (PC)-based resin or a polyethylene terephthalate (PET)-based resin from a viewpoint of environmental friendliness. The base material 11, the intermediate layer 13, and the overlay layer 15 preferably contain a polycarbonate (PC)-based resin or a polyvinyl chloride (PVC)-based resin from a viewpoint of improving durability. The base material 11, the intermediate layer 13, and the overlay layer 15 preferably contain a polycarbonate (PC)-based resin from a viewpoint of improving adhesion, environmental friendliness, and improving durability.

It can be confirmed, for example, as follows that the base material 11, the intermediate layer 13, and the overlay layer 15 contain the same type of resin material. First, the base material 11, the intermediate layer 13, and the overlay layer 15 are taken out from the laminate 1. Next, an IR spectrum of each of the base material 11, the intermediate layer 13, and the overlay layer 15 is acquired by infrared absorption spectrometry (IR). Next, by comparing the acquired IR spectra of the respective layers, it is confirmed that the base material 11, the intermediate layer 13, and the overlay layer 15 contain the same type of resin material.

Furthermore, the types of the resin materials contained in each of the base material 11, the intermediate layer 13, and the overlay layer 15 can be confirmed using the acquired IR spectra of the respective layers.

### [Method for manufacturing laminate 1]

Hereinafter, an example of a method for manufacturing the laminate 1 will be described.

First, a thermosetting resin as a thermal adhesive is applied to one main surface of the base material 11 to form the adhesive layer 12. Next, the intermediate layer 13 is placed on the adhesive layer 12, and then the recording member 20 is fitted into the housing portion 13A of the intermediate layer 13. Note that the intermediate layer 13 in which the recording member 20 is fitted in advance into the housing portion 13A may be placed on the adhesive layer 12. Instead, the adhesive layer 12 may be formed by applying a thermosetting resin onto the intermediate layer 13 in which the recording member 20 is fitted in advance into the housing portion 13A, and then placing the intermediate layer 13 on a main surface of the base material 11 so as to sandwich the coating therebetween. Alternatively, the adhesive layer 12 may be formed by bonding a sheet, which is formed in advance, for example, by applying a thermosetting resin to a separator, to a main surface of the base material 11 or to the intermediate layer 13 in which the recording member 20 is fitted in advance into the housing portion 13A by a means of thermal lamination or the like.

Next, a thermosetting resin as a thermal adhesive is applied onto the intermediate layer 13 to form the adhesive layer 14, and then the overlay layer 15 is placed on the adhesive layer 14. Next, the obtained laminate is sandwiched between metal plates and pressurized while being heated to thermally cure the adhesive layer 12 and the adhesive layer 14. A temperature applied to the laminate during the thermal curing is preferably 100°C or higher and 120°C or lower from a viewpoint of reducing damage to the recording member 20. As a result, the target laminate 1 is obtained. The adhesive layer 14 may be formed by applying a thermosetting resin to the overlay layer 15 and then placing the overlay layer 15 on the intermediate layer 13 so as to sandwich the coating therebetween. Instead, the adhesive layer 14 may be formed by bonding a sheet, which is formed in advance, for example, by applying a thermosetting resin to a separator, to the overlay layer 15 or the intermediate layer 13 by a means of thermal lamination or the like.

### [Recording method of laminate 1]

In the laminate 1, for example, a pattern or the like can be recorded on the recording member 20 as follows. Here, a case where the color development layers 24, 27, and 30 exhibit a cyan color, a magenta color, and a yellow color, respectively, will be described as an example.

For example, the recording member 20 is irradiated with an infrared ray having a prescribed wavelength and a prescribed output via the overlay layer 15 by a semiconductor laser or the like. Here, in a case where the color development layer 24 is caused to develop a color, the color development layer 24 is irradiated with an infrared ray having a wavelength λ₁ at such energy that the color development layer 24 reaches a color development temperature. As a result, the photothermal conversion material contained in the color development layer 24 generates heat, a coloring reaction (color development reaction) occurs between the coloring compound and the developer, and a cyan color is developed in the irradiation portion. Similarly, in a case where the color development layer 27 is caused to develop a color, the color development layer 27 is irradiated with an infrared ray having a wavelength λ₂ at such energy that the color development layer 27 reaches a color development temperature. Similarly, in a case where the color development layer 30 is caused to develop a color, the color development layer 30 is irradiated with an infrared ray having a wavelength λ₃ at such energy that the color development layer 30 reaches a color development temperature. As a result, the photothermal conversion materials contained in the color development layer 27 and the color development layer 30 each generate heat to cause a coloring reaction between the coloring compound and the developer, and a magenta color and a yellow color are developed in the irradiation portions, respectively. In this manner, by irradiating an arbitrary portion with an infrared ray having a corresponding wavelength, it is possible to record a pattern or the like (for example, a full-color pattern or the like).

### [Operations and Effects]

As described above, in the laminate 1, the base material 11 and the intermediate layer 13 are bonded to each other by the adhesive layer 12 containing a thermal adhesive, and the intermediate layer 13 and the overlay layer 15 are bonded to each other by the adhesive layer 12 containing a thermal adhesive. With this configuration, the base material 11 and the intermediate layer 13 can be firmly bonded to each other, and the intermediate layer 13 and the overlay layer 15 can be firmly bonded to each other. Therefore, forgery prevention performance of the laminate 1 can be improved. Furthermore, tamper prevention performance of the laminate 1 can be improved. Therefore, security of the laminate 1 can be improved.

Since the recording member 20 includes the color development layers 24, 27, and 30, a photographic image or the like of the laminate 1 such as a plastic security card can be fully colored.

In the laminate 1, the full-color recording member 20 is provided in a part of a plane of the laminate 1, and therefore cost can be reduced as compared with a case where the full-color recording member 20 is provided on the entire plane of the laminate 1.

Since the recording member 20 is fitted into the housing portion 13A of the intermediate layer 13, it can be made difficult to visually recognize a boundary between the recording member 20 and the intermediate layer 13 in an in-plane direction of the laminate 1. Therefore, it is difficult to recognize a portion where the recording member 20 is provided in a plane of the laminate 1. Therefore, forgery prevention performance can be improved.

Since the recording member 20 is sealed in an inner portion of the laminate 1, an influence of moisture on the recording member 20 can be reduced.

Since the recording member 20 includes the heat insulating layers 23, 26, and 29, the thickness of the recording member 20 can be made equal to the thickness of the intermediate layer 13 by adjusting the thicknesses of the heat insulating layers 23, 26, and 29. Therefore, it is possible to suppress occurrence of a physical level difference at a boundary between the recording member 20 and the intermediate layer 13.

### <1-2 Laminate 2>

### [Configuration of laminate 2]

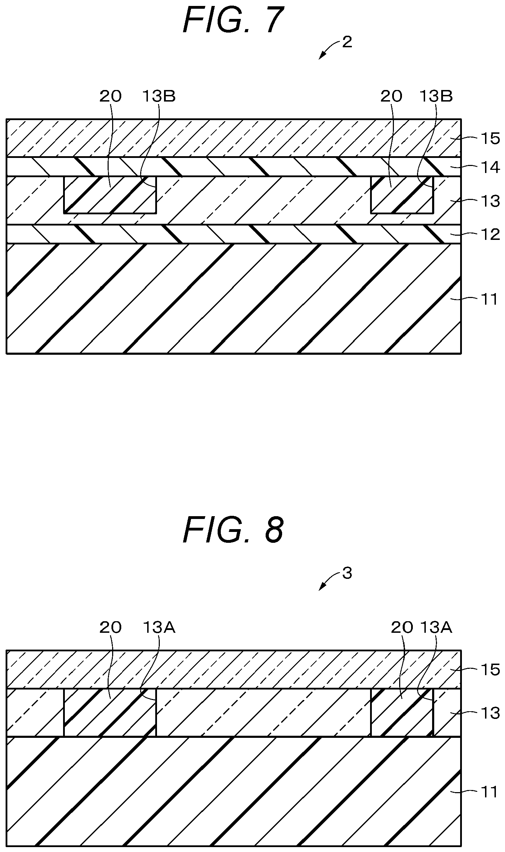

Fig. 7 is a cross-sectional view illustrating a configuration example of a laminate 2. The laminate 2 is different from the laminate 1 in that the intermediate layer 13 has a housing portion 13B instead of the housing portion 13A. The housing portion 13B is a bottomed recess recessed in a thickness direction of the intermediate layer 13. The housing portion 13B may be provided on a main surface on a side facing the overlay layer 15 or on a main surface on a side facing the base material 11 out of both main surfaces of the intermediate layer 13.

### [Operations and Effects]

In the laminate 2, operations and effects similar to those of the laminate 1 can be obtained.

### <1-3 Laminate 3>

### [Configuration of laminate 4]

Fig. 8 is a cross-sectional view illustrating a configuration example of a laminate 3. The laminate 3 is different from the laminate 1 in that the laminate 3 does not include the adhesive layer 12 or the adhesive layer 14, the base material 11 and the intermediate layer 13 are bonded to each other by fusion, and the intermediate layer 13 and the overlay layer 15 are bonded to each other by fusion.

In the laminate 4, each of the base material 11, the intermediate layer 13, and the overlay layer 15 preferably contains a thermoplastic resin as plastic. With the base material 11, the intermediate layer 13, and the overlay layer 15 each containing the thermoplastic resin, an interlayer adhesion strength by fusion can be enhanced. The thermoplastic resin is preferably capable of thermally fusing layers of the laminate 3 to each other in a temperature range of 130°C or higher and 200°C or lower from a viewpoint of reducing damage to the recording member 20.

The base material 11, the intermediate layer 13, and the overlay layer 15 may contain the same type of thermoplastic resin, or the base material 11, the intermediate layer 13, and the overlay layer 15 do not have to contain the same type of thermoplastic resin. In a case where the base material 11, the intermediate layer 13, and the overlay layer 15 do not contain the same type of thermoplastic resin, one layer of the base material 11, the intermediate layer 13, and the overlay layer 15 may contain a thermoplastic resin different in type from the other two layers, or the base material 11, the intermediate layer 13, and the overlay layer 15 may contain thermoplastic resins different in type from each other.

In a case where the base material 11, the intermediate layer 13, and the overlay layer 15 contain the same type of thermoplastic resin, the base material 11, the intermediate layer 13, and the overlay layer 15 preferably contain at least one selected from the group consisting of a semi-crystalline thermoplastic resin and a non-crystalline thermoplastic resin from a viewpoint of improving the interlayer adhesion strength by fusion.

The semi-crystalline thermoplastic resin includes, for example, at least one selected from the group consisting of polypropylene (PP), polyethylene (PE), polyacetal (POM), polyethylene terephthalate (PET), polybutylene terephthalate (PBT), polyphenylene sulfide (PPS), polyether ether ketone (PEEK), and the like.

The non-crystalline thermoplastic resin includes, for example, at least one selected from the group consisting of an ABS resin, polycarbonate (PC), a polymer alloy of an ABS resin and PC (hereinafter, referred to as "ABS/PC polymer alloy"), an AS resin, polystyrene (PS), polymethyl methacrylate (PMMA), polyphenylene oxide (PPO), polysulfone (PSU), polyvinyl chloride (PVC), polyetherimide (PEI), polyethersulfone (PES), and the like.

In a case where the base material 11, the intermediate layer 13, and the overlay layer 15 do not contain the same type of thermoplastic resin, the base material 11, the intermediate layer 13, and the overlay layer 15 preferably contain a non-crystalline thermoplastic resin from a viewpoint of improving the interlayer adhesion strength by fusion.

A combination of non-crystalline thermoplastic resins contained in two adjacent layers of the laminate 3 is preferably as follows. In a case where one of two adjacent layers of the laminate 3 contains an ABS resin, the other layer preferably contains at least one selected from the group consisting of an ABS/PC polymer alloy, polycarbonate (PC), an AS resin, polystyrene (PS), polymethyl methacrylate (PMMA), and polyvinyl chloride (PVC) .

In a case where one of two adjacent layers of the laminate 3 contains an ABS/PC polymer alloy, the other layer preferably contains at least one selected from the group consisting of an ABS resin, polycarbonate (PC), and polymethyl methacrylate (PMMA). In a case where one of two adjacent layers of the laminate 3 contains polycarbonate (PC), the other layer preferably contains at least one selected from the group consisting of an ABS resin, an ABS/PC polymer alloy, and polymethyl methacrylate (PMMA).

In a case where one of two adjacent layers of the laminate 3 contains an AS resin, the other layer preferably contains at least one selected from the group consisting of an ABS resin, polystyrene (PS), polymethyl methacrylate (PMMA), and polyphenylene oxide (PPO). In a case where one of two adjacent layers of the laminate 3 contains polystyrene (PS), the other layer preferably contains at least one selected from the group consisting of an AS resin and polyphenylene oxide (PPO).

In a case where one of two adjacent layers of the laminate 3 contains polymethyl methacrylate (PMMA), the other layer preferably contains at least one selected from the group consisting of an ABS resin, an ABS/PC polymer alloy, an AS resin, and polyphenylene oxide (PPO). In a case where one of two adjacent layers of the laminate 3 contains polyphenylene oxide (PPO), the other layer preferably contains at least one selected from the group consisting of polycarbonate (PC), an AS resin, polystyrene (PS), and polymethyl methacrylate (PMMA).

In a case where one of two adjacent layers of the laminate 3 contains polysulfone (PSU), the other layer preferably contains polycarbonate (PC). In a case where one of two adjacent layers of the laminate 3 contains polyvinyl chloride (PVC), the other layer preferably contains an ABS resin.

### [Method for manufacturing laminate 3]

Hereinafter, an example of a method for manufacturing the laminate 3 will be described.

First, the intermediate layer 13 is placed on one main surface of the base material 11, and then the recording member 20 is fitted into the housing portion 13A of the intermediate layer 13. Note that the intermediate layer 13 in which the recording member 20 is fitted in advance into the housing portion 13A may be placed on one main surface of the base material 11. Next, the overlay layer 15 is placed on the intermediate layer 13. Next, the obtained laminate is sandwiched between metal plates and pressurized while being heated to thermally fuse the base material 11 and the intermediate layer 13 to each other and to thermally fuse the intermediate layer 13 and the overlay layer 15 to each other. A temperature applied to the laminate during the thermal fusion is preferably 130°C or higher and 200°C or lower from a viewpoint of reducing damage to the recording member 20 and a viewpoint of exhibiting a sufficient fusion strength. As a result, the target laminate 3 is obtained.

### [Operations and Effects]

As described above, in the laminate 3, the base material 11 and the intermediate layer 13 are fused to each other, and the intermediate layer 13 and the overlay layer 15 are fused to each other. With this configuration, the base material 11 and the intermediate layer 13 can be firmly bonded to each other, and the intermediate layer 13 and the overlay layer 15 can be firmly bonded to each other. Therefore, forgery prevention performance of the laminate 3 can be improved. Furthermore, tamper prevention performance of the laminate 3 can be improved. Therefore, security of the laminate 3 can be improved.

### <1-4 Laminate 4>

### [Configuration of laminate 4]

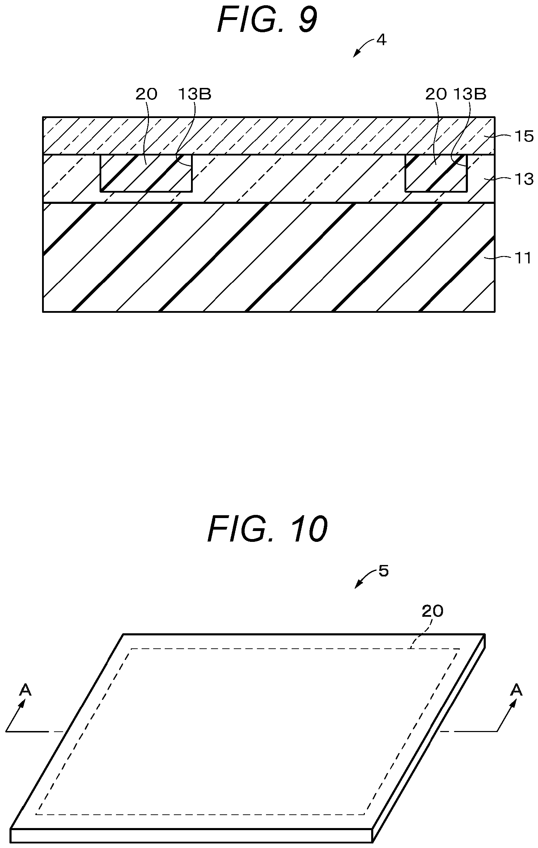

Fig. 9 is a cross-sectional view illustrating a configuration example of a laminate 4. The laminate 4 is different from the laminate 3 in that the intermediate layer 13 has the housing portion 13B instead of the housing portion 13A. The housing portion 13B is a bottomed recess recessed in a thickness direction of the intermediate layer 13. The housing portion 13B may be provided on a main surface on a side facing the overlay layer 15 or on a main surface on a side facing the base material 11 out of both main surfaces of the intermediate layer 13.

### [Operations and Effects]

In the laminate 4, operations and effects similar to those of the laminate 3 can be obtained.

### <1-5 Laminate 5>

### [Configuration of laminate 5]

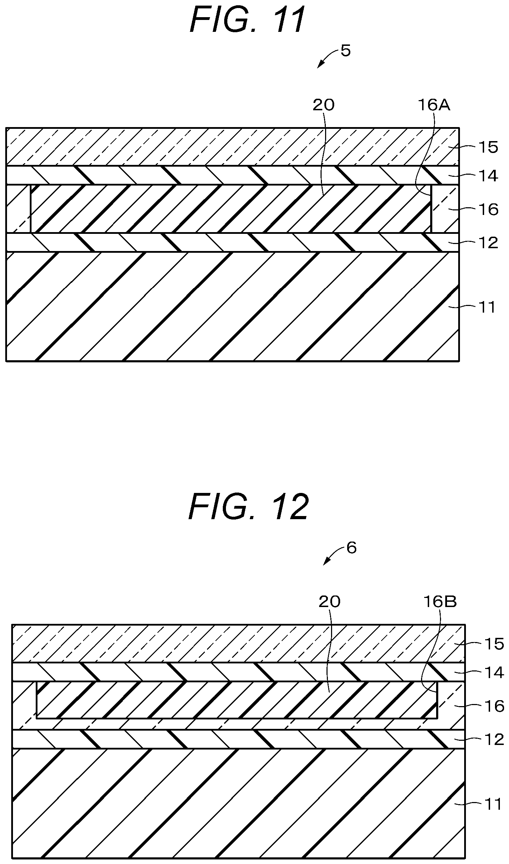

Fig. 10 is a perspective view illustrating an appearance example of a laminate 5. Fig. 11 is a cross-sectional view taken along line A-A in Fig. 10. The laminate 5 includes the base material 11, the adhesive layer 12, an intermediate layer 16, the adhesive layer 14, the overlay layer 15, and the recording member 20. Note that, in the laminate 5, a portion similar to that in the laminate 1 is denoted by the same reference sign and description thereof is omitted.

### (Intermediate layer 16)

The intermediate layer 16 can protect a side surface of the recording member 20. The intermediate layer 16 surrounds a peripheral edge portion of one main surface of the base material 11. The intermediate layer 16 has a frame shape in plan view. In the present specification, the peripheral edge portion of one main surface refers to a region having a predetermined width from a peripheral edge of one main surface toward the inside. Furthermore, in the present specification, the plan view means plan view when an object is viewed from a direction perpendicular to one main surface of the base material 11.

The intermediate layer 16 includes a housing portion 16A. The recording member 20 is housed in the housing portion 16A. The housing portion 16A is a through hole penetrating the recording member 20 in a thickness direction thereof. The intermediate layer 16 and the recording member 20 preferably have substantially the same thickness. As a result, it is possible to suppress occurrence of a level difference at a boundary between the intermediate layer 16 and the recording member 20 in a state where the recording member 20 is housed in the housing portion 16A.

The intermediate layer 16 has a film shape. The intermediate layer 16 may have transparency. The intermediate layer 16 contains plastic. As the plastic, a material similar to that of the base material 11 can be exemplified.

### (Intermediate layer)

An intermediate layer 35A is similar to the intermediate layer 32B of the recording member 20 except that the heat insulating layer 26 is adjacent to the color development layer 24 and the pressure-sensitive adhesive layer 25 is adjacent to the color development layer 27. An intermediate layer 35B is similar to the intermediate layer 32C of the recording member 20 except that the heat insulating layer 29 is adjacent to the color development layer 27 and the pressure-sensitive adhesive layer 28 is adjacent to the color development layer 30. An intermediate layer 35C is similar to the intermediate layer 32D of the recording member 20 except that the heat insulating layer 34 is adjacent to the color development layer 30 and the pressure-sensitive adhesive layer 33 is adjacent to a protective layer 36.

### (Protective layer 36)

The protective layer 36 includes an ultraviolet-curable resin layer 36A, a UV cut layer 36B, a pressure-sensitive adhesive layer 36C, and a base material 36D in order on one main surface of the intermediate layer 35C. The ultraviolet-curable resin layer 36A can protect a surface of the recording member 20. The ultraviolet-curable resin layer 36A may have a function as a heat insulating layer and/or a diffusion preventing layer. The UV cut layer 36B can cut ultraviolet rays incident on the color development layers 24, 27, and 30.

The pressure-sensitive adhesive layer 36C can bond the UV cut layer 36B and the base material 36D to each other.

As a material of the pressure-sensitive adhesive layer 36C, a material similar to that of the pressure-sensitive adhesive layers 22, 25, and 28 can be exemplified. The base material 36D can support the ultraviolet-curable resin layer 36A, the UV cut layer 36B, and the pressure-sensitive adhesive layer 36C. The base material 36D can protect a surface of the recording member 20. As a material of the base material 36D, for example, a material similar to that of the base material 11 can be exemplified.

### [Operations and Effects]

In the laminate 5, operations and effects similar to those of the laminate 1 can be obtained.

### <1-6 Laminate 6>

### [Configuration of laminate 6]

Fig. 12 is a cross-sectional view illustrating a configuration example of a laminate 6. The laminate 6 is different from the laminate 6 in that the intermediate layer 16 has a housing portion 16B instead of the housing portion 16A. The housing portion 16B is a bottomed recess recessed in a thickness direction of the intermediate layer 16. The housing portion 16B may be provided on a main surface on a side facing the overlay layer 15 or on a main surface on a side facing the base material 11 out of both main surfaces of the intermediate layer 13.

### [Operations and Effects]

In the laminate 6, operations and effects similar to those of the laminate 5 can be obtained.

### <1-7 Laminate 7>

### [Configuration of laminate 7]

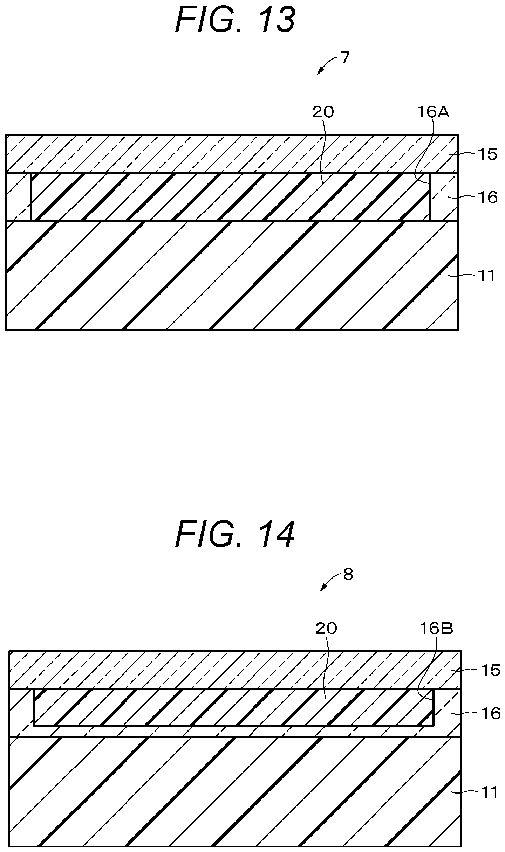

Fig. 13 is a cross-sectional view illustrating a configuration example of a laminate 7. The laminate 7 is different from the laminate 3 in including the intermediate layer 16 instead of the intermediate layer 13. The intermediate layer 16 is as described in the configuration of the laminate 5.

### [Operations and Effects]

In the laminate 7, operations and effects similar to those of the laminate 3 can be obtained.

### <1-8 Laminate 8>

### [Configuration of laminate 8]

Fig. 14 is a cross-sectional view illustrating a configuration example of a laminate 8. The laminate 8 is different from the laminate 7 in that the intermediate layer 16 has the housing portion 16B instead of the housing portion 16A. The housing portion 16B is a bottomed recess recessed in a thickness direction of the intermediate layer 16. The housing portion 16B may be provided on a main surface on a side facing the overlay layer 15 or on a main surface on a side facing the base material 11 out of both main surfaces of the intermediate layer 16.

### [Operations and Effects]

In the laminate 8, operations and effects similar to those of the laminate 7 can be obtained.

### <2 Recording member>

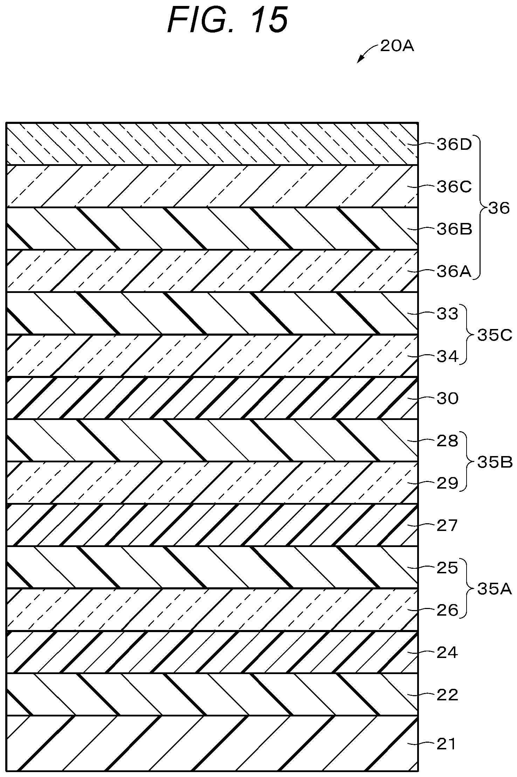

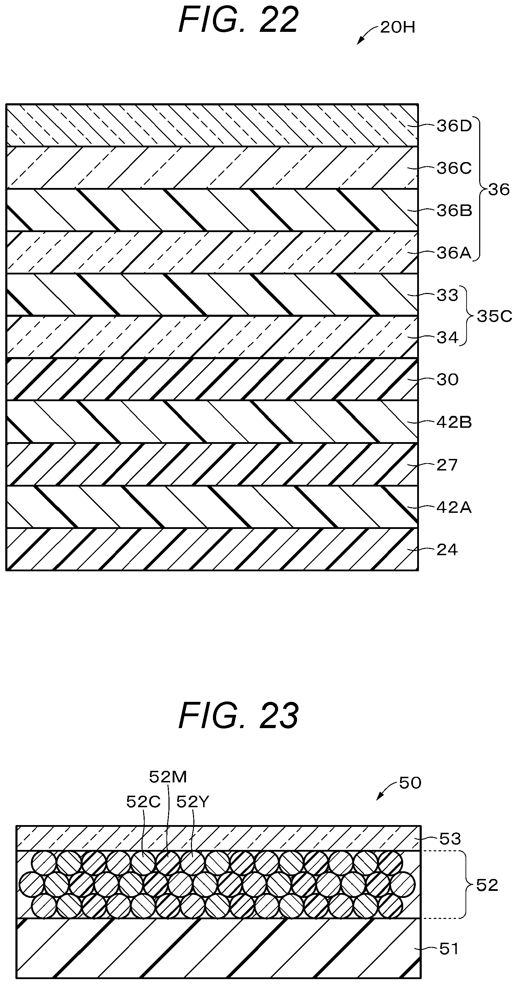

In the above description of the laminates 1 to 6, the example in which the laminates 1 to 6 each include the recording member 20 has been described. However, the laminates 1 to 6 may each include any one of recording members 20A to 20H illustrated in Figs. 15 to 22, or may include a recording member 50 illustrated in Fig. 23. Alternatively, the laminates 1 to 6 may each include another recording member. Hereinafter, these recording members will be sequentially described.

### <2-1 Recording member 20A>

Fig. 15 is a cross-sectional view illustrating a configuration example of the recording member 20A. The recording member 20A includes the base material 21, the pressure-sensitive adhesive layer 22, the color development layer 24, the intermediate layer 35A, the color development layer 27, the intermediate layer 35B, the color development layer 30, the intermediate layer 35C, and the protective layer 36 in this order. More specifically, the recording member 20A includes the base material 21, the pressure-sensitive adhesive layer 22, the color development layer 24, the heat insulating layer 26, the pressure-sensitive adhesive layer 25, the color development layer 27, the heat insulating layer 29, the pressure-sensitive adhesive layer 28, the color development layer 30, the heat insulating layer 34, the pressure-sensitive adhesive layer 33, and the protective layer 36 in this order. The heat insulating layers 26, 29, and 34 are provided as necessary, and do not have to be provided. The recording member 20A is housed in the housing portion 16A of the intermediate layer 16 such that the base material 21 is on a side of the adhesive layer 12 and the protective layer 31 is on a side of the adhesive layer 14.

### (Intermediate layers 35A, 35B, and 35C)

An intermediate layer 35A is similar to the intermediate layer 32B of the recording member 20 except that the heat insulating layer 26 is adjacent to the color development layer 24 and the pressure-sensitive adhesive layer 25 is adjacent to the color development layer 27. An intermediate layer 35B is similar to the intermediate layer 32C of the recording member 20 except that the heat insulating layer 29 is adjacent to the color development layer 27 and the pressure-sensitive adhesive layer 28 is adjacent to the color development layer 30. An intermediate layer 35C is similar to the intermediate layer 32D of the recording member 20 except that the heat insulating layer 34 is adjacent to the color development layer 30 and the pressure-sensitive adhesive layer 33 is adjacent to a protective layer 36.

### (Protective layer 36)

The protective layer 36 includes an ultraviolet-curable resin layer 36A, a UV cut layer 36B, a pressure-sensitive adhesive layer 36C, and a base material 36D in order on one main surface of the intermediate layer 35C. The ultraviolet-curable resin layer 36A can protect a surface of the recording member 20A. The ultraviolet-curable resin layer 36A may have a function as a heat insulating layer and/or a diffusion preventing layer. The UV cut layer 36B can cut ultraviolet rays incident on the color development layers 24, 27, and 30.

The pressure-sensitive adhesive layer 36C can bond the UV cut layer 36B and the base material 36D to each other.

As a material of the pressure-sensitive adhesive layer 36C, a material similar to that of the pressure-sensitive adhesive layers 22, 25, and 28 can be exemplified. The base material 36D can support the ultraviolet-curable resin layer 36A, the UV cut layer 36B, and the pressure-sensitive adhesive layer 36C. The base material 36D can protect a surface of the recording member 20A. As a material of the base material 36D, for example, a material similar to that of the base material 11 can be exemplified.

### <2-2 Recording member 20B>

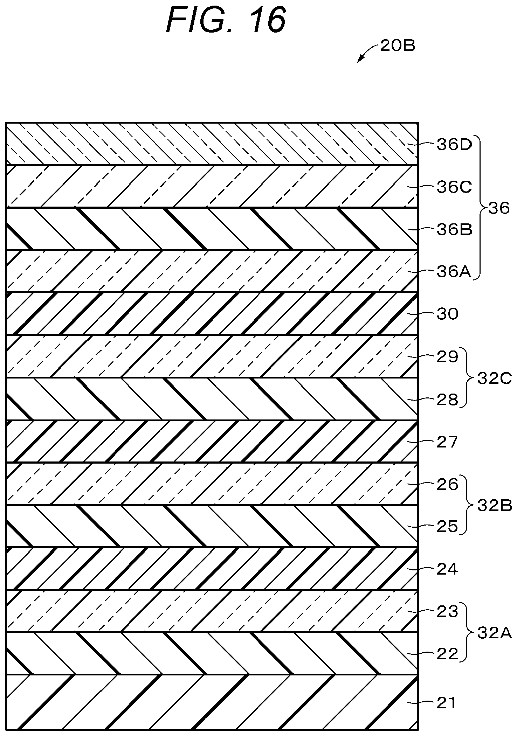

Fig. 16 is a cross-sectional view illustrating a configuration example of the recording member 20B. The recording member 20B is different from the recording member 20 in including the protective layer 36 instead of the protective layer 31. The protective layer 36 is as described in the description of the recording member 20A.

### <2-3 Recording member 20C>

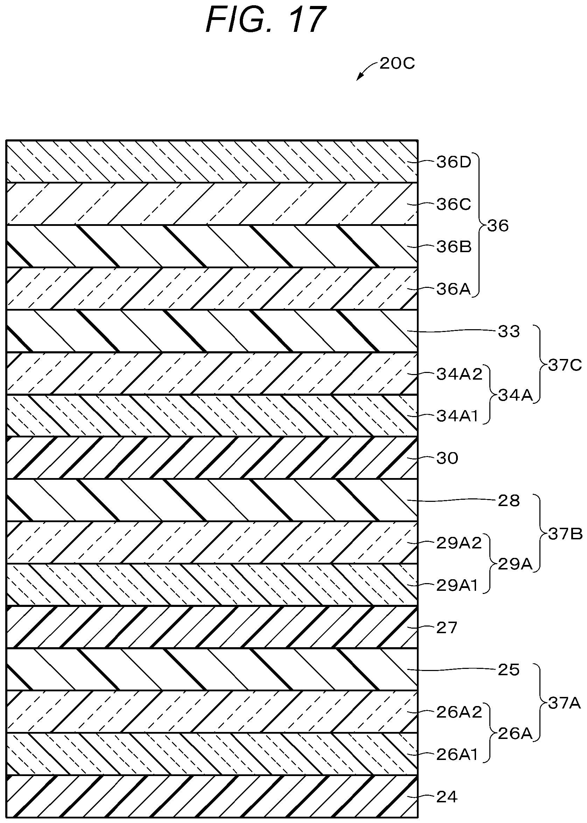

Fig. 17 is a cross-sectional view illustrating a configuration example of the recording member 20C. The recording member 20C is different from the recording member 20A in including intermediate layers 37A, 37B, and 37C instead of the intermediate layers 35A, 35B, and 35C. The recording member 20C does not have to include the base material 21 or the pressure-sensitive adhesive layer 22.

The intermediate layer 37A includes a heat insulating layer 26A and the pressure-sensitive adhesive layer 25 in order on one main surface of the color development layer 24. The heat insulating layer 26A includes a resin layer 26A1 and an ultraviolet-curable resin layer 26A2 in order on one main surface of the color development layer 24. The resin layer 26A1 is provided between the color development layer 24 and the ultraviolet-curable resin layer 26A2. The resin layer 26A1 can improve adhesion between the color development layer 24 and the ultraviolet-curable resin layer 26A2. The resin layer 26A1 contains the same type of resin material as the matrix polymer contained in the color development layer 24. For example, in a case where the color development layer 24 contains a polycarbonate-based resin as the matrix polymer, the resin layer 26A1 contains a polycarbonate-based resin. The ultraviolet-curable resin layer 26A2 is similar to the ultraviolet-curable resin layer of the heat insulating layer 26 in the recording member 20A.

The intermediate layer 37B includes a heat insulating layer 29A and the pressure-sensitive adhesive layer 28 in order on one main surface of the color development layer 27. The heat insulating layer 29A includes a resin layer 29A1 and an ultraviolet-curable resin layer 29A2 in order on one main surface of the color development layer 27. The resin layer 29A1 is provided between the color development layer 27 and the ultraviolet-curable resin layer 29A2. The resin layer 29A1 can improve adhesion between the color development layer 27 and the ultraviolet-curable resin layer 29A2. The resin layer 29A1 contains the same type of resin material as the matrix polymer contained in the color development layer 27. For example, in a case where the color development layer 27 contains a polycarbonate-based resin as the matrix polymer, the resin layer 29A1 contains a polycarbonate-based resin. The ultraviolet-curable resin layer 29A2 is similar to the ultraviolet-curable resin layer of the heat insulating layer 29 in the recording member 20A.

The intermediate layer 37C includes a heat insulating layer 34A and the pressure-sensitive adhesive layer 33 in order on one main surface of the color development layer 30. The heat insulating layer 34A includes a resin layer 34A1 and an ultraviolet-curable resin layer 34A2 in order on one main surface of the color development layer 30. The resin layer 34A1 is provided between the color development layer 30 and the ultraviolet-curable resin layer 34A2. The resin layer 34A1 can improve adhesion between the color development layer 30 and the ultraviolet-curable resin layer 34A2. The resin layer 34A1 contains the same type of resin material as the matrix polymer contained in the color development layer 30. For example, in a case where the color development layer 30 contains a polycarbonate-based resin as the matrix polymer, the resin layer 34A1 contains a polycarbonate-based resin. The ultraviolet-curable resin layer 34A2 is similar to the ultraviolet-curable resin layer of the heat insulating layer 34 in the recording member 20A.

A reason why the resin layer 26A1 is provided between the color development layer 24 and the ultraviolet-curable resin layer 26A2 is as follows. In a case where the color development layer 24 contains a particulate developer, the particulate developer is distributed on a surface of the color development layer 24. Therefore, in a case where the color development layer 24 and the ultraviolet-curable resin layer 26A2 are adjacent to each other, adhesion may be reduced. As described above, with the resin layer 34A1 being adjacent to the color development layer 24 and the resin layer 34A1 containing the same type of resin material as the matrix polymer contained in the color development layer 24, adhesion at an interface other than a portion where the developer is distributed can be improved. Therefore, it is possible to compensate for a decrease in adhesion due to the particulate developer.

A reason why the resin layer 29A1 is provided between the color development layer 27 and the ultraviolet-curable resin layer 29A2 and a reason why the resin layer 34A1 is provided between the color development layer 30 and the ultraviolet-curable resin layer 34A2 are similar to the reason why the resin layer 26A1 is provided between the color development layer 24 and the ultraviolet-curable resin layer 26A2.

### <2-4 Recording member 20D>

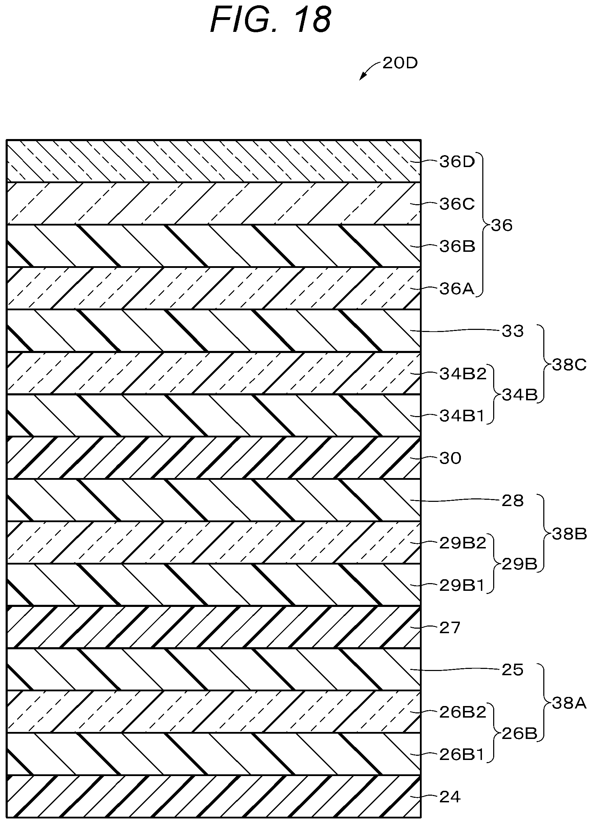

Fig. 18 is a cross-sectional view illustrating a configuration example of the recording member 20D. The recording member 20D is different from the recording member 20A in including intermediate layers 38A, 38B, and 38C instead of the intermediate layers 35A, 35B, and 35C.

The intermediate layer 38A includes a heat insulating layer 26B and the pressure-sensitive adhesive layer 25 in order on one main surface of the color development layer 24.

The heat insulating layer 26B includes a pressure-sensitive adhesive layer 26B1 and an ultraviolet-curable resin layer 26B2 in order on one main surface of the color development layer 24. The pressure-sensitive adhesive layer 26B1 is provided between the color development layer 24 and the ultraviolet-curable resin layer 26B2. The pressure-sensitive adhesive layer 26B1 can bond the color development layer 24 and the ultraviolet-curable resin layer 26B2 to each other. Since the pressure-sensitive adhesive layer 26B1 is provided between the color development layer 24 and the ultraviolet-curable resin layer 26B2, it is possible to compensate for a decrease in adhesion due to the developer contained in the color development layer 24. As a material of the pressure-sensitive adhesive layer 26B1, a material similar to that of the pressure-sensitive adhesive layers 22, 25, and 28 can be exemplified.

The intermediate layer 38B includes a heat insulating layer 29B and the pressure-sensitive adhesive layer 28 in order on one main surface of the color development layer 27.

The heat insulating layer 29B includes a pressure-sensitive adhesive layer 29B1 and an ultraviolet-curable resin layer 29B2 in order on one main surface of the color development layer 27. The pressure-sensitive adhesive layer 29B1 is provided between the color development layer 27 and the ultraviolet-curable resin layer 29B2. The pressure-sensitive adhesive layer 29B1 can bond the color development layer 27 and the ultraviolet-curable resin layer 29B2 to each other. Since the pressure-sensitive adhesive layer 29B1 is provided between the color development layer 27 and the ultraviolet-curable resin layer 29B2, it is possible to compensate for a decrease in adhesion due to the developer contained in the color development layer 27. As a material of the pressure-sensitive adhesive layer 29B1, a material similar to that of the pressure-sensitive adhesive layers 22, 25, and 28 can be exemplified.

The intermediate layer 38C includes a heat insulating layer 34B and the pressure-sensitive adhesive layer 33 in order on one main surface of the color development layer 30.

The heat insulating layer 34B includes a pressure-sensitive adhesive layer 34B1 and an ultraviolet-curable resin layer 34B2 in order on one main surface of the color development layer 30. The pressure-sensitive adhesive layer 34B1 is provided between the color development layer 30 and the ultraviolet-curable resin layer 34B2. The pressure-sensitive adhesive layer 34B1 can bond the color development layer 30 and the ultraviolet-curable resin layer 34B2 to each other. Since the pressure-sensitive adhesive layer 34B1 is provided between the color development layer 30 and the ultraviolet-curable resin layer 34B2, it is possible to compensate for a decrease in adhesion due to the developer contained in the color development layer 30. As a material of the pressure-sensitive adhesive layer 34B1, a material similar to that of the pressure-sensitive adhesive layers 22, 25, and 28 can be exemplified.

### <2-5 Recording member 20E>

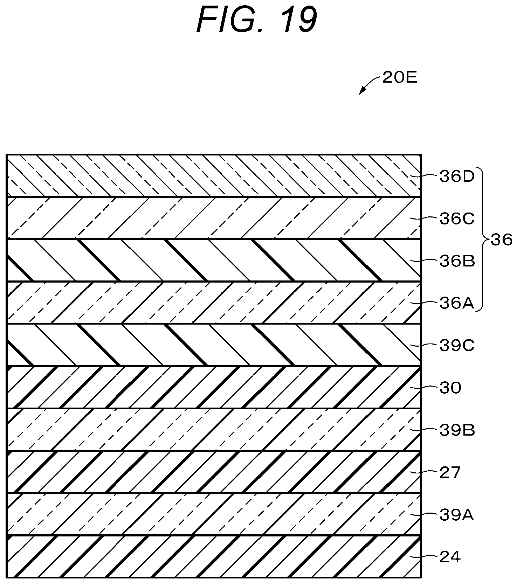

Fig. 19 is a cross-sectional view illustrating a configuration example of the recording member 20E. The recording member 20E is different from the recording member 20A in including intermediate layers 39A, 39B, and 39C instead of the intermediate layers 35A, 35B, and 35C. The recording member 20E does not have to include the base material 21 or the pressure-sensitive adhesive layer 22.

Each of the intermediate layers 39A and 39B is a film. The film is preferably a film that has been subjected to easy adhesion treatment. As a material of the film, a material similar to that of the base material 11 can be exemplified. Examples of the easy adhesion treatment include primer treatment, active energy ray irradiation treatment, plasma treatment, corona treatment, vapor deposition treatment, etching treatment, sandblast treatment, and the like. One or a combination of two or more types thereof can be selected from these. The primer treatment may be primer treatment with a resin, a silane coupling agent, a tetraalkoxysilane, or the like.

Since the film that has been subjected to the easy adhesion treatment as the intermediate layer 39A is provided between the color development layer 24 and the color development layer 27, it is possible to compensate for a decrease in adhesion due to the developer contained in the color development layer 24. Since the film that has been subjected to the easy adhesion treatment as the intermediate layer 39B is provided between the color development layer 27 and the color development layer 30, it is possible to compensate for a decrease in adhesion due to the developer contained in the color development layer 27.

The intermediate layer 39C is a pressure-sensitive adhesive layer. As a material of the pressure-sensitive adhesive layer, a material similar to that of the pressure-sensitive adhesive layers 22, 25, and 28 can be exemplified. Since the pressure-sensitive adhesive layer is provided as the intermediate layer 39C between the color development layer 30 and the protective layer 36, it is possible to compensate for a decrease in adhesion due to the developer contained in the color development layer 30.

### <2-6 Recording member 20F>

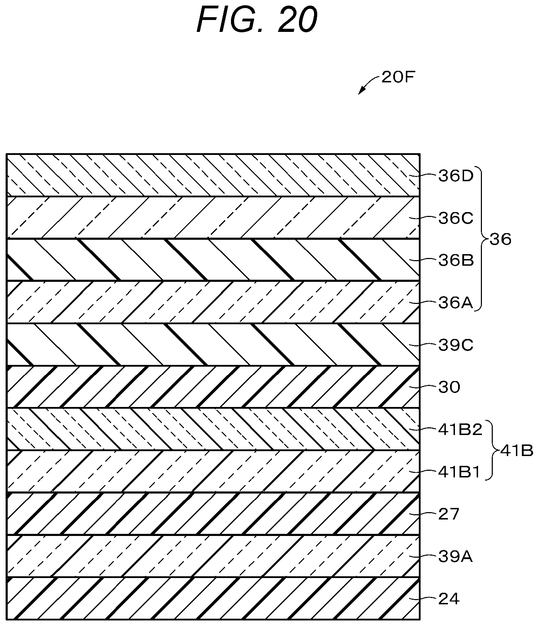

Fig. 20 is a cross-sectional view illustrating a configuration example of the recording member 20F. The recording member 20F is different from the recording member 20E in Modification 9 in including an intermediate layer 41B instead of the intermediate layer 39B.

The intermediate layer 41B includes a resin layer 41B1 and a resin layer 41B2 in order on one main surface of the color development layer 27. The resin layer 41B1 contains the same type of resin material as the matrix polymer contained in the color development layer 27. For example, in a case where the color development layer 27 contains a polycarbonate-based resin as the matrix polymer, the resin layer 41B1 contains a polycarbonate-based resin. The resin layer 41B2 is a film. The film is preferably a film that has been subjected to easy adhesion treatment. As a material of the film, a material similar to that of the base material 11 can be exemplified.

As described above, since the resin layer 41B1 is provided between the color development layer 27 and the resin layer 41B2, it is possible to compensate for a decrease in adhesion due to the developer contained in the color development layer 27.

### <2-7 Recording member 20G>

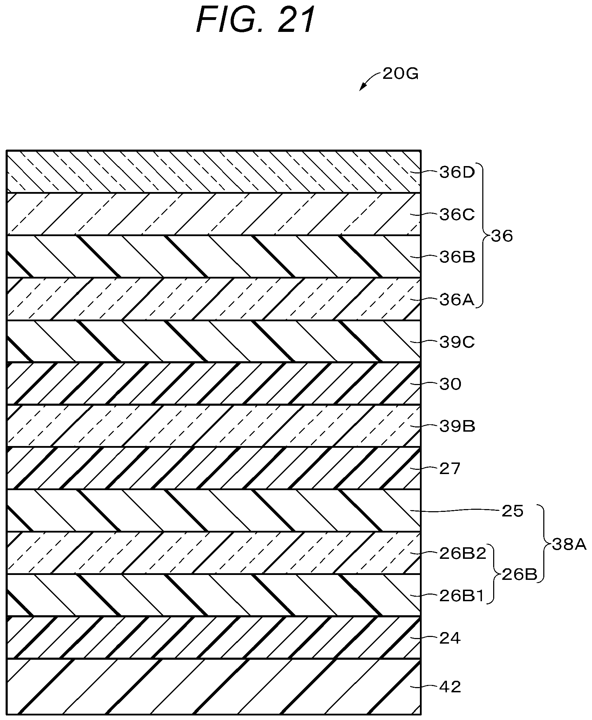

Fig. 21 is a cross-sectional view illustrating a configuration example of the recording member 20G. The recording member 20G is different from the recording member 20E in Modification 9 in including an intermediate layer 38A instead of the intermediate layer 39A and including a base material 42.

The intermediate layer 38A is as described in the recording member 20D. The base material 42 is provided adjacent to the other surface of the color development layer 24. The base material 42 is a film that has been subjected to easy adhesion treatment. As a material of the film, a material similar to that of the base material 11 can be exemplified.

### <2-8 Recording member 20H>

Fig. 22 is a cross-sectional view illustrating a configuration example of the recording member 20H. The recording member 20H is different from the recording member 20A in including intermediate layers 42A and 42B instead of the intermediate layers 35A and 35B.

Each of the intermediate layers 42A and 42B is a pressure-sensitive adhesive layer. As a material of the pressure-sensitive adhesive layer, a material similar to that of the pressure-sensitive adhesive layers 22, 25, and 28 can be exemplified.

### <2-9 Recording member 50>

Fig. 23 is a cross-sectional view illustrating a configuration example of the recording member 50. Each of the above-described recording members 20 and 20A to 20H includes three color development layers (color development layers 24, 27, and 30) having color hues different from each other, and therefore can perform multicolor display. On the other hand, the recording member 50 has a single layer structure capable of multicolor display.

The recording member 50 includes a base material 51, a color development layer 52, and a protective layer 53 in this order. The base material 51 and the protective layer 53 are similar to the base material 21 and the protective layer 31 in the first embodiment, respectively.

The color development layer 52 includes three types of microcapsules 52C, 52M, and 52Y having color hues different from each other. That is, the color development layer 52 includes the three types of microcapsules 52C, 52M, and 52Y that exhibit different colors, respectively, in a color-developed state. The color development layer 52 may contain a first matrix polymer as necessary. The three types of microcapsules 52C, 52M, and 52Y contain, for example, coloring compounds exhibiting colors different from each other (for example, a cyan color (C), a magenta color (M), and a yellow color (Y)), developers corresponding to the coloring compounds, photothermal conversion materials that generate heat by absorbing light in wavelength ranges different from each other, and second matrix polymers, respectively. As a material of a microcapsule wall containing the above-described materials, for example, it is preferable to use a material similar to the material constituting the above-described heat insulating layers 23, 26, and 29.

### <2-10 Other recording members>

The above-described recording members (excluding the recording member 50) each have a configuration including three color development layers (color development layers 24, 27, and 30). However, the number of color development layers of the recording member is not limited thereto. For example, the recording member may include one color development layer, or may include a plurality of color development layers other than three color development layers (that is, two color development layers or four or more color development layers). Also in this case, an intermediate layer may be provided between the laminated color development layers. The plurality of color development layers may be capable of exhibiting hues different from each other in a color-developed state. That is, the coloring compounds contained in the plurality of color development layers may be capable of exhibiting hues different from each other in a color-developed state. The photothermal conversion agents contained in the respective plurality of color development layers may have absorption wavelength peaks different from each other.

The recording member may include an intermediate layer including a recording member capable of rewriting a pattern or the like by an external stimulus such as laser light or heat. More specifically, the recording member may include an intermediate layer including a recording member capable of reversibly changing a colored state by an external stimulus such as laser light or heat. The recording member may have a configuration capable of performing full-color recording, or may have a configuration capable of performing single-color recording such as monochrome recording.

### <3 First Embodiment>

### [Configuration of recording body 100]

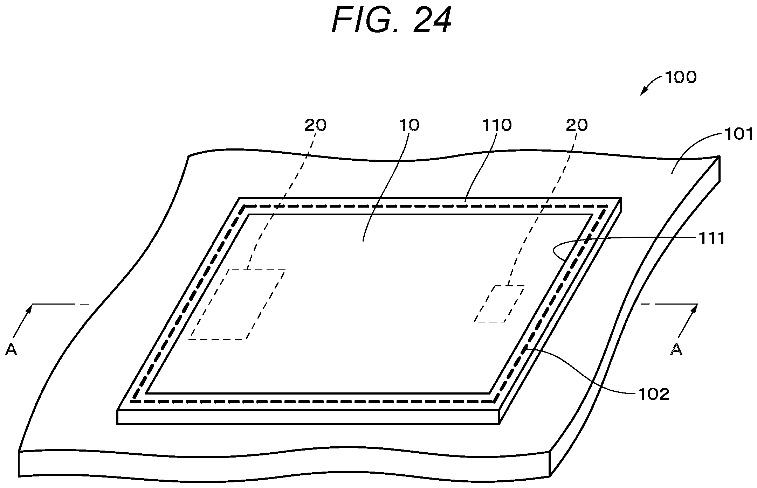

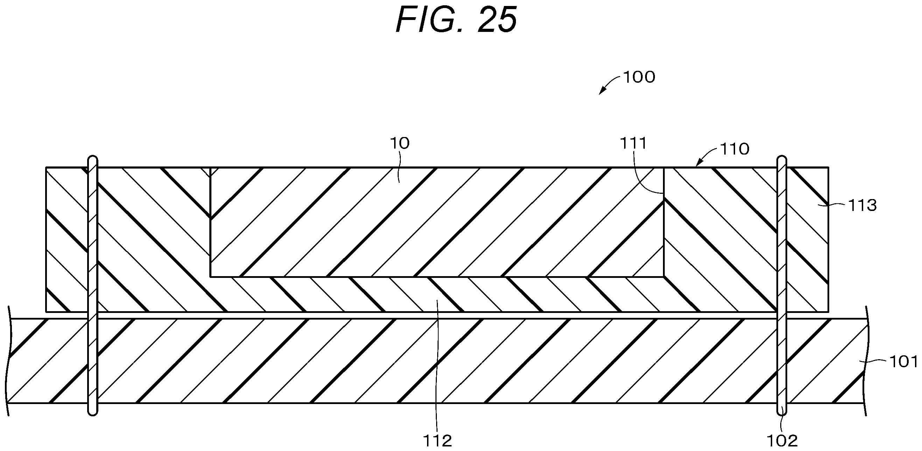

Fig. 24 is a perspective view illustrating an appearance example of a recording body 100 according to a first embodiment. Fig. 25 is a cross-sectional view taken along line A-A in Fig. 24. The recording body 100 may be a tag (for example, a product tag) or a plate (for example, a logo plate) used to verify that an article 101 is a genuine product. The recording body 100 may be connected to the article 101 by at least one connection member 102. The recording body 100 includes a laminate 10 and an exterior material 110.

In order to make the recording body 100 easily bent, the recording body 100 may include a plurality of divided elements, and the divided elements may be connected to each other by a connection member. A cut may be made in the recording body 100 in advance. Alternatively, the recording body 100 may include an elastic base material as a constituent member. In order to prevent the recording body 100 from being bent, the recording body 100 may include a rigid holder.

### (Article 101)

The article 101 is, for example, a leather product including leather or a cloth product including cloth. The article 101 is specifically, for example, a bag, a wallet, clothes, or the like.

### (Connection member 102)

The connection member 102 can connect the exterior material 110 and the article 101 to each other.

The connection member 102 is a yarn, a pin, a rivet, or the like.

### (Laminate 10)

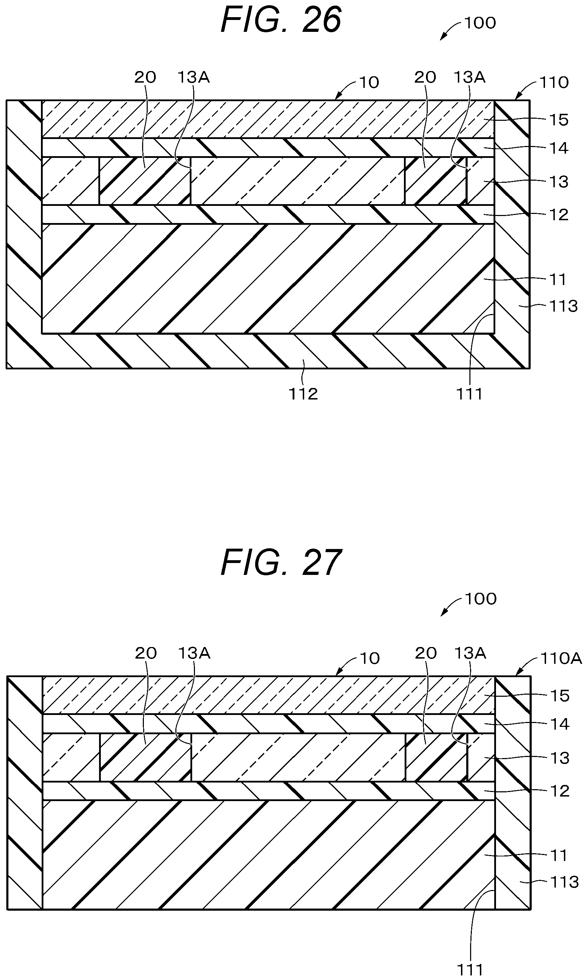

Fig. 26 is a cross-sectional view illustrating a configuration example of the laminate 10. Authentication information may be included in the laminate 10, specifically, the recording member 20. The authentication information may be information for proving whether the article 101 provided with the recording body 100 is a genuine product.

Examples of the authentication information include a serial number, a QR code (registered trademark), fine characters, random shapes (for example, artifact-metrics), parallax, and the like, and these may be used singly or in combination of two or more thereof. For example, the parallax is read at a specific angle by thickening an intermediate layer of the recording member 20.

A crack may be formed in the recording member 20. The crack may be used as authentication information for the recording body 100 as artifact-metrics. The crack is formed, for example, in a process of manufacturing the recording member 20. Specifically, for example, the crack is formed by a treatment such as pulling the recording member 20, hitting the recording member 20, pressing the recording member 20, bending the recording member 20, or rapidly cooling the recording member 20. These treatments may be performed singly or in combination of two or more types thereof.

A manufacturer, a seller, or the like of the article 101 may store authentication information in a storage device such as a cloud server or a database and manage the authentication information. In this case, a user may be able to read the authentication information stored in the laminate 10 with a reading device, and to collate the read authentication information with the authentication information stored in the storage device via the Internet or the like using a terminal device. Furthermore, in a case where the collation is obtained, the user may be able to acquire information related to the article 101 (for example, a history of the article 101 or the like) using a terminal device. The authentication information may be used for forgery prevention. For example, the authentication information may be used for authenticity determination at the time of inter-individual transaction.

A pattern, a picture, a photograph, a character, a color, or a combination of two or more thereof (hereinafter, referred to as a "pattern or the like") may be recorded in the recording body 100. As a pattern or the like recorded in the recording body 100 and a design of the recording body 100, one that does not impair designability of the article 101 is preferably selected.

The laminate 10 may be any one of the above-described laminates 1 to 8. Figs. 24 and 26 illustrate an example in which the laminate 10 is the laminate 1.

### (Exterior material 110)

The exterior material 110 covers a back surface of the laminate 10 and a side surface of the laminate 10. In the present specification, a front surface of the laminate 10 represents a main surface (first surface) on a side of the overlay layer 15 out of both main surfaces of the laminate 10, and the back surface of the laminate 10 represents a main surface (second surface) on a side of the base material 11 out of both main surfaces of the laminate 10. The exterior material 110 has a housing portion 111 on one surface side. The laminate 10 is housed in the housing portion 111. The laminate 10 may be fitted into the housing portion 111 of the exterior material 110, and the laminate 10 and the exterior material 110 may be integrated with each other. An adhesive or a pressure-sensitive adhesive may be provided between the laminate 10 and the exterior material 110, and the laminate 10 and the exterior material 110 may be bonded to each other. Alternatively, the laminate 10 and the exterior material 110 may be bonded to each other by fusion. The exterior material 110 may be light transmissive or non-light transmissive. The exterior material 110 may have transparency or may be colored.

The exterior material 110 includes a bottom portion 112 and a side wall portion 113. The bottom portion 112 covers the back surface of the laminate 10. The bottom portion 112 has a plate shape. The bottom portion 112 has the same shape as a bottom portion of the laminate 10. The side wall portion 113 covers the side surface of the laminate 10. The side wall portion 113 is perpendicularly raised from a peripheral edge portion of one main surface of the bottom portion 112. The side wall portion 113 has a closed loop shape in plan view. Here, the plan view means plan view when an object is viewed from a direction perpendicular to a main surface of the laminate 10.

The exterior material 110 contains, for example, leather, cloth, a polymer resin, metal, glass, paper, wood, or a composite of two or more materials thereof. The composite of two or more materials may be, for example, a laminate in which the two or more materials are laminated in order. Examples of the metal include a single substance such as aluminum, titanium, zinc, nickel, magnesium, copper, or iron, and an alloy containing two or more types thereof. Specific examples of the alloy include stainless used steel (SUS), an aluminum alloy, a magnesium alloy, a titanium alloy, and the like. Examples of the polymer resin include a copolymer synthetic resin of acrylonitrile, butadiene, and styrene (ABS resin), a polycarbonate (PC) resin, a PC-ABS alloy resin, and the like.

### [Modifications]

### (Modification 1)

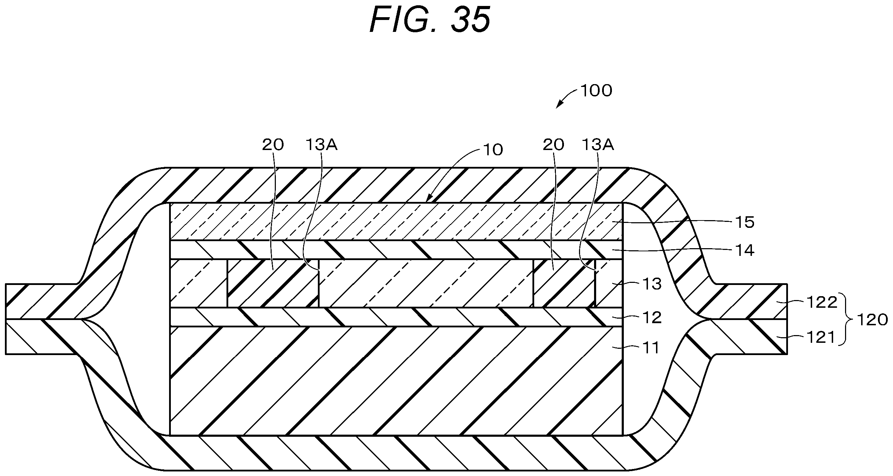

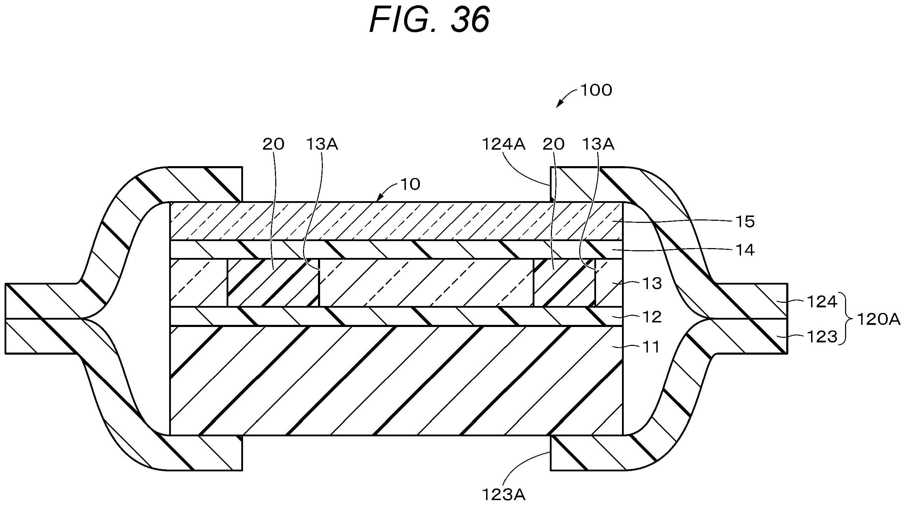

In the first embodiment, the example in which the recording body 100 includes the exterior material 110 has been described. However, the recording body 100 may include any one of exterior materials 110A to 110H illustrated in Figs. 27 to 34 instead of the exterior material 110, or may include either of an exterior material 120 and an exterior material 120A illustrated in Figs. 35 and 36. Hereinafter, the exterior materials 110A to 110H, 120, and 120A will be sequentially described. Note that, in the exterior materials 110A to 110H, 120, and 120A, similar portions to those of the exterior material 110 in the first embodiment are denoted by the same reference numerals, and description thereof is omitted.

### (Exterior material 110A)

Fig. 27 is a cross-sectional view illustrating a configuration example of the exterior material 110A. The exterior material 110A covers a side surface of the laminate 10 and opens both main surfaces of the laminate 10. The exterior material 110A includes only the side wall portion 113.

### (Exterior material 110B)

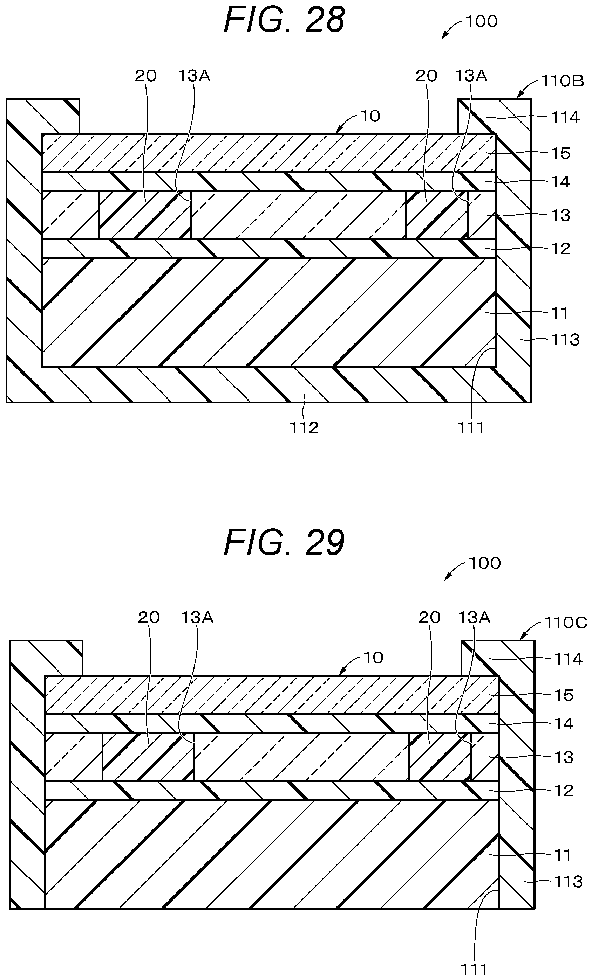

Fig. 28 is a cross-sectional view illustrating a configuration example of the exterior material 110B. The exterior material 110B covers a back surface of the laminate 10 and a side surface of the laminate 10, and covers a peripheral edge portion of a front surface of the laminate 10. Here, the peripheral edge portion of the front surface of the laminate 10 refers to a region having a predetermined width from a peripheral edge of one main surface of a front surface of the laminate 10 toward the inside. The exterior material 110B includes the bottom portion 112, the side wall portion 113, and a protruding portion 114. The protruding portion 114 covers the peripheral edge portion of the front surface of the laminate 10. The protruding portion 114 is provided at an upper end of the side wall portion 113 and protrudes in a direction perpendicular to an inner peripheral surface of the side wall portion 113.

### (Exterior material 110C)

Fig. 29 is a cross-sectional view illustrating a configuration example of the exterior material 110C. The exterior material 110C covers a side surface of the laminate 10, and covers a peripheral edge portion of a front surface of the laminate 10. The exterior material 110C includes the side wall portion 113 and the protruding portion 114.

### (Exterior material 110D)

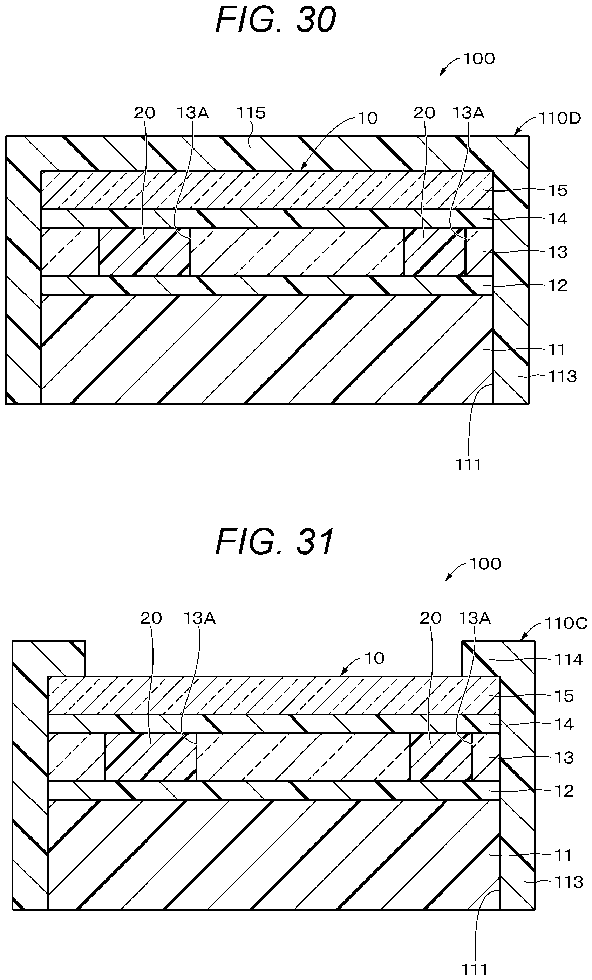

Fig. 30 is a cross-sectional view illustrating a configuration example of the exterior material 110D. The exterior material 110D covers a front surface of the laminate 10 and a side surface of the laminate 10. The exterior material 110D includes the side wall portion 113 and an upper portion 115. The upper portion 115 covers a front surface of the laminate 10. The upper portion 115 is light transmissive. The side wall portion 113 may be also light transmissive. The upper portion 115 has a plate shape. The upper portion 115 has the same shape as the front surface of the laminate 10.

### (Exterior material 110E)

Fig. 31 is a cross-sectional view illustrating a configuration example of the exterior material 110E. The exterior material 110E covers the entire surface of the laminate 10. That is, the exterior material 110E covers a back surface of the laminate 10, a side surface of the laminate 10, and a front surface of the laminate 10. The exterior material 110E includes the bottom portion 112, the side wall portion 113, and the upper portion 115. The bottom portion 112, the side wall portion 113, and the upper portion 115 may all contain the same material. The exterior material 110E is light transmissive.

### (Exterior material 110F)

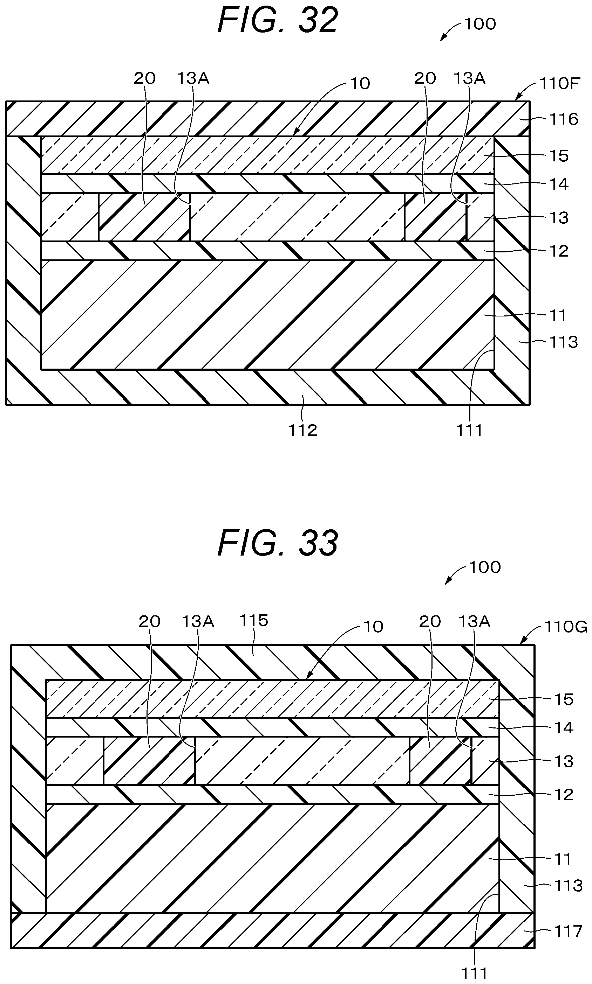

Fig. 32 is a cross-sectional view illustrating a configuration example of the exterior material 110F. The exterior material 110F includes the bottom portion 112, the side wall portion 113, and an upper portion 116. The upper portion 116 contains a material different from the bottom portion 112 and the side wall portion 113. In this case, the upper portion 116 is light transmissive, whereas the bottom portion 112 and the side wall portion 113 may be non-light transmissive.

### (Exterior material 110G)

Fig. 33 is a cross-sectional view illustrating a configuration example of the exterior material 110G. The exterior material 110G includes a bottom portion 117, the side wall portion 113, and the upper portion 115. The bottom portion 117 contains a material different from the side wall portion 113 and the upper portion 115. In this case, the side wall portion 113 and the upper portion 115 are light transmissive, whereas the bottom portion 117 may be non-light transmissive.

### (Exterior material 110H)

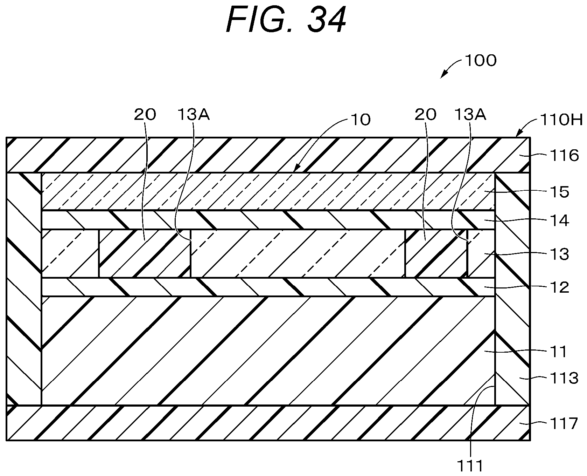

Fig. 34 is a cross-sectional view illustrating a configuration example of the exterior material 110H. The exterior material 110H includes the bottom portion 117, the side wall portion 113, and the upper portion 116. The bottom portion 117 contains a material different from the side wall portion 113. The upper portion 116 contains a material different from the side wall portion 113. The bottom portion 117 may contain a material different from the upper portion 116, or may contain the same material as the upper portion 116. The upper portion 116 is light transmissive. The bottom portion 117 and the side wall portion 113 may be light transmissive or non-light transmissive.

### (Exterior material 120)

Fig. 35 is a cross-sectional view illustrating a configuration example of the exterior material 120. The exterior material 120 includes a first exterior member 121 and a second exterior member 122. The first exterior member 121 and the second exterior member 122 are preferably flexible. The first exterior member 121 and the second exterior member 122 preferably each have a film shape. The laminate 10 is sandwiched between the first exterior member 121 and the second exterior member 122. The first exterior member 121 covers a back surface of the laminate 10. The first exterior member 121 may be light transmissive or non-light transmissive. The first exterior member 121 may be colored. The second exterior member 122 covers a front surface of the laminate 10. The second exterior member 122 is light transmissive. The second exterior member 122 may be colored.

Peripheral edge portions of the first exterior member 121 and the second exterior member 122 may be bonded to each other, or may be connected by a connection member. Alternatively, the peripheral edge portions of the first exterior member 121 and the second exterior member 122 may be bonded to each other and connected by a connection member. The type of bonding between the peripheral edge portions is preferably selected in consideration of materials of the first exterior member 121 and the second exterior member 122. Specific examples of the type of bonding between the peripheral edge portions include fusion and bonding with an adhesive, a pressure-sensitive adhesive, or the like. Specific examples of the connection member include a yarn, a pin, a rivet, and the like.

### (Exterior material 120A)

Fig. 36 is a cross-sectional view illustrating a configuration example of the exterior material 120A. The exterior material 120 includes a first exterior member 123 and a second exterior member 124. The first exterior member 123 and the second exterior member 124 are preferably flexible. The first exterior member 123 and the second exterior member 124 preferably each have a film shape. The laminate 10 is sandwiched between the first exterior member 123 and the second exterior member 124. The first exterior member 123 covers a back surface of the laminate 10. The first exterior member 123 has an opening 123A. A part of the back surface of the laminate 10 is exposed through the opening 123A. The second exterior member 124 covers a front surface of the laminate 10. The second exterior member 124 has an opening 124A. A part of the front surface of the laminate 10 is exposed through the opening 124A. The first exterior member 123 and the second exterior member 124 may be light transmissive or non-light transmissive. The first exterior member 123 and the second exterior member 124 may be colored.

Peripheral edge portions of the first exterior member 123 and the second exterior member 124 are bonded to each other.

The type of bonding between the peripheral edge portions is similar to that of the exterior material 120.

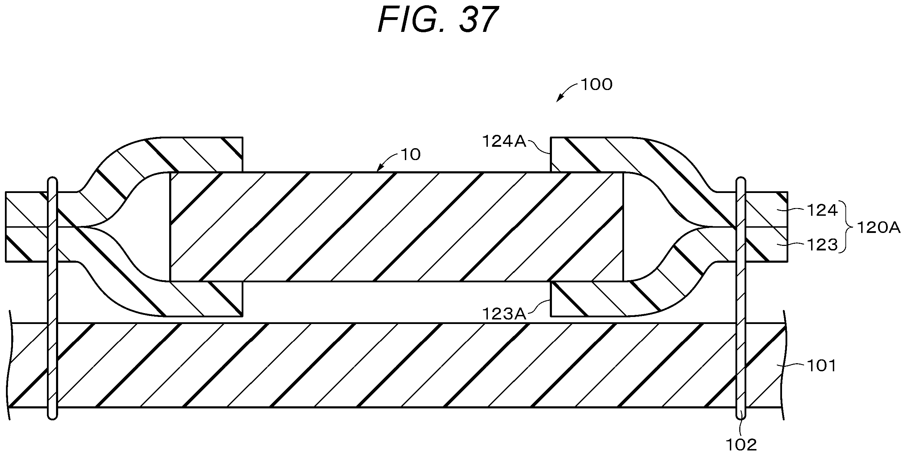

In the exterior material 120A having the above configuration, as illustrated in Fig. 37, a peripheral edge portion of the exterior material 120A is connected to the article 101 by at least one connection member 102. The exterior material 120 is similarly connected to the article 101.

### (Modification 2)

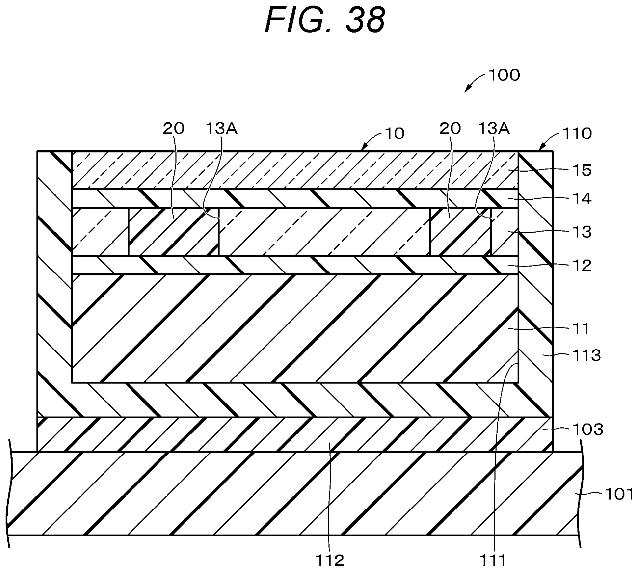

In the second embodiment, the example in which the recording body 100 is fixed to the article 101 by at least one connection member 102 has been described. However, as illustrated in Fig. 38, the recording body 100 may be fixed to the article 101 by a bonding layer 103.

The bonding layer 103 is provided between the article 101 and a back surface of the recording body 100. The bonding layer 103 bonds the article 101 and the back surface of the recording body 100 to each other. The bonding layer 103 is, for example, a pressure-sensitive adhesive layer or an adhesive layer. In the present specification, the pressure-sensitive adhesive layer is a layer containing a pressure-sensitive adhesive. The adhesive layer is a layer containing an adhesive.

### (Modification 3)

The recording body 100 may be used for individual ID identification of livestock (for example, Japanese beef or the like), fishery (for example, tuna, puffer, or the like), and a racehorse. The recording body 100 may be used as an ear tag. The recording body 100 may be embedded in a collar, a helix, a hoop, or the like.

### <4 Second Embodiment>

### [Configuration of recording body 200]

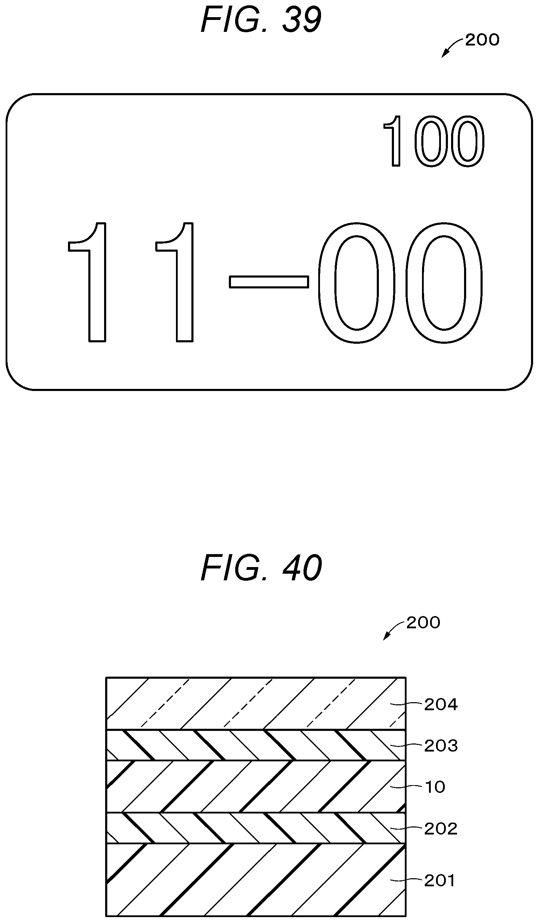

Fig. 39 is a plan view illustrating an appearance example of a recording body 200 according to a second embodiment. Fig. 40 is a cross-sectional view illustrating a configuration example of the recording body 200 according to the second embodiment. The recording body 200 may be a display plate such as a number plate. The recording body 200 may have a planar shape or a curved shape. The recording body 200 includes a white base material 201, a bonding layer 202, a laminate 10, a bonding layer 203, and a cover layer 204 in order. In the second embodiment, the white base material 201 and the cover layer 204 constitute an exterior material. The recording body 200 may further include at least one of an ultraviolet cut layer or a gas barrier layer on the cover layer 204. Out of both main surfaces of the recording body 200, a surface on the cover layer 204 side is a display surface side.

### (White base material 201)

The white base material 201 has a white color. The white color of the white base material 201 may be a background color of a pattern or the like recorded in a recording member 20. The white base material 201 is a support base material that supports the layers laminated on the white base material 201. The white base material 201 has a predetermined shape such as a rectangle in plan view. Here, the plan view means plan view when the white base material 201 is viewed from a direction perpendicular to a support surface. The white base material 201 may be a flat plate.

The white base material 201 contains, for example, plastic and at least one white pigment. The white base material 201 may contain at least one selected from the group consisting of a colorant, an antistatic agent, a flame retardant, a surface modifier, and the like as necessary. The at least one white pigment contains, for example, at least one selected from the group consisting of titanium white, magnesium carbonate, zinc oxide, barium sulfate, silica, talc, clay, calcium carbonate, and the like. As a material of the plastic, a material similar to that of the base material 11 of the laminate 1 can be exemplified.

### (Bonding layers 202 and 203)

The bonding layer 202 is provided between the white base material 201 and the laminate 10, and bonds the white base material 201 and the laminate 10 to each other. The bonding layer 202 is provided between the laminate 10 and the cover layer 204, and bonds the laminate 10 and the cover layer 204 to each other. The bonding layers 202 and 203 are preferably light transmissive. Each of the bonding layers 202 and 203 is a pressure-sensitive adhesive layer or an adhesive layer.

### (Laminate 10)

A pattern, a picture, a photograph, a character, or a combination of two or more thereof (hereinafter, referred to as a "pattern or the like") may be recorded in the recording body 200. Authentication information may be included in the recording body 200, specifically, the recording member 20.

A base material 11 of the recording member 20 included in the laminate 10 is preferably light transmissive. As a result, a background of a pattern or the like recorded in the recording member 20 can be made white. The laminate 10 may be any one of the above-described laminates 1 to 8.

### (Cover layer 204)

The cover layer 204 is light transmissive. The cover layer 204 may be transparent or colored in a predetermined color. The cover layer 204 covers a front surface of the laminate 10 and can suppress entry of moisture or the like into the laminate 10. The cover layer 204 has, for example, a plate shape. A surface of the cover layer 204 (surface opposite to the laminate 10) is, for example, planar. The cover layer 204 is a glass layer or a plastic layer. The cover layer contains, for example, soda glass, borosilicate glass, forsterite, lead glass, quartz glass, high strain point glass, or the like. As a material of the plastic layer, a material similar to that of the base material 11 can be exemplified, and an acrylic resin is preferable.

### [Modifications]

### (Modification 1)

In the second embodiment, the example in which the recording body 200 is a display plate such as a number plate has been described, but the recording body 200 is not limited to the display plate. For example, the recording body 200 may be an article tag, a plate, or the like, or may be an accessory. Examples of the accessory include a key holder, a ring, a bracelet, a brooch, a pin, an earring, a necklace, a hair ornament, a button, and the like.

The recording body 200 may be a metal product or a glass product. The metal product and the glass product include decorative items. The recording body 200 may be a vehicle inspection certificate seal, a painting in a glass frame, or the like.

### (Modification 2)

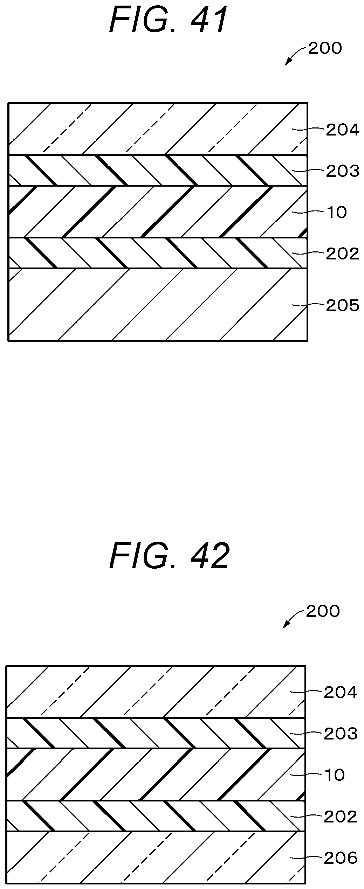

In the second embodiment, the example in which the recording body 200 includes the white base material 201 has been described. However, as illustrated in Fig. 41, the recording body 200 may include a metal base material 205 instead of the white base material 201. In this case, the metal base material 205 can be used as a reflection layer. Examples of a material of the metal base material 205 include a single substance such as aluminum, titanium, zinc, nickel, magnesium, copper, or iron, and an alloy containing two or more types thereof. Specific examples of the alloy include stainless used steel (SUS), an aluminum alloy, a magnesium alloy, a titanium alloy, and the like.

### (Modification 3)

In the second embodiment, the example in which the recording body 200 includes the white base material 201 has been described. However, as illustrated in Fig. 42, the recording body 200 may include a glass base material 206 instead of the white base material 201. As a material of the glass base material 206, for example, a material similar to that of the glass layer in the cover layer 204 can be exemplified.

### (Modification 4)

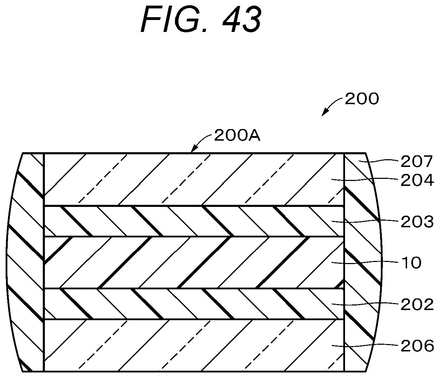

As illustrated in Fig. 43, the recording body 200 may further include a covering material 207. In this case, the glass base material 206, the cover layer 204, and the covering material 207 constitute an exterior material. The covering material 207 covers a side surface of a laminate 200A in which the glass base material 206, the bonding layer 202, the laminate 10, the bonding layer 203, and the cover layer 204 are laminated in order. The covering material 207 preferably covers at least a side surface of the laminate 10, and particularly preferably covers all side surfaces of the glass base material 206, the bonding layer 202, the laminate 10, the bonding layer 203, and the cover layer 204. The covering material 207 covers the side surface of the laminate 200A, whereby entry of moisture or the like into the recording member 20 can be suppressed. Therefore, weather resistance of the recording member 20 can be improved.

The covering material 207 contains, for example, at least one of an ultraviolet-curable resin or a thermosetting resin. The covering material 207 may contain fine particles as necessary. Examples of the fine particles include inorganic particles containing a metal oxide such as silicon oxide (SiOx), and the like.

### (Modification 5)

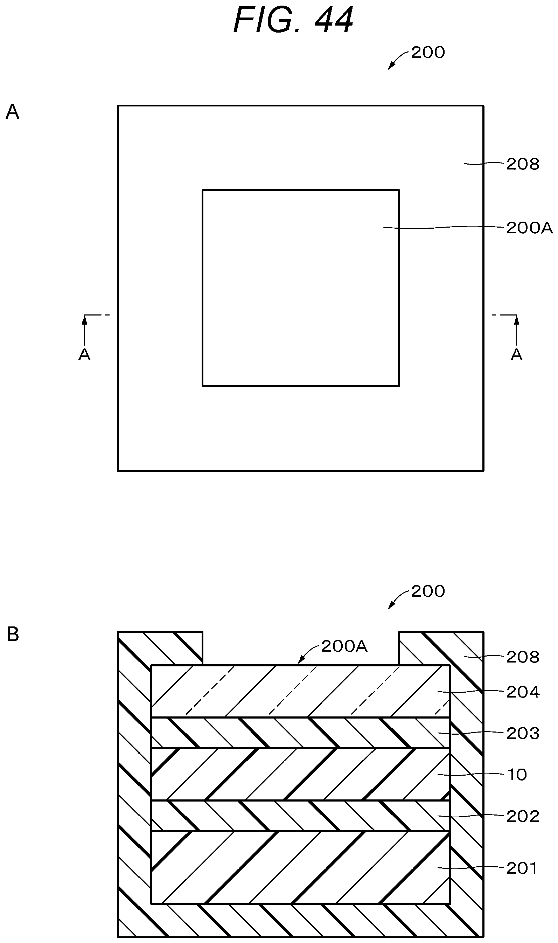

As illustrated in Figs. 44A and 44B, the recording body 200 may further include a housing 208. The housing 208 houses the laminate 200A in which the white base material 201, the bonding layer 202, the laminate 10, the bonding layer 203, and the cover layer 204 are laminated in order. Examples of the housing include a case, a frame, and the like. The housing may be for housing an electronic device or the like. Figs. 44A and 44B illustrate an example in which the housing 209 is a case having an opening on a front surface side of the laminate 10.

In Modification 4, the bonding layer 202 and the bonding layer 203 do not have to be provided. In this case, preferably, side surfaces of the white base material 201, the laminate 10, and the cover layer 204 are fitted to a side wall portion of the housing 208 and held by the housing 208. An image including a painting, a photograph, a character, a figure, a symbol, a pattern, a color, or a combination thereof (hereinafter, referred to as an "image such as a painting") may be drawn on the laminate 10. As a material of the housing 208, a material similar to that of the exterior material 110 in the first embodiment can be exemplified.

### (Modification 6)

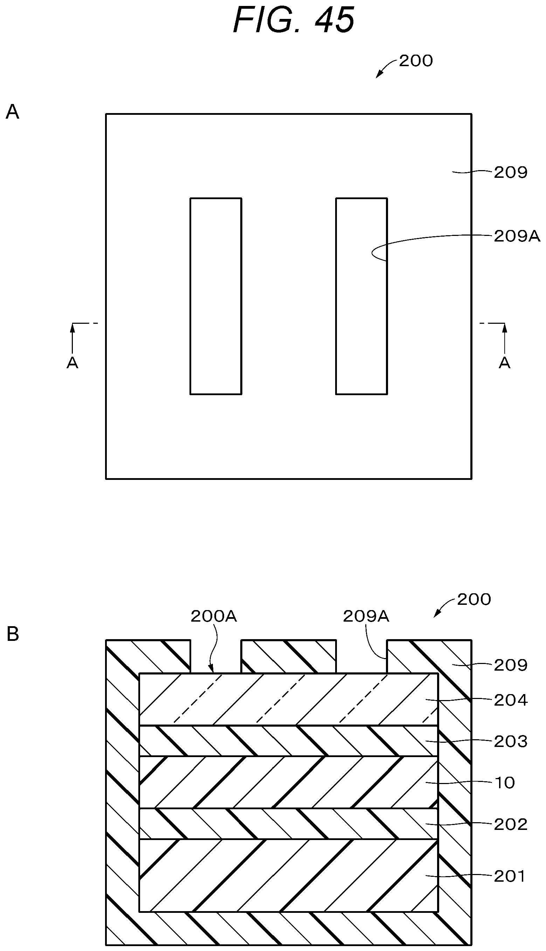

As illustrated in Figs. 45A and 45B, the recording body 200 may include a housing 209 having at least one opening 209A. The at least one opening 209A is formed at a position facing a front surface of the laminate 10 in the housing 209.

A pattern or the like may be drawn on the laminate 10. The pattern or the like may be drawn at a position facing the opening 209A. In this case, a user can visually recognize the pattern or the like through the opening 209A. The recording body 200 according to Modification 6 is preferably an accessory such as a key holder.

### (Modification 7)

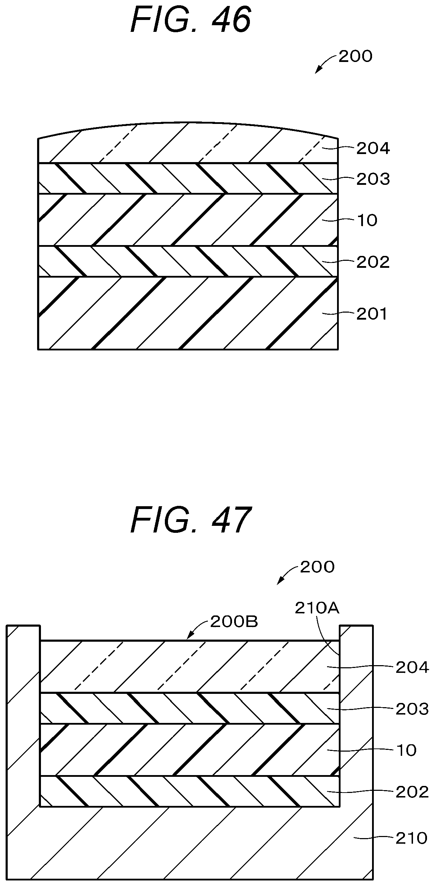

In the second embodiment, the example in which the surface of the cover layer 204 is planar has been described, but the surface of the cover layer 204 may have a curved surface shape as illustrated in Fig. 46. Examples of the curved surface include a protruding curved surface protruding in a direction away from a front surface of the laminate 10, a recessed curved surface recessed in a direction approaching the front surface of the laminate 10, a free curved surface, and the like. Examples of the protruding curved surface and the recessed curved surface include a substantially cylindrical surface, a substantially spherical surface, a paraboloid surface, and the like. Here, the substantially cylindrical surface, the substantially spherical surface, and the substantially paraboloid surface include a cylindrical surface, a spherical surface, and a paraboloid surface, respectively. The surface shape of the cover layer 204 is not limited to the planar shape and the curved shape, and may be a shape having a polygonal shape such as a triangular shape in cross section, or the like.

### (Modification 8)

In the second embodiment, the example in which the recording body 200 includes the white base material 201 has been described. However, as illustrated in Fig. 47, the recording body 200 may include a metal base material 210 instead of the white base material 201. The metal base material 210 may have a plate shape. The metal base material 210 has a recess 210A on one main surface. A laminate 200B in which the bonding layer 202, the laminate 10, the bonding layer 203, and the cover layer 204 are laminated in order is provided in the recess 210A. The laminate 200B may be fitted into the recess 210A, and the laminate 200B and the metal base material 210 may be integrated with each other. In Modification 8, the bonding layer 202 and the bonding layer 203 do not have to be provided.

### (Modification 9)

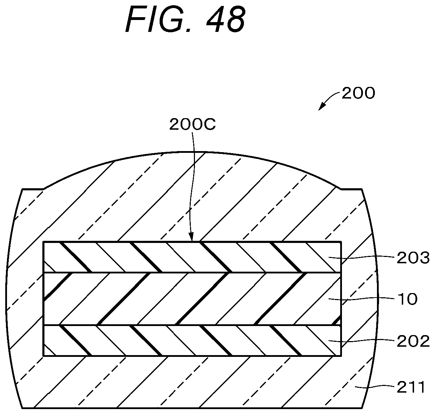

As illustrated in Fig. 48, the recording body 200 may include an exterior material 211 instead of the white base material 201 and the cover layer 204. The exterior material 211 covers the entire of a laminate 200C in which the bonding layer 202, the laminate 10, and the bonding layer 203 are laminated in order. In Modification 9, the bonding layer 202 and the bonding layer 203 are provided as necessary, and do not have to be provided. That is, the entire of the laminate 10 may be covered with the exterior material 211. The exterior material 211 is preferably light transmissive. The exterior material 211 contains, for example, glass or plastic. The exterior material 211 may contain a laminate of a glass layer and a plastic layer.

### <5 Third Embodiment>

### [Configuration of recording body 300]

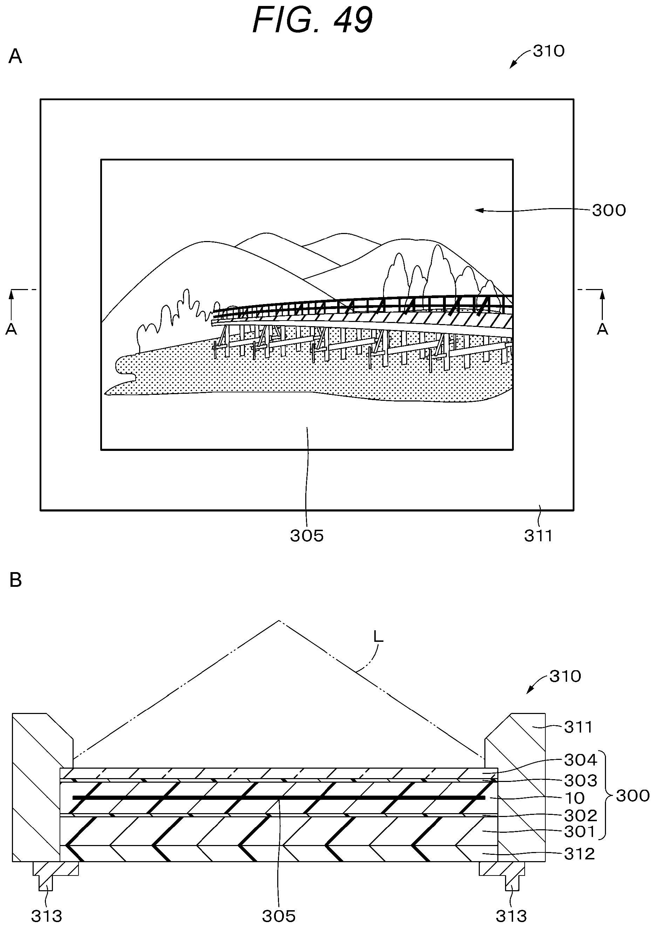

Fig. 49A is a plan view of a recording body 300 according to a third embodiment. Fig. 49B is a cross-sectional view taken along line A-A in Fig. 49A. The recording body 300 may be a plate on which an image such as a painting is drawn. The recording body 300 may be housed in a frame 310.

### (Recording body 300)

The recording body 300 includes a base material 301, a bonding layer 302, a laminate 10, a bonding layer 303, and a face material 304 in order. In the third embodiment, the base material 301 and the face material 304 constitute an exterior material.

### (Base material 301)

The base material 301 is preferably a white base material. The base material 301 supports the layers laminated on the base material 301. The base material 301 may have a function as a thickness adjusting material.

### (Bonding layers 302 and 303)

The bonding layer 302 is provided between the base material 301 and the laminate 10, and bonds the base material 301 and the laminate 10 to each other. The bonding layer 303 is provided between the laminate 10 and the face material 304, and bonds the laminate 10 and the face material 304 to each other. The bonding layers 202 and 203 are preferably light transmissive. Each of the bonding layers 302 and 303 is a pressure-sensitive adhesive layer or an adhesive layer.

### (Face material 304)

The face material 304 covers a front surface of the laminate 10 and protects the laminate 10. The face material 304 is light transmissive. The face material 304 is a glass layer or a plastic layer. The plastic layer contains, for example, an acrylic resin, a vinyl chloride resin, or the like.

### (Laminate 10)

The laminate 10 may have a drawing region 305. The drawing region 305 is formed by irradiating a recording member 20 (for example, see Fig. 11 and the like) of the laminate 10 with laser light L and drawing an image (first image) such as a painting. Texture, definition, and the like may be differentiated between dot drawing (inkjet) and line drawing. The recording member 20 of the laminate 10 may be rewritable. In this case, an image such as a painting drawn on the recording body 300 can be newly rewritten.

The drawing region 305 may include authentication information. The authentication information is recorded, for example, in at least one of an image such as a painting or an image of matte paper, or in at least one of an image such as a painting or an image of campus. The authentication information is information for confirming that the recording body 300 is an official one. The authentication information includes at least one selected from the group consisting of (1) an identification image and/or an identification coat, (2) an invisible pattern, and (3) artifact-metrics.

The laminate 10 may be any one of the laminates 1 to 8 described above, but is preferably any one of the laminates 5 to 8 in consideration of the size of a drawing range. Fig. 49B illustrates an example in which the laminate 10 is any one of the laminates 5 to 8.

### (Frame 310)

The frame 310 includes a frame material 311, a back plate 312, and a turnbutton 313. The frame material 311 is a main body of the frame 310, and houses the laminate 10. The back plate 312 covers a back surface of the recording body 300. The turnbutton 313 supports the back plate 312.

### [Drawing method on recording body 300]

As illustrated in Fig. 49B, in a state of being housed in the frame 310, the recording body 300 is irradiated with laser light L, and an image such as a painting is drawn. In this case, drawing can be performed up to the position of an inner periphery of the frame material 311.

### [Operations and Effects]

In the recording body 300 according to the third embodiment, an image such as a painting can be drawn up to the position of the inner periphery of the frame material 311. Therefore, matte paper is unnecessary, and a sense of unity between an image such as a painting and the frame 310 can be improved.

### [Modifications]

### (Modification 1)

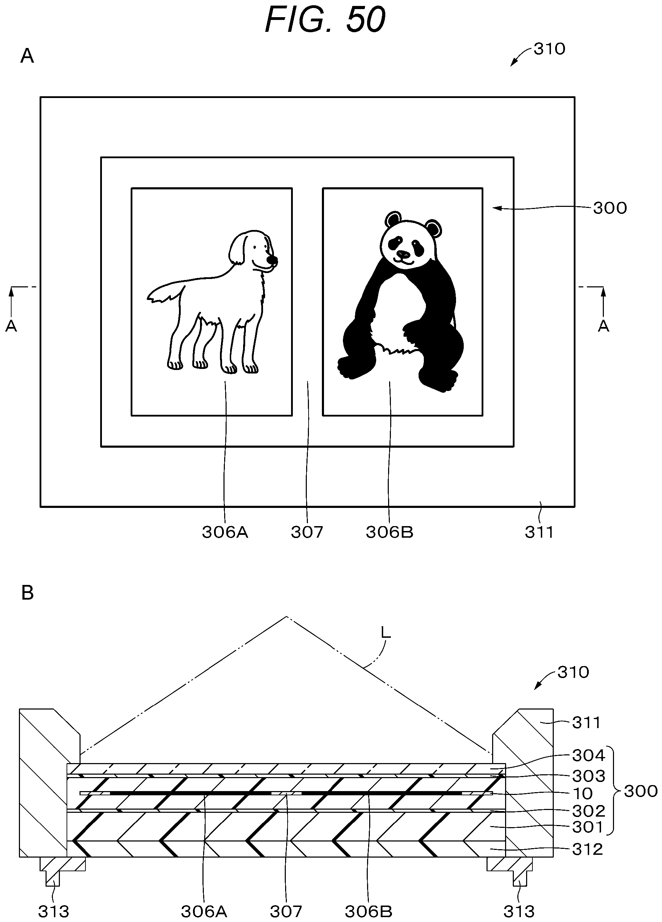

In the third embodiment, the example in which the laminate 10 has one drawing region 305 has been described, but the laminate 10 may have two first drawing regions 306A and 306B and one second drawing region 307 as illustrated in Figs. 50A and 50B. The second drawing region 307 may surround the first drawing region 306A.

The first drawing regions 306A and 306B are formed by irradiating the recording body 300 with laser light L and drawing an image such as a painting (first image). The second drawing region 307 is formed by irradiating the recording body 300 with laser light L and drawing an image of matte paper or an image of canvas (second image).

In the above example, the example in which the laminate 10 has the two first drawing regions 306A and 306B has been described, but the laminate 10 may have one first drawing region 306A. In this case, the second drawing region 307 may have a closed loop shape along an inner periphery of the frame material 311 and surround the first drawing region 306A.

A combination of an image such as a painting and an image of matte paper may be a prescribed combination. In this case, by confirming the combination, it is possible to confirm that the frame 310 housing the recording body 300 is an official one.

In the recording body 100 according to Modification 1, it is possible to draw an image on matte paper of a free size, a free color, and a free design. Therefore, the size, color, and design of the matte paper can be selected according to an image such as a painting drawn on the recording body 300.

### (Modification 2)

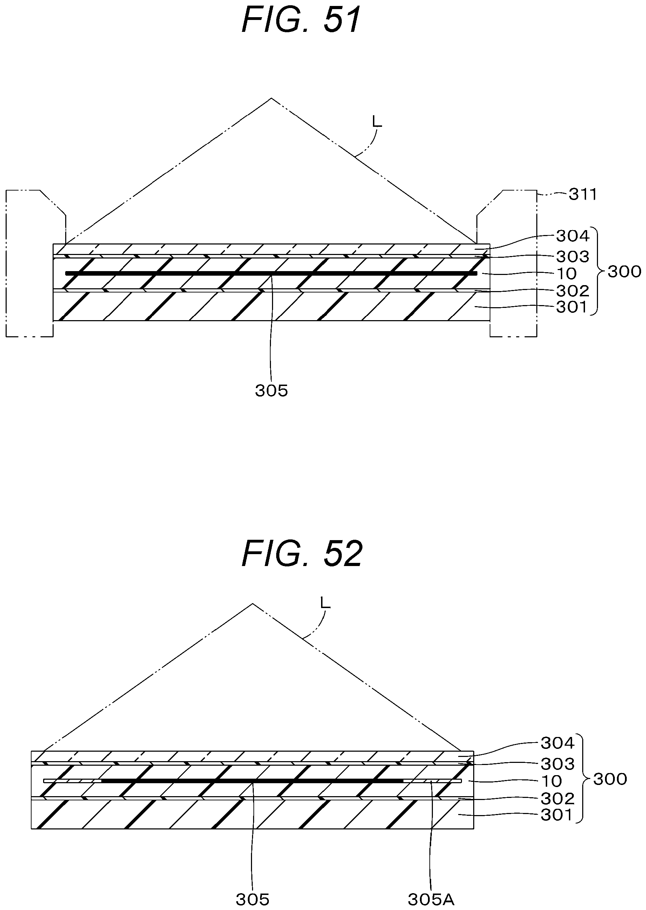

In the third embodiment, the example in which the recording body 300 is irradiated with laser light L in a state where the recording body 300 is housed in the frame 310 has been described. However, as illustrated in Fig. 51, the recording body 300 may be irradiated with laser light L in a state where the recording body 300 is not housed in the frame 310, and an image such as a painting may be drawn. At this time, drawing is preferably performed in consideration of the size of the frame 310. For example, drawing may be performed up to a position corresponding to an inner periphery of the frame material 311. Note that, in Fig. 51, the frame material 311 indicated by a two-dot chain line virtually represents the position of the frame material 311 when the recording body 300 is housed in the frame 310.

### (Modification 3)

In the third embodiment, the example in which the recording body 300 is housed in the frame 310 has been described, but an image of the frame may be drawn on the recording body 100. As illustrated in Fig. 52, the laminate 10 includes a drawing region (first drawing region) 305 and a frame drawing region (second drawing region) 305A. An image (second image) of the frame is drawn in the frame drawing region. The frame drawing region 305A is preferably formed along a peripheral edge portion of the laminate 10. The frame drawing region 305A may have a rectangular ring shape in plan view. The drawing region 305 is provided inside the frame drawing region 305A. The drawing region 305 and the frame drawing region 305A may be adjacent to each other, or an image of matte paper and/or an image of canvas may be drawn between the drawing region 305 and the frame drawing region 305A.

### <6 Fourth Embodiment>

### [Configuration of recording body 400]

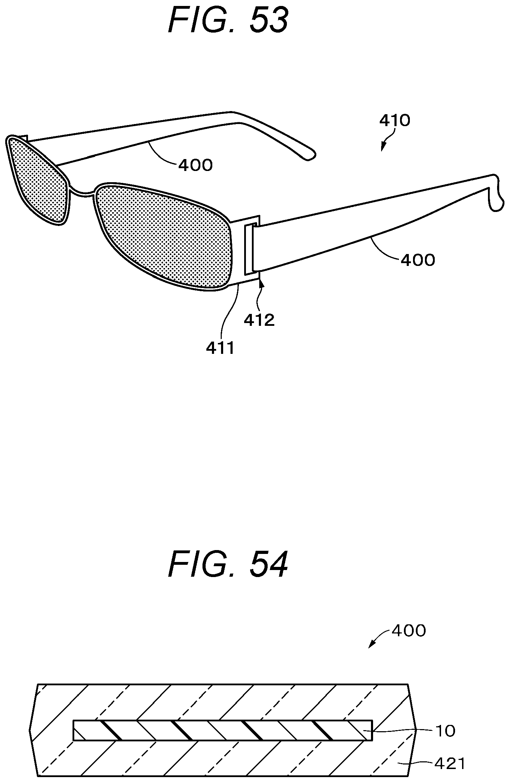

Fig. 53 is a perspective view illustrating an appearance example of a recording body 400 according to a fourth embodiment. The recording body 400 is a temple provided in eyeglasses 410. The recording body 400 is detachably connected to a wraparound endpiece 411 via a hinge 412. The glasses 410 also include sunglasses. In the fourth embodiment, an example in which the recording body 400 is glasses will be described, but the recording body 400 may be an accessory or the like such as a key holder.

Fig. 54 is a cross-sectional view illustrating a configuration example of the recording body 400 according to the fourth embodiment. The recording body 400 includes a laminate 10 and an exterior material 421.

### (Exterior material 421)

The exterior material 421 covers the entire of the laminate 10. The exterior material 421 is light transmissive. The exterior material 421 may have transparency to visible light or may be colored. The exterior material 421 contains plastic. As the plastic, a material similar to that of the base material 11 can be exemplified.

### (Laminate 10)

A pattern or the like may be recorded in the laminate 10. The laminate 10 may be any one of the above-described laminates 1 to 8. At least one piece of authentication information may be included in the laminate 10, specifically, a recording member 20. The authentication information may be recorded in, for example, a pattern or the like. The authentication information may be similar to that in the fifth embodiment described later. The laminate 10 may be rewritable or may be a write once. In a case where the laminate 10 is rewritable, the recording body 400 can be recycled. In a case where the laminate 10 is a write once, the laminate 10 which is undrawn is prepared, and a pattern or the like according to a user's request can be drawn at a store or the like. In a case where the recording body 400 has a curved surface, drawing may be performed using a jig. Drawing may be performed using autofocus.

The recording body 400 is formed by, for example, insert molding. More specifically, the recording body 400 is formed, for example, by disposing the laminate 10 at a predetermined position of a mold, then injecting a molten resin into the mold, and curing the molten resin.

### [Operations and Effects]

Since the recording body 400 according to the fourth embodiment includes the laminate 10, a pattern or the like can be drawn on the laminate 10 at a store or the like according to a request of a customer after the laminate 10 is manufactured.

Therefore, a pattern or the like can be drawn on an article such as the glasses 410 according to season, skin color, fashion, and the like. Therefore, a design suitable for user's preference or the like can be applied to the glasses 410.

Images that vary depending on a user can be drawn on the laminate 10. Therefore, the same article (glasses 410 and the like) is unlikely to exist. Therefore, an effect of preventing theft of an article is also obtained.

Since the exterior material 421 covers the entire of the laminate 10, scratches and stains can be suppressed. Furthermore, contact between the recording member 20 containing a coloring compound and the like and a human body can be suppressed.

### [Modifications]

### (Modification 1)

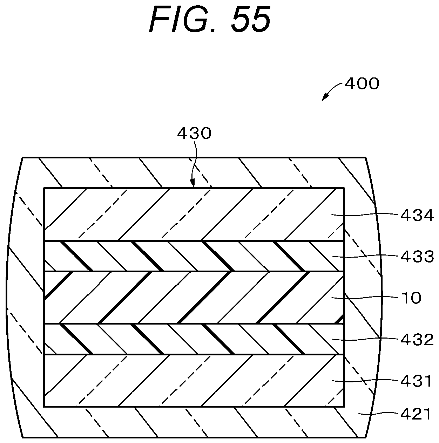

As illustrated in Fig. 55, the recording body 400 may include a laminate 430 instead of the laminate 10. The laminate 430 includes a resin layer 431, a bonding layer 432, the laminate 10, a bonding layer 433, and a resin layer 434 in order. The laminate 430 may include a metal layer instead of the resin layer 431.

The bonding layer 432 is provided between the resin layer 431 and the laminate 10, and bonds the resin layer 431 and the laminate 10 to each other. The bonding layer 433 is provided between the laminate 10 and the resin layer 434, and bonds the laminate 10 and the resin layer 434 to each other. The bonding layers 432 and 433 are light transmissive. Each of the bonding layers 432 and 433 is a pressure-sensitive adhesive layer or an adhesive layer. The resin layers 431 and 434 are light transmissive. Each of the resin layers 431 and 434 is, for example, a plastic layer. As a material of the plastic layer, a material similar to that of the base material 11 can be exemplified.

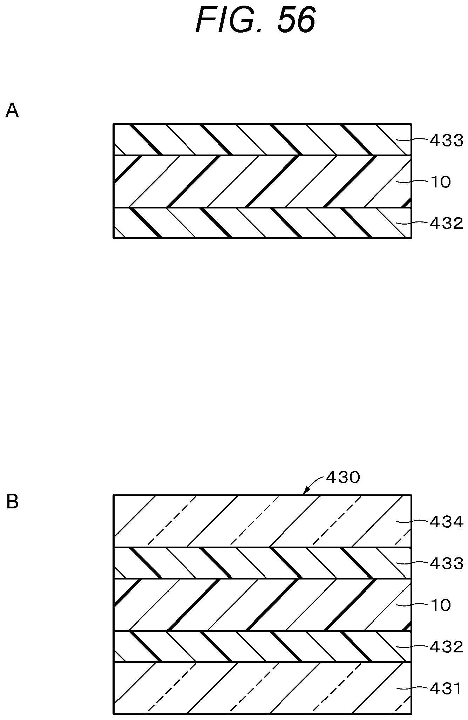

The recording body 400 having the above configuration is prepared, for example, as follows. First, as illustrated in Fig. 56A, the bonding layers 432 and 433 are formed on a first main surface and a second main surface of the laminate 10, respectively. Next, as illustrated in Fig. 56B, the resin layer 431 is bonded to the first main surface of the laminate 10 by the bonding layer 432, and the resin layer 434 is bonded to the second main surface of the laminate 10 by the bonding layer 433. As a result, the laminate 430 is obtained. Next, a periphery of the laminate 430 is coated with a liquid resin, and the resin is cured to obtain the recording body 400 illustrated in Fig. 55.

### (Modification 2)

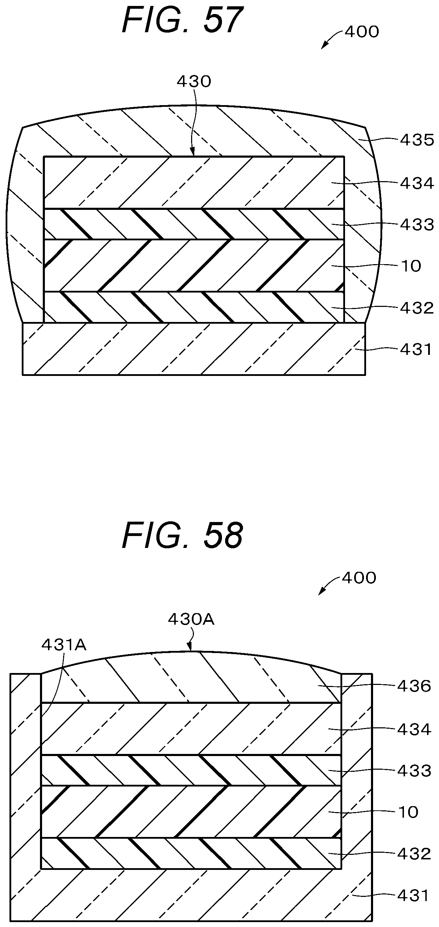

As illustrated in Fig. 57, the recording body 400 may include a resin layer 435 instead of the exterior material 421. The resin layer 435 covers a surface of the laminate 430 on the resin layer 434 side and covers a side surface of the laminate 430. The resin layer 435 is, for example, a plastic layer. The laminate 430 does not have to include the resin layer 434. In this case, the bonding layer 433 is provided between the laminate 10 and the resin layer 435, and bonds the laminate 10 and the resin layer 435 to each other.

### (Modification 3)

As illustrated in Fig. 58, the resin layer 431 may have a housing portion 431A. A laminate 430A in which the bonding layer 432, the laminate 10, the bonding layer 423, the resin layer 424, and a resin layer 436 are laminated in order is housed in the housing portion 431A. The recording body 400 may include a metal layer instead of the resin layer 431.

The resin layer 436 is light transmissive. The resin layer 436 contains, for example, a potting material. The potting material contains, for example, at least one selected from the group consisting of a urethane-based resin, an epoxy-based resin, and a silicon-based resin. The resin layer 436 is formed by applying and curing a liquid potting material. The recording body 400 according to Modification 3 may be an accessory or the like such as a key holder.

### (Modification 4)

The recording body 400 may include a barrier film. This can suppress entry of oxygen, moisture, and the like into the laminate 10. The barrier film may cover, for example, a surface of the exterior material 421 or a surface of the laminate 10.

### <7 Fifth Embodiment>

### [Configuration of recording body 500]

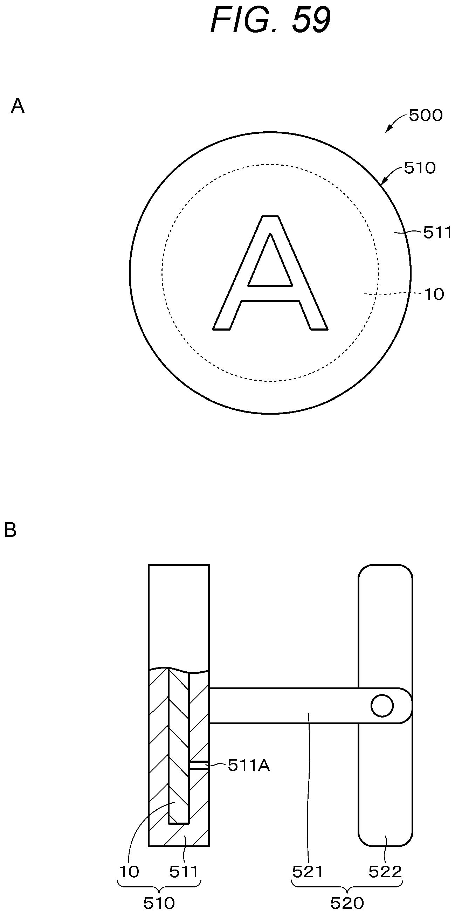

Fig. 59A is a front view illustrating an appearance example of a recording body 500 according to a fifth embodiment. Fig. 59B is a side view illustrating an appearance example of the recording body 500 according to the fifth embodiment. The recording body 500 is a cufflink. The recording body 500 includes a face portion 510 and a backing portion 520.

The face portion 510 includes an exterior material 511 and a laminate 10. The exterior material 511 covers the laminate 10. The exterior material 511 is light transmissive. The exterior material 110 may have transparency or may be colored. The backing portion 520 includes a support rod 521 and a fastener 522. The support rod 521 is perpendicularly raised from a back surface of the exterior material 511. The fastener 522 is provided at a distal end of the support rod 521.

A pattern or the like may be recorded in the laminate 10. A design of the pattern or the like may be changed depending on a sales period (for example, the month of sale) of the recording body 500, a region of the recording body 500, or the like. At least one piece of authentication information may be included in the laminate 10, specifically, a recording member 20. The authentication information may be recorded in, for example, a pattern or the like. The authentication information is information for authenticating an owner of the recording body 500. The authentication information is, for example, a date of birth of an owner of the recording body 500, an anniversary related to the owner of the recording body 500, a serial ID, or the like, and these pieces of information may be used singly or in combination of two or more thereof. Data associated with the serial ID may be able to be acquired via the Internet or the like. In this way, it is not necessary to record information other than the serial ID in the recording body 500. A purchase (use) history or the like associated with the serial ID may be able to be acquired using an application.

At least one piece of authentication information includes, for example, at least one selected from the group consisting of (1) an identification image and/or an identification code, (2) an invisible pattern, and (3) artifact-metrics. (1) The identification image and/or the identification coat may be recorded in the laminate 10 in a visually recognizable size. (2) The invisible pattern cannot be visually confirmed, but may be recorded in a size that can be confirmed by an optical microscope. (3) The artifact-metrics may be a random pattern formed during manufacture of the laminate 10. (1) The identification image and/or the identification coat and (2) the invisible pattern may be written on the laminate 10 along with an image when the image is drawn on the laminate 10. The artifact-metrics refers to a random unique pattern possessed by an individual of an artifact. This may occur naturally or may be given in advance. Specific examples of the artifact-metrics include a light reflection pattern of a granular material randomly dispersed in the recording member 20, a random spot pattern (for example, cracking, film thickness unevenness at the time of preparation, or the like) in the recording member 20, a magnetic pattern randomly arranged in the recording member 20, a random pattern generated at the time of drawing on the recording member 20, and the like.

The authentication information may be recorded so as to appear black when viewed visually, but to be divided into cyan (C), magenta (M), and yellow (Y) when viewed with a microscope. The authentication information may be recorded so as to be visible only when viewed through a lens (for example, a camera of a mobile phone).

A marker for defining a position to read the artifact-metrics may be drawn on the laminate 10, specifically, the recording member 20. The mark may be visible or invisible, but is preferably one that can be easily determined. Note that, in embodiments other than the present embodiment, that is, in the first to fourth, fifth, and seventh embodiments, a marker may be similarly drawn on the recording member 20.

The laminate 10 may be any one of the above-described laminates 1 to 8.

### [Configuration of image authentication system]

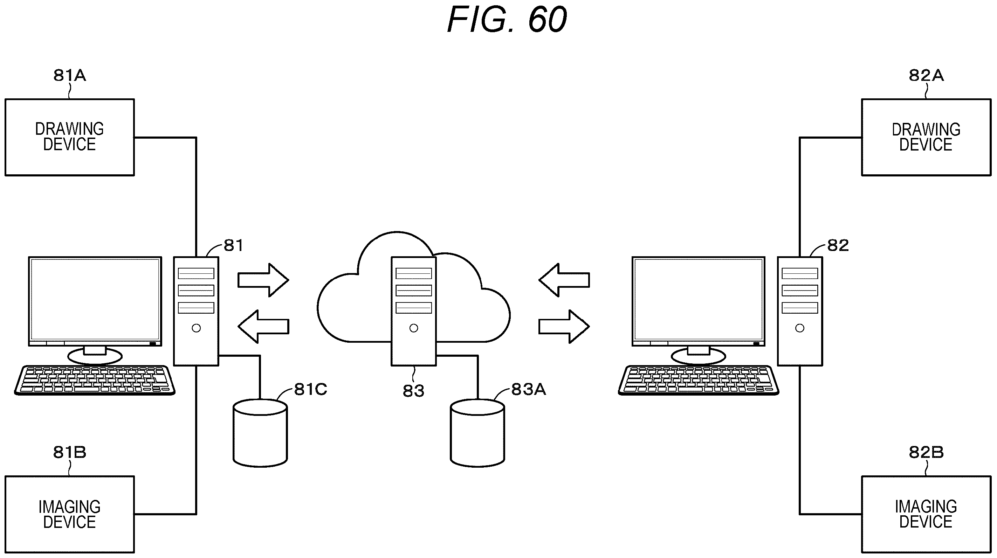

Hereinafter, a configuration example of an image authentication system will be described with reference to Fig. 60. The image authentication system includes a first terminal device 81, a second terminal device 82, and an image authentication device 83. The first terminal device 81 is owned by, for example, a manufacturer of the recording body 500. The second terminal device 82 is owned by, for example, a seller of the recording body 500.

### (First terminal device 81)

The first terminal device 81 can transmit information to the image authentication device 83 and receive information from the image authentication device 83 via a network such as the Internet.

A drawing device 81A and an imaging device 81B are connected to the first terminal device 81. The first terminal device 81 controls the drawing device 81A, and can cause the drawing device 81A to draw an image on the recording body 500. The first terminal device 81 controls the imaging device 81B, and can cause the imaging device 81B to capture an image drawn on the recording body 500.

The first terminal device 81 can acquire authentication information from an image drawn on the recording body 500. The position of the authentication information may be drawn with a marker. In a case where the authentication information is artifact-metrics, the first terminal device 81 can acquire the authentication information by acquiring the artifact-metrics from the image drawn on the recording body 500 and then extracting a feature amount from the artifact-metrics. The first terminal device 81 can transmit the acquired authentication information to the image authentication device 83.

The first terminal device 81 includes a storage device 81C. The storage device 81C is, for example, a hard disk drive or the like. The first terminal device 81 can store the image of the recording body 500 acquired by the imaging device 81B, the authentication information, and the like in the storage device 81C.

The first terminal device 81 may be a general-purpose terminal device such as a personal computer, or may be a dedicated terminal device for controlling the drawing device 81A and the imaging device 81B.

### (Drawing device 81A)

The drawing device 81A can draw an image by irradiating color development layers 24, 27, and 30 with first, second, and third laser beams, respectively, under control of the first terminal device 81. The first, second, and third laser beams are preferably near-infrared laser beams. The first, second, and third laser beams preferably have peak wavelengths different from each other. As a result, an image can be selectively drawn on a desired color development layer among the color development layers 24, 27, and 30.

Specifically, the drawing device 81A can cause the color development layer 24 to develop a magenta color by irradiating the color development layer 24 with the first laser beam having a peak wavelength at a wavelength λ₁. The drawing device 81A can cause the color development layer 27 to develop a cyan color by irradiating the color development layer 27 with the second laser beam having a peak wavelength at a wavelength λ₂. The drawing device 81A can cause the color development layer 30 to develop a yellow color by irradiating the color development layer 30 with the third laser beam having a peak wavelength at a wavelength λ₃. Focal points of the first, second, and third laser beams are adjusted to the color development layers 24, 27, and 30, respectively.

### (Imaging device 81B)

The imaging device 81B captures an image drawn on the recording body 500 under control of the first terminal device 81, and transmits the image to the first terminal device 81. The imaging device 81B is, for example, a camera or the like.

### (Second terminal device 82)

The second terminal device 82 can transmit information to the image authentication device 83 and receive information from the image authentication device 83 via a network such as the Internet.

A drawing device 82A and an imaging device 82B are connected to the second terminal device 82. The second terminal device 82 controls the drawing device 82A, and can cause the drawing device 82A to draw an image on the recording body 500. The second terminal device 82 controls the imaging device 82B, and can cause the imaging device 82B to capture an image drawn on the recording body 500.

The second terminal device 82 can acquire authentication information from an image drawn on the recording body 500. In a case where the authentication information is artifact-metrics, the second terminal device 82 can acquire the authentication information by acquiring the artifact-metrics from the image drawn on the recording body 500 and then extracting a feature amount from the artifact-metrics. The first terminal device 81 can transmit the acquired authentication information to the image authentication device 83.

The second terminal device 82 may be a general-purpose terminal device such as a personal computer, or may be a dedicated terminal device for controlling the drawing device 82A and the imaging device 82B.

### (Drawing device 82A)

The drawing device 82A can draw an image by irradiating the color development layers 24, 27, and 30 with the first, second, and third laser beams, respectively, under control of the second terminal device 82. Details of drawing operation of the drawing device 82A are similar to those of the drawing device 81A.

### (Imaging device 82B)

The imaging device 82B captures an image drawn on the recording body 500 under control of the second terminal device 82, and transmits the image to the second terminal device 82. The imaging device 82B is, for example, a camera or the like.

### (Image authentication device 83)

The image authentication device 83 can receive information from the first terminal device 81 and the second terminal device 82 and transmit information to the first terminal device 81 and the second terminal device 82 via a network such as the Internet.

The image authentication device 83 includes a storage device 83A. The storage device 83A is, for example, a hard disk drive or the like. The image authentication device 83 can store information received from the first terminal device 81 and the second terminal device 82 in the storage device 83A. The storage device 83A stores, for example, an image of the recording body 500, authentication information of the recording body 500, a solid identification number of the recording body 500, information associated with the solid identification number, and the like.

The image authentication device 83 can store the image of the recording body 500, the authentication information, and the like received from the first terminal device 81 in the storage device 83A. The image authentication device 83 collates the authentication information received from the second terminal device 82 with the authentication information stored in the storage device 83A and can notify the second terminal device 82 of a result of the collation. Specifically, the image authentication device 83 collates the authentication information received from the second terminal device 82 with the authentication information stored in the storage device 83A, and when collation is obtained, the image authentication device 83 can notify the second terminal device 82 of a fact that the recording body 500 is a genuine product. On the other hand, in a case where collation is not obtained, the image authentication device 83 can notify the second terminal device 82 of a fact that the recording body 500 is a counterfeit. The image authentication device 83 may be a server such as a cloud server.

### [Artifact-metrics registration and authentication method (1)]

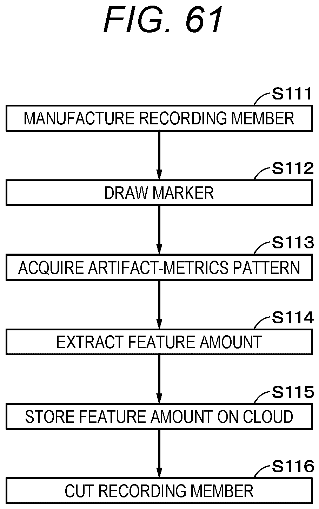

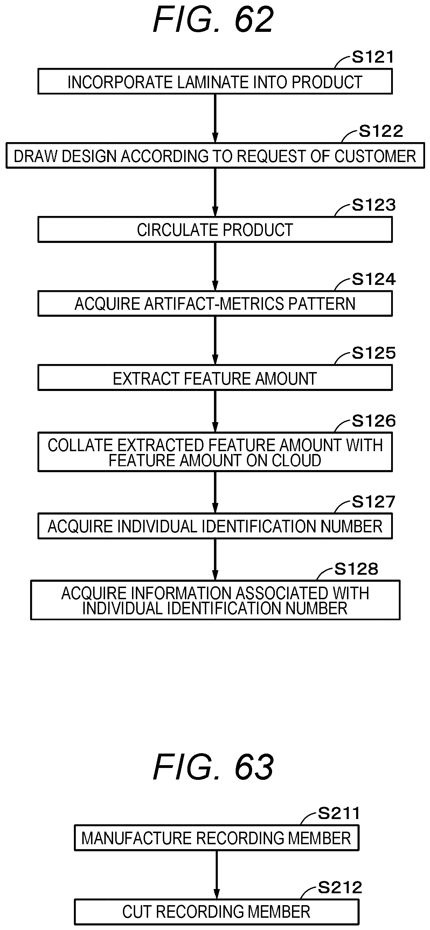

Hereinafter, an artifact-metrics registration and authentication method (1) will be described with reference to Figs. 61 and 62.

First, in step S111, the recording member 20 is manufactured. Next, in step S112, the first terminal device 81 controls the drawing device 81A, and draws a marker on the laminate 10. Next, in step S113, the first terminal device 81 controls the imaging device 81B, captures an image drawn on the laminate 10, and acquires artifact-metrics from a captured image at a position defined by the marker. The image including the artifact-metrics may be acquired from a front surface side of the recording body 500 or may be acquired from a back surface side of the recording body 500. Note that the order of steps S112 and S113 may be reversed. That is, after acquiring the artifact-metrics, the first terminal device 81 may draw a marker at the acquisition position.

Next, in step S114, the first terminal device 81 extracts a feature amount (authentication information) from the acquired artifact-metrics and transmits the feature amount to the image authentication device 83. At this time, the first terminal device 81 may store the feature amount extracted in step S114 in the storage device 81C. Next, in step S114, the image authentication device 83 stores the feature amount received from the first terminal device 81 in the storage device 83A. Next, in step S115, the recording member 20 is cut into a prescribed size.

Next, in step S121, the laminate 10 having a prescribed size is incorporated into the recording body 500. Next, in step S122, the second terminal device 82 controls the drawing device 82A, and draws a pattern or the like on the laminate 10. The pattern or the like is selected according to a request of a customer. Next, in step S123, the recording body 500 is circulated. Next, in step S124, the second terminal device 82 controls the imaging device 81B, captures an image drawn on the laminate 10 of the recording body 500, and acquires artifact-metrics from a captured image at a position defined by marker definition.

Next, in step S125, the second terminal device 82 extracts a feature amount (authentication information) from the acquired artifact-metrics and transmits the feature amount to the image authentication device 83. Next, in step S126, the image authentication device 83 collates the feature amount received from the first terminal device 81 with the feature amount stored in the storage device 83A and notifies the second terminal device 82 of a result of the collation.

In a case where the collation of the feature amounts is obtained in step S126, in step S127, the image authentication device 83 transmits individual identification information to the second terminal device 82 in response to a request from the second terminal device 82. Subsequently, in step S127, the image authentication device 83 transmits information associated with the individual identification information to the second terminal device 82 in response to a request from the second terminal device 82.

### [Artifact-metrics registration and authentication method (2)]

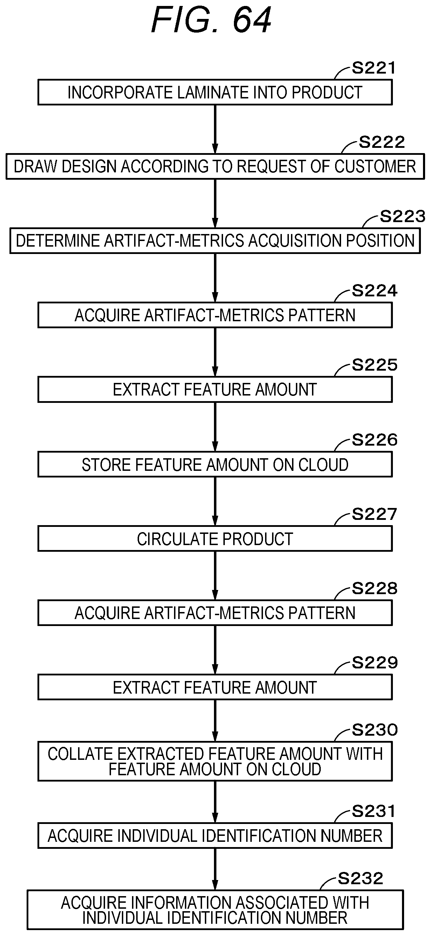

Hereinafter, an artifact-metrics registration and authentication method (2) will be described with reference to Figs. 63 and 64.

First, in step S211, the recording member 20 is manufactured. Next, in step S212, the recording member 20 is cut into a prescribed size.

Next, in step S221, the laminate 10 is incorporated into the recording body 500. Next, in step S222, the second terminal device 82 controls the drawing device 82A, and draws a pattern or the like on the laminate 10. The pattern or the like is selected according to a request of a customer. Next, in step 223, the second terminal device 82 determines an acquisition position of artifact-metrics using the pattern or the like drawn in step S222 as a marker. Next, in step S224, the second terminal device 82 acquires artifact-metrics from the acquisition position determined in step S223.

Next, in step S225, the second terminal device 82 extracts a feature amount (authentication information) from the artifact-metrics acquired in step S224, and transmits the feature amount to the image authentication device 83.

Subsequent steps S226 to S231 are similar to steps S123 to S128.

### [Modifications]

### (Modification 1)

In the fifth embodiment, the example in which the recording body 500 is a cufflink has been described, but the recording body 500 may be an accessory, a jewelry, or the like other than the cufflink. Examples of the accessory, jewelry, or the like other than the cufflink include a key holder, a ring, a bracelet, a brooch, a pin, an earring, a necklace, a hair ornament, a button, a logo plate, and the like.

### (Modification 2)

The exterior material 511 may have a light transmitting portion 511A such as a through hole. In this case, an image of the recording body 500 (image including authentication information) may be acquired from the light transmitting portion 511A by the imaging devices 81B and 82B.

### (Modification 3)

The image authentication system and the artifact-metrics registration and authentication method described in the fifth embodiment may be used for registration, authentication, and the like of artifact-metrics included in the recording body 100 according to the first embodiment, the recording body 200 according to the second embodiment, the recording body 300 according to the third embodiment, the recording body 400 according to the fourth embodiment, a recording body 600 according to a sixth embodiment, and a recording body 700 according to a seventh embodiment.

### <8 Sixth Embodiment>

### [Configuration of recording body 600]

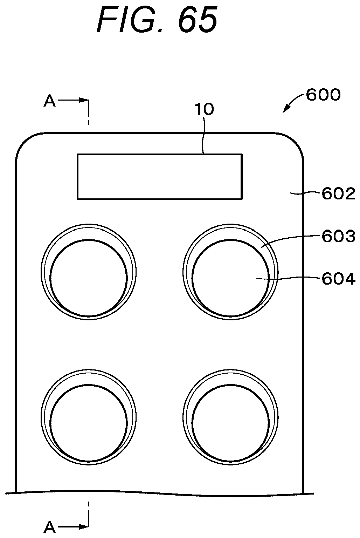

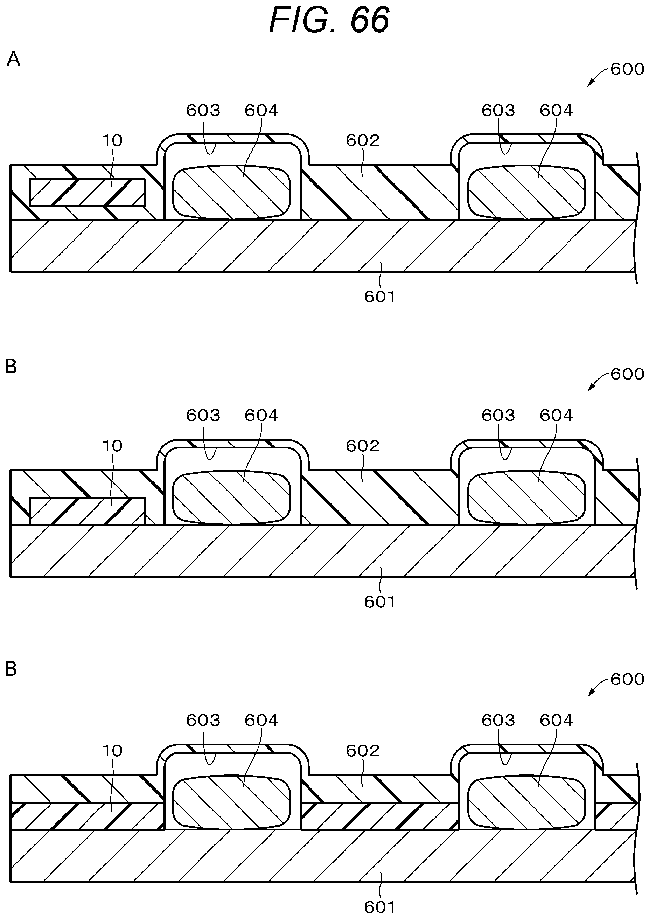

Fig. 65 is a plan view illustrating an appearance example of a recording body 600 according to a sixth embodiment. Fig. 66A is a cross-sectional view illustrating an example of a cross-sectional structure taken along line A-A in Fig. 65. The recording body 600 is a press through pack (PTP) packaging sheet. The recording body 600 which is a PTP packaging sheet includes a container film 602 having a plurality of pocket portions 603 and a cover film 601 provided on a back side of the container film 602 so as to close the pocket portions 603. In the sixth embodiment, the container film 602 and the cover film 601 constitute an exterior material. Each of the pocket portions 603 houses one tablet 604 as an object to be housed.

The container film 602 may be light transmissive. The container film 602 contains, for example, a resin material. The resin material contains, for example, at least one selected from the group consisting of a polyvinylidene chloride-based resin, a cyclic olefin copolymer-based resin, a polychlorotrifluoroethylene-based resin, a polyvinyl chloride-based resin, a polyethylene-based resin, and a polypropylene-based resin. The cover film 601 contains, for example, an aluminum film foil.

As illustrated in Fig. 66A, the container film 602 may include the laminate 10. As illustrated in Figs. 66B and 66C, the laminate 10 may be provided between the cover film 601 and the container film 602. As illustrated in Fig. 66B, the laminate 10 may be provided in a part of a region other than the plurality of pocket portions 603, or as illustrated in Fig. 66C, the laminate 10 may be provided in the entire region other than the plurality of pocket portions 603. Genuine product guarantee information may be recorded in the laminate 10. The genuine product guarantee information is information for guaranteeing that the recording body 600 (that is, the PTP packaging sheet) is a genuine product. The genuine product guarantee information is, for example, a bar coat, a QR code (registered trademark), or a combination thereof.

The laminate 10 may be any one of the above-described laminates 1 to 8.

### [Operations and Effects]

In the recording body (PTP packaging sheet) 600 according to the sixth embodiment, information such as genuine product guarantee information is recorded in the laminate 10 included in the PTP packaging sheet. Therefore, forgery prevention performance is improved as compared with a case where a seal is attached to the PTP packaging sheet. Furthermore, since information can be recorded in the laminate 10 by laser light, it is possible to reduce work of imparting information to the PTP packaging sheet as compared with a case where a seal in which information is described is attached to the PTP packaging sheet.

### [Modifications]

### (Modification 1)

In the sixth embodiment, the example in which the genuine product guarantee information is recorded in the laminate 10 has been described, but the information recorded in the laminate 10 is not limited to this example. For example, pharmaceutical product-related information related to a pharmaceutical product (tablet 604) housed in the PTP packaging sheet may be recorded in the laminate 10. The pharmaceutical product-related information includes at least one selected from the group consisting of the type (use), dose, dosage date and time, dosage number, and the like of the pharmaceutical product (tablet 604).

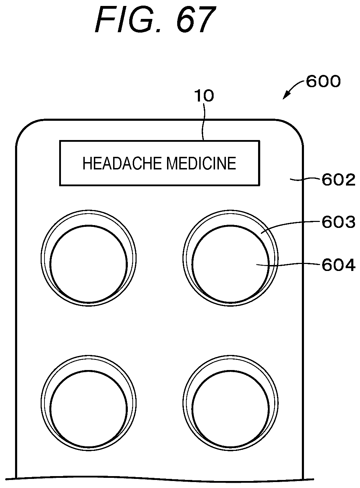

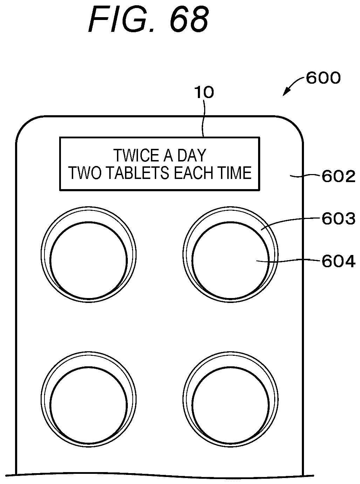

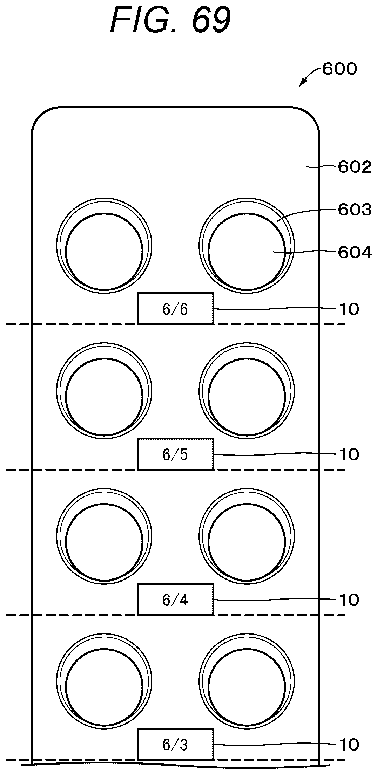

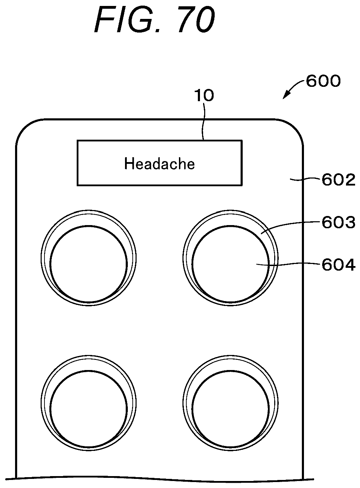

Specifically, as illustrated in Fig. 67, the type (use) of the pharmaceutical product (tablet 604) (for example, a headache medicine or the like) may be recorded in the laminate 10. As illustrated in Fig. 68, the dosage number (for example, twice a day or the like) and the dose (for example, two tablets each time or the like) of the pharmaceutical product (tablet 604) may be recorded in the laminate 10. In Fig. 69, the dosage date and time (for example, the month and date when the pharmaceutical product (tablet 604) is scheduled to be taken, or the like) of the pharmaceutical product (tablet 604) may be recorded in the laminate 10. The pharmaceutical product-related information may be written in Japanese as illustrated in Figs. 67 and 68, may be written in a language other than Japanese (for example, English) as illustrated in Fig. 70, or may be written in two or more languages.

### (Modification 2)

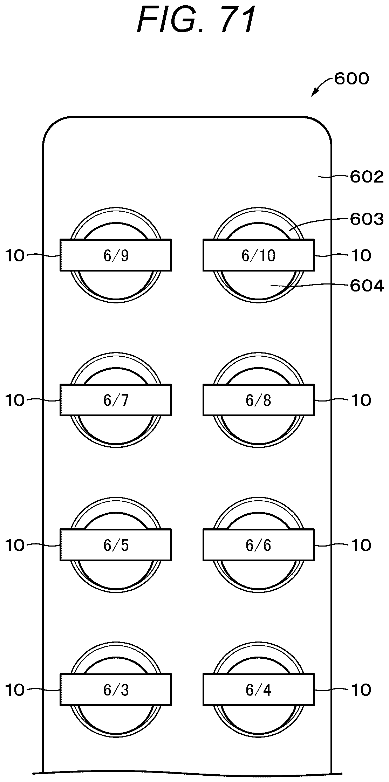

In the sixth embodiment, the example in which the laminate 10 is provided in a portion other than the pocket portion 603 has been described. However, as illustrated in Fig. 71, the laminate 10 may be provided in the pocket portion 603. The pharmaceutical product-related information is preferably recorded in the laminate 10.

The laminate 10 may be provided in a portion of the cover film 601 corresponding to a lower side of the pocket portion 603. That is, the laminate 10 may be provided in a portion immediately below the tablet 604. Therefore, forgery prevention performance of the recording body 600 can be improved.

### (Modification 3)

In the sixth embodiment, the example in which the laminate 10 is provided in a PTP packaging sheet has been described, but the laminate 10 may be provided in a pharmaceutical product other than the PTP packaging sheet.

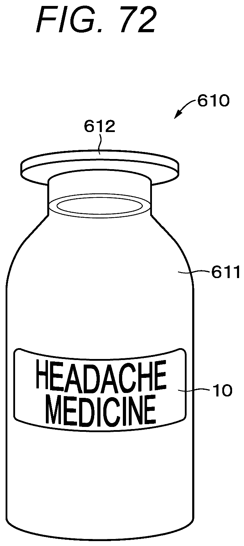

Fig. 72 is a perspective view illustrating an appearance example of a medication container 610 including the laminate 10. The medication container 610 includes a container portion 611 and a lid 612. The medication container 610 is an example of a recording body. The container portion 611 contains glass or plastic. The container portion 611 includes the laminate 10. Glass or plastic covering the laminate 10 is an example of an exterior material. A trade name may be recorded in the laminate 10. At least one of the genuine product guarantee information or the pharmaceutical product-related information may be recorded in the laminate 10.

### <9 Seventh Embodiment>

### [Configuration of recording body 700]

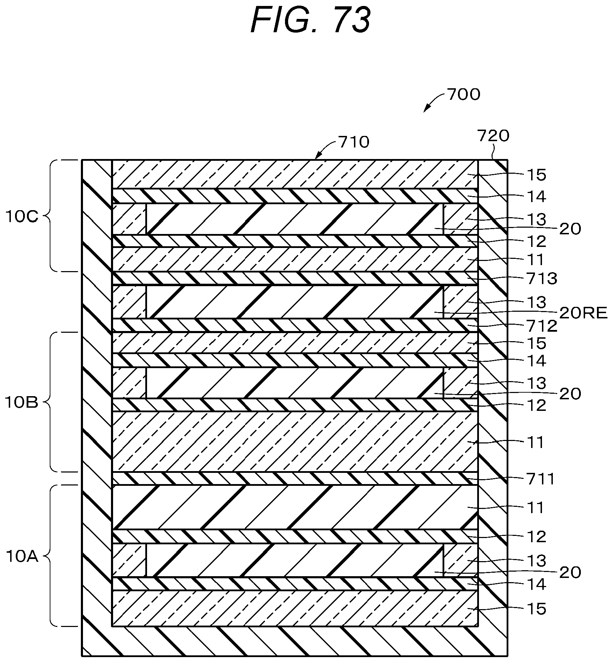

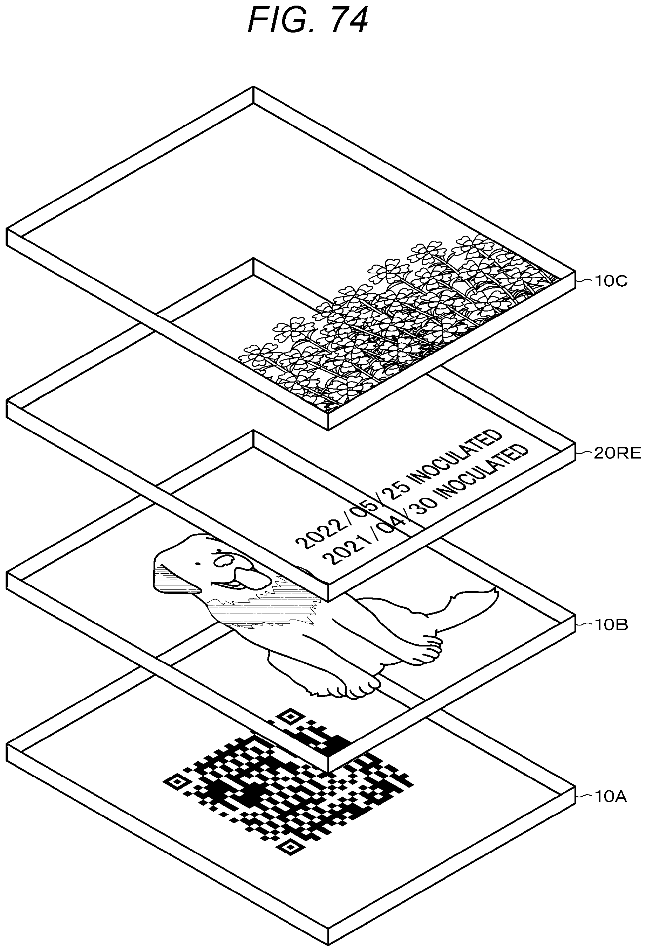

Fig. 73 is a cross-sectional view illustrating a configuration example of a recording body 700 according to a seventh embodiment. Fig. 74 is an exploded perspective view illustrating a configuration example of the recording body 700 according to the seventh embodiment. The recording body 700 is a pet plate. The pet plate is, for example, a dog license tag, an identification tag, or the like. Drawing for a dog license tag is performed, for example, when a municipality issues the dog license tag. Drawing for an identification tag is performed, for example, when an identification tag issuing agency or an identification tag issuing shop issues the identification tag.

In a case where a contact address is recorded in the recording body 700 by a QR code (registered trademark), character information such as a telephone number may be coded. A contact address of an issuing source and an individual number are coded, and when the issuing source is notified of a fact that a lost pet is protected together with the individual number, the issuing source may contact an owner. In a case where a vaccination record is described in the record body 700, the recording body 700 preferably includes a rewritable layer for describing the vaccination record. Addition or update of a vaccination date may be performed by a vaccination institution or a dog license tag/identification tag issuing source.

Hereinafter, an example in which the recording body 700 is an identification tag will be described. The recording body 700 includes a laminated structure 710 and an exterior material 720. The laminated structure 710 includes a laminate 10A, a bonding layer 711, a laminate 10B, a bonding layer 712, an intermediate layer 13 housing a recording member 20RE, a bonding layer 713, and a laminate 10C in order. Note that the bonding layers 711, 712, and 713 are not illustrated in Fig. 74.

### (Laminate 10A)

A QR code (registered trademark) as identification information and/or authentication information may be recorded in the laminate 10A. A license number may be recorded in the laminate 10A. The QR code (registered trademark) includes, for example, a contact address of an issuer of the recording body 700, a user number, and the like. The user number is, for example, identification information for identifying an owner of a pet. The laminate 10A may be any one of the above-described laminates 1 to 8. The recording member 20 of the laminate 10A is preferably a write once. The recording member 20 of the laminate 10A may include a single color development layer. The single color development layer may be able to exhibit a black color in a color-developed state. A base material 11 of the laminate 10A is preferably non-light transmissive. Note that the identification information and/or the authentication information is not limited to the QR code (registered trademark), and may be, for example, a serial number, a fine character, a random shape or the like (for example, artifact-metrics), parallax, or the like, and these may be used singly or in combination of two or more thereof.

### (Laminate 10B)

A desired pattern or the like of an owner may be recorded in the laminate 10B. The laminate 10B may be any one of the above-described laminates 1 to 8. The recording member 20 of the laminate 10B may be rewritable or may be a write once.

### (Recording member 20RE)

The date of vaccination may be recorded in the laminate 10B. A license number may be recorded in the recording member 20RE. The recording member 20RE may be the recording member 20 in the first embodiment, or may be any one of the recording members 20A to 20H in Modifications of the first embodiment. The recording member 20RE may be rewritable. Note that, in a case where a license number is recorded in the recording member 20RE, the recording member 20RE is preferably a write once.

### (Laminate 10C)

A desired pattern or the like of an owner may be recorded in the laminate 10C. The laminate 10C may be any one of the above-described laminates 1 to 8. The recording member 20 of the laminate 10C may be rewritable or may be a write once.

### (Bonding layers 711, 712, and 713)

The bonding layer 711 is provided between the laminate 10A and the laminate 10B, and bonds the laminate 10A and the laminate 10B to each other. The bonding layer 712 is provided between the laminate 10B and the intermediate layer 13 housing the recording member 20RE, and bonds the laminate 10B and the intermediate layer 13 housing the recording member 20RE to each other. The bonding layer 713 is provided between the intermediate layer 13 housing the recording member 20RE and the laminate 10C, and bonds the intermediate layer 13 housing the recording member 20RE and the laminate 10C to each other. The bonding layer 711 may be light transmissive or non-light transmissive. The bonding layers 712 and 713 are preferably light transmissive. Each of the bonding layers 711, 712, and 713 is a pressure-sensitive adhesive layer or an adhesive layer.

### [Use example of recording body 700]

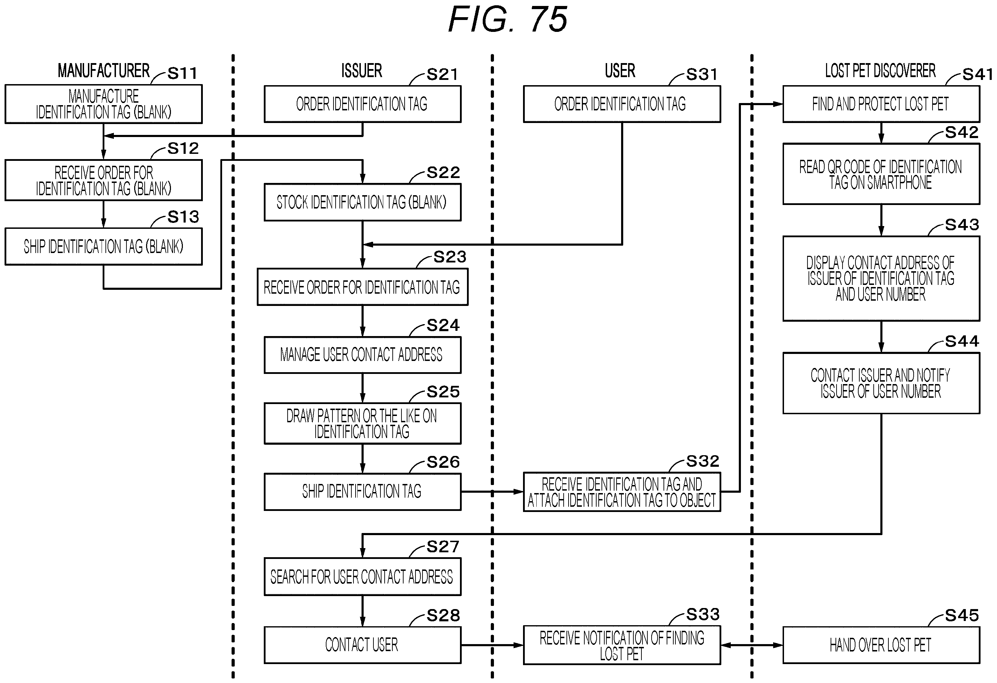

Hereinafter, a use example of the recording body 700 will be described with reference to Fig. 75.

### (Manufacturer)

First, in step S11, a manufacturer manufactures an identification tag. Next, in step S12, the manufacturer receives an order for an identification tag from an issuer. Next, in step S13, the manufacturer ships the identification tag to the issuer.

### (Issuer)

First, in step S21, an issuer orders an identification tag to a manufacturer. Next, in step S22, the issuer stocks the identification tag. Next, in step S23, the issuer receives an order for an identification tag from a user. Next, in step S24, the issuer stores a contact address of the user in a cloud server or the like. At this time, the contact address of the user is stored in association with a user number. Next, in step S25, the issuer draws a pattern or the like on the identification tag. Examples of the pattern or the like include a photograph, a license number, an inoculation record, a user number, and the like. Next, in step S26, the issuer ships the identification tag to the user. Next, in step S27, the issuer searches a cloud server on the basis of a user number of which the issuer has been notified by a lost pet discoverer, and extracts a user contact address. Next, in step S28, the issuer contacts the user.

### (User)

First, in step S31, a user orders an identification tag to a light emitter. Next, in step S32, the user receives the identification tag from the issuer and attaches the identification tag to an object (for example, a dog). Next, in step S33, the user receives a notification of finding a lost pet from the issuer, and receives the lost pet from the lost pet discoverer.

### (Lost pet discoverer)

First, in step S41, a lost pet discoverer finds and protects a lost pet. Next, in step S42, the lost pet discoverer reads a QR code (registered trademark) of the identification tag on a smartphone. Next, in step S43, the smartphone displays a contact address of an issuer of the identification tag and a user number on the basis of the QR code (registered trademark). Next, in step S44, the lost pet discoverer contacts the issuer by using the contact address of the issuer, and notifies the issuer of the user number. Next, in step S45, the lost pet discoverer hands over the lost pet to the user.

### [Modifications]

### (Modification 1)

In the seventh embodiment, the example in which the base material 11 is provided for each of the laminate 10A and the laminate 10B has been described, but the base material 11 may be shared by the laminate 10A and the laminate 10B. In this case, the number of layers of the laminated structure 710 can be reduced.

### (Modification 2)

In the seventh embodiment, the use example of the recording body (article) has been described using the identification tag as an example, but the flowchart used for the description can also be applied to authenticity determination and owner confirmation of the article or the like of each of the embodiments by replacing the description of the "identification tag" or the like with the article (for example, an accessory or a pharmaceutical product) or the like of each of the embodiments other than the seventh embodiment. In this case, the identification information and/or the authentication information used for authenticity determination and owner confirmation is not limited to the QR code (registered trademark), and for example, a serial number, a fine character, a random shape or the like (for example, artifact-metrics), parallax, or the like may be used. Note that these may be used singly or in combination of two or more thereof.

### <10 Modifications>

The embodiments and Modifications of the present disclosure have been specifically described above, but the present disclosure is not limited to the embodiments and Modifications described above, and various modifications based on the technical idea of the present disclosure can be made.

For example, configurations, methods, steps, shapes, materials, numerical values, and the like described in the above-described embodiments and Modifications are merely examples, and different configurations, methods, steps, shapes, materials, numerical values, and the like may be used as necessary. The configurations, methods, steps, shapes, materials, numerical values, and the like of the embodiments and Modifications described above can be combined with each other without departing from the gist of the present disclosure.

In numerical value ranges described in stages in the embodiments and Modifications described above, an upper limit value or a lower limit value of a numerical value range of a certain stage may be replaced with an upper limit value or a lower limit value of a numerical value range of another stage. The materials exemplified in the embodiments and Modifications described above may be used singly or in combination of two or more types thereof unless otherwise specified.

Furthermore, the present disclosure can also adopt the following configurations.
(1) A recording body including:
   a laminate; and
   an exterior material covering at least a part of a surface of the laminate, in which
   the laminate includes:
      a base material;
      an intermediate layer provided on the base material and having a housing portion;
      a recording member provided in the housing portion; and
      an overlay layer provided on the intermediate layer,
      the housing portion is provided in a part of a plane of the intermediate layer,
      the housing portion is a through hole penetrating the intermediate layer in a thickness direction thereof or a recess recessed in the thickness direction of the intermediate layer,
      the recording member includes a color development layer containing a coloring compound having an electron donating property, a developer having an electron accepting property, and a matrix resin,
      the base material, the intermediate layer, and the overlay layer contain the same type of resin material, and
      the base material and the intermediate layer are bonded to each other by fusion, and the intermediate layer and the overlay layer are bonded to each other by fusion.
(2) A recording body including:
   a laminate; and
   an exterior material covering at least a part of a surface of the laminate, in which
   the laminate includes:
      a base material;
      an overlay layer;
      an intermediate layer provided between the base material and the overlay layer and having a housing portion; and
      a recording member provided in the housing portion,
      the housing portion is provided in a part of a plane of the intermediate layer,
      the housing portion is a through hole penetrating the intermediate layer in a thickness direction thereof or a recess recessed in the thickness direction of the intermediate layer,
      the recording member includes a color development layer containing a coloring compound having an electron donating property, a developer having an electron accepting property, and a matrix resin,
      the base material, the intermediate layer, and the overlay layer contain the same type of resin material, and
      the base material and the intermediate layer are bonded to each other by a heat-curable adhesive, and the intermediate layer and the overlay layer are bonded to each other by a heat-curable adhesive.
(3) The recording body according to (1) or (2), in which
   the resin material contains a thermoplastic resin.
(4) The recording body according to (1) or (2), in which
   the resin material contains a polycarbonate-based resin.
(5) The recording body according to (1) or (2), in which
   the resin material contains a polyethylene terephthalate-based resin.
(6) The recording body according to (2), in which
   the heat-curable adhesive contains a thermosetting resin.
(7) The recording body according to any one of (1) to (6), in which
   the color development layer is configured to be able to change a colored state by laser light, and
   the change in the colored state is an irreversible change.
(8) The recording body according to any one of (1) to (7), in which
   the recording member includes authentication information.
(9) The recording body according to (8), in which
   the authentication information includes artifact-metrics.
(10) The recording body according to any one of (1) to (9), in which
   the exterior material includes a support base material and a cover layer, and
   the laminate is provided between the support base material and the cover layer.
(11) The recording body according to any one of (1) to (9), in which
   the exterior material covers an entire of the laminate.
(12) The recording body according to any one of (1) to (9), in which
   the exterior material is a packaging sheet.
(13) The recording body according to any one of (1) to (9), in which
   the exterior material includes a first exterior member that is flexible and a second exterior member that is flexible,
   the laminate is sandwiched between the first exterior member and the second exterior member, and
   peripheral edge portions of the first exterior member and the second exterior member are bonded to each other or connected to each other by a connection member.
(14) The recording body according to any one of (1) to (13), in which
   the exterior material includes leather, cloth, a polymer resin, metal, glass, paper, wood, or a composite of two or more materials thereof.
(15) The recording body according to any one of (1) to (10), in which
   a first image and a second image surrounding the first image are drawn on the recording member, and
   the second image includes an image of matte paper or an image of a frame.
(16) An article including the recording body according to any one of (1) to (15).
(17) The article according to (16), in which
   the article is an accessory or a pharmaceutical product.
(18) A recording body including:
   a laminated structure in which a plurality of laminates is laminated; and
   an exterior material covering at least a part of a surface of the laminated structure, in which
   the laminate includes:
      a base material;
      an intermediate layer provided on the base material and having a housing portion;
      a recording member provided in the housing portion; and
      an overlay layer provided on the intermediate layer,
      the housing portion is provided in a part of a plane of the intermediate layer,
      the housing portion is a through hole penetrating the intermediate layer in a thickness direction thereof or a recess recessed in the thickness direction of the intermediate layer,
      the recording member includes a color development layer containing a coloring compound having an electron donating property, a developer having an electron accepting property, and a matrix resin,
      the base material, the intermediate layer, and the overlay layer contain the same type of resin material, and
      the base material and the intermediate layer are bonded to each other by fusion, and the intermediate layer and the overlay layer are bonded to each other by fusion.
(19) A recording body including:
   a laminated structure in which a plurality of laminates is laminated; and
   an exterior material covering at least a part of a surface of the laminated structure, in which
   the laminate includes:
      a base material;
      an overlay layer;
      an intermediate layer provided between the base material and the overlay layer and having a housing portion; and
      a recording member provided in the housing portion,
      the housing portion is provided in a part of a plane of the intermediate layer,
      the housing portion is a through hole penetrating the intermediate layer in a thickness direction thereof or a recess recessed in the thickness direction of the intermediate layer,
      the recording member includes a color development layer containing a coloring compound having an electron donating property, a developer having an electron accepting property, and a matrix resin,
      the base material, the intermediate layer, and the overlay layer contain the same type of resin material, and
      the base material and the intermediate layer are bonded to each other by a heat-curable adhesive, and the intermediate layer and the overlay layer are bonded to each other by a heat-curable adhesive.
(20) The recording body according to (18) or (19), in which
   the plurality of laminates includes:
   at least one first laminate including the recording member that is rewritable; and
   at least one second laminate including the recording member that is a write once.

### <11 Reference Examples and Examples>

Hereinafter, the present disclosure will be specifically described with Reference Examples and Examples, but the present disclosure is not limited to Reference Examples and Examples.

### [Reference Example 1-1]

First, a first adhesive layer was disposed on a base material, and then an intermediate layer was disposed on the first adhesive layer. Next, a second adhesive layer was disposed on the intermediate layer, and then an overlay layer was disposed on the second adhesive layer to obtain a laminated structure. Next, the laminated structure was heated and pressurized at a temperature of 120°C to bond the base material and the intermediate layer to each other via the first adhesive layer, and to bond the intermediate layer and the overlay layer to each other via the second adhesive layer. As a result, a target laminate was obtained.

As the base material, the first adhesive layer, the intermediate layer, the second adhesive layer, and the overlay layer, the following materials were used.
Overlay layer: a polycarbonate film (hereinafter, referred to as a "PC film") having a thickness of 50 µm
Second intermediate layer: an epoxy-based resin layer (thermosetting resin layer) having a thickness of 5 µm
Intermediate layer: a PC film having a thickness of 100 µm
First adhesive layer: an epoxy-based resin layer (thermosetting resin layer) having a thickness of 5 µm
Base material: a PC film having a thickness of 25 µm

### [Reference Example 1-2]

A laminate was obtained in a similar manner to Reference 1-1 except that the following materials were used as the base material, the intermediate layer, and the overlay layer.
Overlay layer: a polyvinyl chloride film (hereinafter, referred to as a "PVC film") having a thickness of 50 µm
Intermediate layer: a PVC vinyl film having a thickness of 100 µm
Base material: a PVC vinyl film having a thickness of 25 µm

### [Reference Example 1-3]

A laminate was obtained in a similar manner to Reference 1-1 except that the following materials were used as the base material, the intermediate layer, and the overlay layer.
Overlay layer: a polyethylene terephthalate film (hereinafter, referred to as a "PET film") having a thickness of 50 µm
Intermediate layer: a PET film having a thickness of 100 µm
Base material: a PET film having a thickness of 25 µm

### [Reference Example 1-4]

A laminate was obtained in a similar manner to Reference 1-1 except that the following materials were used as the base material, the intermediate layer, and the overlay layer.
Overlay layer: a PC film having a thickness of 50 µm
Intermediate layer: a PVC film having a thickness of 100 µm
Base material: a PC film having a thickness of 25 µm

### [Reference Examples 2-1, 2-2, 2-3, and 2-4]

A laminate was obtained in a similar manner to Reference Examples 1-1, 1-2, 1-3, and 1-4 except that a base material, an intermediate layer, and an overlay layer were laminated in order to obtain a laminated structure, and then the laminated structure was heated and pressurized at a temperature of 180°C to fuse the base material and the intermediate layer to each other and to fuse the intermediate layer and the overlay layer to each other.

### [Evaluation]

Adhesion, environmental friendliness, and durability of a laminate obtained as described above were evaluated as follows.

### (Adhesion)

First, an average peel strength between the base material and the intermediate layer and an average peel strength between the intermediate layer and the overlay layer were measured. The average peel strength was measured by the method for measuring an average peel strength of a laminate described in the first embodiment. Next, the measured average peel strength was evaluated according to the following criteria. Evaluation results are illustrated in Table 1.
⊙: The average peel strength between the base material and the intermediate layer and the average peel strength between the intermediate layer and the overlay layer are both 5.0 N/cm or more.
∘: The average peel strength between the base material and the intermediate layer and the average peel strength between the intermediate layer and the overlay layer are both 3.5 N/cm or more.
×: The average peel strength between the base material and the intermediate layer and the average peel strength between the intermediate layer and the overlay layer are both less than 3.5 N/cm.

### (Environmental friendliness)

Environmental friendliness of the laminate was evaluated according to the following criteria. Evaluation results are illustrated in Table 1.
o: There is no possibility that a harmful substance (particularly, dioxin) is generated when the laminate is treated with insufficient equipment.
×: There is a possibility that a harmful substance (particularly, dioxin) is generated when the laminate is treated with insufficient equipment.

### (Durability)

In accordance with ISO/IEC10373-1, durability of the laminate was evaluated according to the following criteria. Evaluation results are illustrated in Table 1.
∘: A case where no change in appearance (warpage) occurs after heating
×: A case where a change in appearance (warpage) occurs after heating

**[Table 1]**

| | Reference Example 1-1 | Reference Example 1-2 | Reference Example 1-3 | Reference Example 1-4 | Reference Example 2-1 | Reference Example 2-2 | Reference Example 2-3 | Reference Example 2-4 |
|---|---|---|---|---|---|---|---|---|
| Overlay layer | PC | PVC | PET | PC | PC | PVC | PET | PC |
| Second adhesive layer | thermosetting resin (epoxy-based resin) | | | | none | | | |
| Intermediate layer | PC | PVC | PET | vinyl chloride | PC | PVC | PET | vinyl chloride |
| First adhesive layer | thermosetting resin (epoxy-based resin) | | | | | | | |
| Base material | PC | PVC | PET | PC | PC | PVC | PET | PC |
| Adhesion | ○ | ○ | ○ | ○ | ⊙ | ⊙ | ⊙ | ⊙ |
| Environmental | ○ | × | ○ | × | ○ | × | ○ | × |
| friendliness | | | | | | | | |
| Durability* | ○ | ○ | ○ | × | ○ | ○ | ○ | × |

| | | | | | | | | |
|---|---|---|---|---|---|---|---|---|
| *change in appearance (warpage) after heating | | | | | | | | |

Table 1 indicates the following.

By bonding the base material and the intermediate layer to each other and bonding the intermediate layer and the overlay layer to each other by a thermosetting resin or fusion, favorable adhesion can be obtained.

It is preferable to bond the base material and the intermediate layer to each other and to bond the intermediate layer and the overlay layer to each other by fusion from a viewpoint of improving adhesion.

It is preferable to use a PC film or a PET film as each of the base material, the intermediate layer, and the overlay layer from a viewpoint of environmental friendliness.

It is preferable to use a PC film or a PVC film as each of the base material, the intermediate layer, and the overlay layer from a viewpoint of improving durability.

It is preferable to use a PC film as each of the base material, the intermediate layer, and the overlay layer from a viewpoint of environmental friendliness and improving durability.

### (Example 1 to 3)

First, by laminating layers illustrated in Table 2, a recording medium having a layer configuration illustrated in Fig. 15 was prepared. Next, a PET film (see Fig. 13) having a frame shape and a thickness of 100 µm was prepared as an intermediate layer, and the recording medium was fitted into the frame of the PET film. The thicknesses of the recording medium and the PET film were set to be substantially the same. Next, a laminate was obtained in a similar manner to Reference Example 2-1 except that the intermediate layer into which the recording medium was fitted was used as described above. Note that an interface of the recording medium is also bonded by a heating and pressurizing process after the base material, the intermediate layer, and the overlay layer are laminated.

### (Example 4)

A laminate was obtained in a similar manner to Example 1 except that a recording medium having a layer configuration illustrated in Fig. 22 was prepared by laminating layers illustrated in Table 3.

### (Example 5)

A laminate was obtained in a similar manner to Example 1 except that a recording medium having a layer configuration illustrated in Fig. 17 was prepared by laminating layers illustrated in Table 3.

### (Example 6)

A laminate was obtained in a similar manner to Example 1 except that a recording medium having a layer configuration illustrated in Fig. 18 was prepared by laminating layers illustrated in Table 3.

### (Example 7)

A laminate was obtained in a similar manner to Example 1 except that a recording medium having a layer configuration illustrated in Fig. 19 was prepared by laminating layers illustrated in Table 4.

### (Example 8)

A laminate was obtained in a similar manner to Example 1 except that a recording medium having a layer configuration illustrated in Fig. 20 was prepared by laminating layers illustrated in Table 4.

### (Example 9)

A laminate was obtained in a similar manner to Example 1 except that a recording medium having a layer configuration illustrated in Fig. 19 was prepared by laminating layers illustrated in Table 4.

### (Example 10)

A laminate was obtained in a similar manner to Example 1 except that a recording medium having a layer configuration illustrated in Fig. 21 was prepared by laminating layers illustrated in Table 4.

### [Evaluation]

Adhesion and durability of a laminate obtained as described above were evaluated as follows.

### (Adhesion)

First, an average peel strength between layers of a laminate was measured. The average peel strength was measured by the method for measuring an average peel strength of a laminate described in the first embodiment. Next, the measured average peel strength was evaluated according to the following criteria. Among the average peel strengths between layers of the laminate, the lowest average peel strength is illustrated in Tables 2, 3, and 4. Furthermore, the position of an interface having the lowest average peel strength is illustrated in Tables 2, 3, and 4.
∘: All the average peel strengths between layers are 3.5 N/cm or more.
×: At least one of the average peel strengths between layers is less than 3.5 N/cm.

### (Forgery prevention performance)

Forgery prevention performance of a laminate was evaluated according to the following criteria.
∘: At least one of the following condition (1) or (2) is satisfied.
×: Neither of the following conditions (1) and (2) is satisfied.
Condition (1): All the average peel strength between layers of a laminate are 3.5 N/cm or more.
Condition (2): An interface having the lowest value of the average peel strength is located between a color development layer and a color development layer.

### (Maximum color development OD)

First, a maximum color development OD of a laminate was measured using eXact (manufactured by X-Rite Inc.) of a spectrocolorimetric densitometer. Next, color developability was evaluated according to the following criteria. Evaluation results are illustrated in Tables 2, 3, and 4.
o: The maximum color development OD is 1.0 or more. An OD value 1.0 at which a person can be recognized when the person is drawn is used as a reference.
×: The maximum color development OD is less than 1.0. When the OD value is less than 1.0, it is difficult to recognize a person when the person is drawn.

### (Color gamut retention after heating)

First, a color gamut retention after heating was measured using eXact of a spectrocolorimetric densitometer. Next, the color gamut retention after heating was evaluated according to the following criteria. Evaluation results are illustrated in Tables 2, 3, and 4.
∘: The color gamut retention after heating is 80% or more.
×: The color gamut retention after heating is less than 80%.

Note that, when the color gamut retention is 80% or more, color representation of a person is sufficient when the person is drawn.

**[Table 2]**

| | | Example 1 | Example 2 | Example 3 |
|---|---|---|---|---|
| Overlay layer | | PC | PC | PC |
| Recording medium | (12) Protective layer | PET | PC | PC |
| | | OCA | OCA | OCA |
| | | UV cut layer | UV cut layer | UV cut layer |
| | | UV resin | UV resin | UV resin |
| | (11) Pressure-sensitive | OCA | OCA | OCA |
| | adhesive layer | | | |
| | (10) Heat insulating layer | UV resin | UV resin | UV resin |
| | (9) Color development layer | Color development layer Y1 | Color development layer Y1 | Color development layer Y2 |
| | (8) Pressure-sensitive adhesive layer | OCA | OCA | OCA |
| | (7) Heat insulating layer | UV resin | UV resin | UV resin |
| | (6) Color development layer | Color development layer C1 | Color development layer C1 | Color development layer C2 |
| | (5) Pressure-sensitive adhesive layer | OCA | OCA | OCA |
| | (4) Heat insulating layer | UV resin | UV resin | UV resin |
| | (3) Color development layer | Color development layer M1 | Color development layer M1 | Color development layer M2 |
| | (2) Pressure-sensitive adhesive layer | OCA | OCA | OCA |
| | (1) Base material | PET | PC | PC |
| Base material | | PC | PC | PC |
| Adhesion | Average peel strength [N/cm] | 0.3 | 0.3 | 7.0 |
| | Evaluation result | × | × | ○ |
| | Interface having lowest average peel strength | Interface between (6) color development layer and (7) heat insulating layer | Interface between (6) color development layer and (7) heat insulating layer | Interface between UV cut layer and OCA in (12) protective layer |
| Forgery prevention performance | Evaluation result | ○ | ○ | ○ |
| Color developability | Evaluation result | ○ | ○ | × |
| Color gamut | Evaluation result | ○ | ○ | ○ |

**[Table 3]**

| | | Example 2 | Example 4 | Example 5 | Example 6 |
|---|---|---|---|---|---|
| Overlay layer | | PC | PC | PC | PC |
| Recording medium | (12) Protective layer | PC | PC | PC | PC |
| | | OCA | OCA | OCA | OCA |
| | | UV cut layer | UV cut layer | UV cut layer | UV cut layer |
| | | UV resin | UV resin | UV resin | UV resin |
| | (11) Pressure-sensitive adhesive layer | OCA | OCA | OCA | OCA |
| | (10) Heat insulating layer | UV resin | UV resin | UV resin | UV resin |
| | | | | Matrix polymer layer | OCA |
| | (9) Color development layer | Color development layer Y1 | Color development layer Y1 | Color development layer Y1 | Color development layer Y1 |
| | (8) Pressure-sensitive adhesive layer | OCA | OCA | OCA | OCA |
| | (7) Heat insulating layer | UV resin | none | UV resin | UV resin |
| | | | | Matrix polymer layer | OCA |
| | (6) Color development layer | Color development layer C1 | Color development layer C1 | Color development layer C1 | Color development layer 1 |
| | (5) Pressure-sensitive adhesive layer | OCA | OCA | OCA | OCA |
| | (4) Heat insulating layer | UV resin | none | UV resin | UV resin |
| | | | | Matrix polymer layer | OCA |
| | (3) Color development layer | Color development layer M1 | Color development layer M1 | Color development layer M1 | Color development layer M1 |
| | (2) Pressure-sensitive adhesive layer | OCA | none | none | none |
| | (1) Base material | PC | none | none | none |
| Base material | | PC | PC | PC | PC |
| Adhesion | Average peel strength [N/cm] | 0.3 | 6.5 | 5.0 | 7.0 |
| | Evaluation result | × | ○ | ○ | ○ |
| | Interface having lowest average peel strength | Interface between (6) color development layer and (7) heat insulating layer | Interface between UV cut layer and OCA in (12) protective layer | Interface between UV cut layer and OCA in (12) protective layer | Interface between UV cut layer and OCA in (12) protective layer |
| Forgery prevention performance | Evaluation result | ○ | ○ | ○ | ○ |
| Color developability | Evaluation result | ○ | ○ | × | ○ |
| Color gamut | Evaluation result | ○ | × | ○ | ○ |

**[Table 4]**

| | | Example 2 | Example 7 | Example 8 | Example 9 | Example 10 |
|---|---|---|---|---|---|---|
| Overlay layer | | PC | PC | PC | PC | PET |
| Recording medium | (12) Protective layer | PC | PC | PC | PC | PET |
| | | OCA | OCA | OCA | OCA | OCA |
| | | UV cut layer | UV cut layer | UV cut layer | UV cut layer | UV cut layer |
| | | UV resin | UV resin | UV resin | UV resin | UV resin |
| | (11) Pressure-sensitive adhesive layer | OCA | OCA | OCA | OCA | OCA |
| | (10) Heat insulating layer | UV resin | none | none | none | none |
| | (9) Color development layer | Color development layer Y1 | Color development layer Y1 | Color development layer Y1 | Color development layer Y1 | Color development layer Y1 |
| | (8) Pressure-sensitive adhesive layer | OCA | none | none | none | none |
| | (7) Heat insulating layer | UV resin | PC | PC | Easy adhesion treatment PET | Easy adhesion treatment PET |
| | | | | Matrix polymer layer | | |
| | (6) Color development layer | Color development layer C1 | Color development layer C1 | Color development layer C1 | Color development layer C1 | Color development layer C1 |
| | (5) Pressure-sensitive adhesive layer | OCA | none | none | none | OCA |
| | (4) Heat insulating layer | UV resin | PC | PC | PC | UV resin |
| | | | | | | OCA |
| | (3) Color development layer | Color development layer M1 | Color development layer M1 | Color development layer M1 | Color development layer M1 | Color development layer M1 |
| | (2) Pressure-sensitive adhesive layer | OCA | none | none | none | none |
| | (1) Base material | PC | none | none | none | Easy adhesion treatment PET |
| Base material | | PC | PC | PC | PC | PET |
| Adhesion | Average peel strength [N/cm] | 0.3 | 1.0 | 6.0 | 7.0 | 7.0 |
| | Evaluation result | × | × | ○ | ○ | ○ |
| | Interface having lowest average peel strength | Interface between (6) color development layer and (7) heat insulating layer | Interface between (6) color development layer and (7) heat insulating layer | Interface between UV cut layer and OCA in (12) protective layer | Interface between UV cut layer and OCA in (12) protective layer | Interface between UV cut layer and OCA in (12) protective layer |
| Forgery prevention performance | Evaluation result | ○ | ○ | ○ | ○ | ○ |
| Color developability | Evaluation result | ○ | ○ | ○ | ○ | ○ |
| Color gamut | Evaluation result | ○ | ○ | ○ | ○ | ○ |

Details of members described in Tables 2, 3, and 4 are as follows.
PC: PC film
PET: PET film
Easy adhesion treatment PET: a PET film subjected to easy adhesion treatment (Diafoil (registered trademark) manufactured by Mitsubishi Chemical Corporation)
OCA: Optical Clear Adhesive
UV resin: an ultraviolet-curable resin layer (acrylic resin layer for hard coat)
Matrix polymer layer: a resin layer (specifically, a polycarbonate-based resin layer) containing the same type of polymer as a matrix polymer contained in an adjacent color development layer
Color development layer Y1: a color development layer containing a leuco dye that develops a yellow color, a developer, and a polycarbonate-based resin, in which the content of the polycarbonate-based resin in the color development layer is 58% by mass
Color development layer Y2: a color development layer containing a leuco dye that develops a yellow color, a developer, and a polycarbonate-based resin, in which the content of the polycarbonate-based resin in the color development layer is 58% by mass
Color development layer C1: a color development layer containing a leuco dye that develops a cyan color, a developer, and a polycarbonate-based resin, in which the content of the polycarbonate-based resin in the color development layer is 65% by mass
Color development layer C2: a color development layer containing a leuco dye that develops a cyan color, a developer, and a polycarbonate-based resin, in which the content of the polycarbonate-based resin in the color development layer is 65% by mass
Color development layer M1: a color development layer containing a leuco dye that develops a magenta color, a developer, and a polycarbonate-based resin, in which the content of the polycarbonate-based resin in the color development layer is 58% by mass
Color development layer M2: a color development layer containing a leuco dye that develops a magenta color, a developer, and a polycarbonate-based resin, in which the content of the polycarbonate-based resin in the color development layer is 58% by mass

Tables 2, 3, and 4 indicate the following.

When an intermediate layer between color development layers contains a matrix polymer layer, an ultraviolet-curable resin layer, and a pressure-sensitive adhesive layer, adhesion between the color development layer and the intermediate layer can be improved (see the evaluation result of Example 5).

When an intermediate layer between color development layers contains a pressure-sensitive adhesive layer, an ultraviolet-curable resin layer, and a pressure-sensitive adhesive layer, adhesion between the color development layer and the intermediate layer can be improved (see the evaluation results of Examples 6 and 10).

When an intermediate layer between color development layers contains a matrix polymer layer and a film, adhesion between the color development layer and the intermediate layer can be improved (see the evaluation result of Example 8).

When an intermediate layer between color development layers contains an easy adhesion treatment film, adhesion between the color development layer and the intermediate layer can be improved (see the evaluation results of Examples 9 and 10).

### (Reference Examples 3-1 to 3-8)

A PC film having a thickness of 25 µm, a polycarbonate-based resin-containing layer having a thickness of 5 µm, and a PC film having a thickness of 25 µm were laminated, and then heated and pressurized at a temperature of 180°C to be fused, thereby obtaining a sample. As the polycarbonate-based resin-containing layer, a layer having a composition illustrated in Table 5 was used.

### (Adhesion)

First, an average peel strength between layers of a sample was measured. The average peel strength was measured by the method for measuring an average peel strength of a laminate described in the first embodiment. Next, the measured average peel strength was evaluated according to the following criteria.
∘: All the average peel strengths between layers are 3.5 N/cm or more.
×: At least one of the average peel strengths between layers is less than 3.5 N/cm.

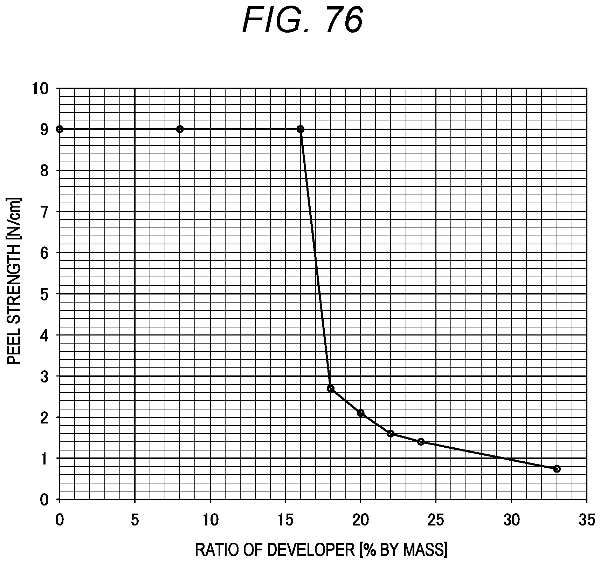

Evaluation results are illustrated in Table 5 and Fig. 76. Note that the average peel strength described in Table 5 represents an average peel strength between the polycarbonate-based resin-containing layer and the PC film.

**[Table 5]**

| | | Reference Example 3-1 | Reference Example 3-2 | Reference Example 3-3 | Reference Example 3-4 | Reference Example 3-5 | Reference Example 3-6 | Reference Example 3-7 | Reference Example 3-8 |
|---|---|---|---|---|---|---|---|---|---|
| Layer configuration of sample | | PC film (thickness: 25 µm) | | | | | | | |
| | | PC-based resin-containing layer (thickness: 5 µm) | | | | | | | |
| | | PC film (thickness: 25 µm) | | | | | | | |
| Composition of PC-based resin-containing layer | Matrix polymer [% by mass] | 100 | 92 | 84 | 82 | 80 | 78 | 76 | 67 |
| | Developer [% by mass] | 0 | 8 | 16 | 18 | 20 | 22 | 24 | 33 |
| Adhesion | Average peel strength [N/cm] | 9.0 | 9.0 | 9.0 | 2.7 | 2.1 | 1.6 | 1.4 | 0.7 |
| | Evaluation result | ○ | ○ | ○ | × | × | × | × | × |

Details of members and materials described in Table 5 are as follows.
OCA: Optical Clear Adhesive
Ultraviolet-curable resin layer: an acrylic resin layer for hard coat
Matrix polymer: a polycarbonate-based resin
Developer: a compound represented by formula (3)

Table 5 and Fig. 76 indicate that when a ratio of the developer to the total amount of the developer and the matrix polymer is 16% by mass or less, the peeling strength can be 3.5 N/cm or more.

### REFERENCE SIGNS LIST

1, 2, 3, 4, 5, 6, 7, 8, 10 Laminate
11 Base material
12, 14 Adhesive layer
13, 16 Intermediate layer
13A, 13B, 16A, 16B Housing portion
15 Overlay layer
20, 20A, 20B, 20C, 20D, 20E, 20F, 20G, 20H, 50 Recording member
22, 25, 28, 33 Pressure-sensitive adhesive layer
23, 26, 29, 34, 26A, 29A, 34A, 26B, 29B, 34B Heat insulating layer
24, 27, 30, 52 Color development layer
26A1, 29A1, 34A1 Resin layer
26A2, 29A2, 34A2, 26B2, 29B2, 34B2 Ultraviolet-curable resin layer
26B1, 29B1, 34B1 Pressure-sensitive adhesive layer
31, 36 Protective layer
32A, 32B, 32C, 35A, 35B, 35C, 37A, 37B, 37C, 38A, 38B,
38C Intermediate layer
36A Ultraviolet-curable resin layer
36B UV cut layer
36C Pressure-sensitive adhesive layer
36D Base material
52 C, 52M, 52Y
   Microcapsule
60 Test piece
60A, 60B Adherend
61 Tension member
62 Clamping device
71 Test stand
72 Jig
73A, 73B Movable roll
100, 200, 300, 400, 500, 600, 700 Recording body
101 Article
102 Connection member
110 Exterior material
111 Housing portion
112 Bottom portion
113 Side wall portion

## Claims

1. A recording body comprising:
a laminate; and
an exterior material covering at least a part of a surface of the laminate, wherein
the laminate comprises:
a base material;
an intermediate layer provided on the base material and having a housing portion;
a recording member provided in the housing portion; and
an overlay layer provided on the intermediate layer,
the housing portion is provided in a part of a plane of the intermediate layer,
the housing portion is a through hole penetrating the intermediate layer in a thickness direction thereof or a recess recessed in the thickness direction of the intermediate layer,
the recording member comprises a color development layer comprising a coloring compound having an electron donating property, a developer having an electron accepting property, and a matrix resin,
the base material, the intermediate layer, and the overlay layer comprise the same type of resin material, and
the base material and the intermediate layer are bonded to each other by fusion, and the intermediate layer and the overlay layer are bonded to each other by fusion.

2. A recording body comprising:
a laminate; and
an exterior material covering at least a part of a surface of the laminate, wherein
the laminate comprises:
a base material;
an overlay layer;
an intermediate layer provided between the base material and the overlay layer and having a housing portion; and
a recording member provided in the housing portion,
the housing portion is provided in a part of a plane of the intermediate layer,
the housing portion is a through hole penetrating the intermediate layer in a thickness direction thereof or a recess recessed in the thickness direction of the intermediate layer,
the recording member comprises a color development layer comprising a coloring compound having an electron donating property, a developer having an electron accepting property, and a matrix resin,
the base material, the intermediate layer, and the overlay layer comprise the same type of resin material, and
the base material and the intermediate layer are bonded to each other by a heat-curable adhesive, and the intermediate layer and the overlay layer are bonded to each other by a heat-curable adhesive.

3. The recording body according to claim 1, wherein
the resin material comprises a thermoplastic resin.

4. The recording body according to claim 1, wherein
the resin material comprises a polycarbonate-based resin.

5. The recording body according to claim 1, wherein
the resin material comprises a polyethylene terephthalate-based resin.

6. The recording body according to claim 2, wherein
the heat-curable adhesive comprises a thermosetting resin.

7. The recording body according to claim 1, wherein
the color development layer is configured to be able to change a colored state by laser light, and
the change in the colored state is an irreversible change.

8. The recording body according to claim 1, wherein
the recording member comprises authentication information.

9. The recording body according to claim 8, wherein
the authentication information comprises artifact-metrics.

10. The recording body according to claim 1, wherein
the exterior material comprises a support base material and a cover layer, and
the laminate is provided between the support base material and the cover layer.

11. The recording body according to claim 1, wherein
the exterior material covers an entire of the laminate.

12. The recording body according to claim 1, wherein
the exterior material is a packaging sheet.

13. The recording body according to claim 1, wherein
the exterior material comprises a first exterior member that is flexible and a second exterior member that is flexible,
the laminate is sandwiched between the first exterior member and the second exterior member, and
peripheral edge portions of the first exterior member and the second exterior member are bonded to each other or connected to each other by a connection member.

14. The recording body according to claim 1, wherein
the exterior material comprises leather, cloth, a polymer resin, metal, glass, paper, wood, or a composite of two or more materials thereof.

15. The recording body according to claim 1, wherein
a first image and a second image surrounding the first image are drawn on the recording member, and
the second image comprises an image of matte paper or an image of a frame.

16. An article comprising the recording body according to claim 1.

17. The article according to claim 16, wherein
the article is an accessory or a pharmaceutical product.

18. A recording body comprising:
a laminated structure in which a plurality of laminates is laminated; and
an exterior material covering at least a part of a surface of the laminated structure, wherein
the laminate comprises:
a base material;
an intermediate layer provided on the base material and having a housing portion;
a recording member provided in the housing portion; and
an overlay layer provided on the intermediate layer,
the housing portion is provided in a part of a plane of the intermediate layer,
the housing portion is a through hole penetrating the intermediate layer in a thickness direction thereof or a recess recessed in the thickness direction of the intermediate layer,
the recording member comprises a color development layer comprising a coloring compound having an electron donating property, a developer having an electron accepting property, and a matrix resin,
the base material, the intermediate layer, and the overlay layer comprise the same type of resin material, and
the base material and the intermediate layer are bonded to each other by fusion, and the intermediate layer and the overlay layer are bonded to each other by fusion.

19. A recording body comprising:
a laminated structure in which a plurality of laminates is laminated; and
an exterior material covering at least a part of a surface of the laminated structure, wherein
the laminate comprises:
a base material;
an overlay layer;
an intermediate layer provided between the base material and the overlay layer and having a housing portion; and
a recording member provided in the housing portion,
the housing portion is provided in a part of a plane of the intermediate layer,
the housing portion is a through hole penetrating the intermediate layer in a thickness direction thereof or a recess recessed in the thickness direction of the intermediate layer,
the recording member comprises a color development layer comprising a coloring compound having an electron donating property, a developer having an electron accepting property, and a matrix resin,
the base material, the intermediate layer, and the overlay layer comprise the same type of resin material, and
the base material and the intermediate layer are bonded to each other by a heat-curable adhesive, and the intermediate layer and the overlay layer are bonded to each other by a heat-curable adhesive.

20. The recording body according to claim 18, wherein
the plurality of laminates comprises:
at least one first laminate comprising the recording member that is rewritable; and
at least one second laminate comprising the recording member that is a write once.
